(19) Europäisches Patentamt
European Patent Office
Office européen des brevets

(11) EP 2 300 559 B1

(12) **EUROPÄISCHE PATENTSCHRIFT**

(45) Veröffentlichungstag und Bekanntmachung des Hinweises auf die Patenterteilung:
**14.08.2013 Patentblatt 2013/33**

(21) Anmeldenummer: **09765867.8**

(22) Anmeldetag: **17.06.2009**

(51) Int Cl.:
***C09K 19/38*** *(2006.01)* ***C09K 19/42*** *(2006.01)*
***C09K 19/58*** *(2006.01)*

(86) Internationale Anmeldenummer:
**PCT/EP2009/057533**

(87) Internationale Veröffentlichungsnummer:
**WO 2009/153287 (23.12.2009 Gazette 2009/52)**

# (54) WÄRMEISOLIERENDE FOLIEN UND LAMINATE

THERMALLY INSULATING FILMS AND LAMINATES

FILMS ET STRATIFIÉS THERMO-ISOLANTS

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **17.06.2008 EP 08158398**

(43) Veröffentlichungstag der Anmeldung:
**30.03.2011 Patentblatt 2011/13**

(73) Patentinhaber: **BASF SE**
**67056 Ludwigshafen (DE)**

(72) Erfinder:
- **BRILL, Jochen**
**67346 Speyer (DE)**
- **MUSIOL, Thomas**
**67133 Maxdorf (DE)**
- **SCHALKOWSKY, Ulrich**
**67346 Speyer (DE)**
- **ENGER, Olivier**
**67067 Ludwigshafen (DE)**
- **ZIEGLER, Bernd**
**67161 Gönnheim (DE)**

(56) Entgegenhaltungen:
**EP-A- 1 627 905**
**WO-A-95/21901**
**WO-A-96/17901**
**WO-A-03/093216**
**WO-A-2006/128091**
**WO-A-2008/012292**
**DE-A1- 19 602 848**
**US-A- 4 293 435**
**US-A- 4 637 896**
**US-A1- 2003 219 548**
**US-A1- 2005 206 818**
**US-A1- 2008 113 115**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft Wärmestrahlung abschirmende Folien und Laminate auf Basis von IR-reflektierenden flüssigkristallinen Schichten, ein Verfahren zu ihrer Herstellung, sie enthaltende Pigmente sowie eine Zusammensetzung, die einen bestimmten chiralen Dotierstoff enthält.

Das Problem der Abschirmung von Wärmestrahlung stellt sich insbesondere bei der Isolation von Wohn-, Büro- oder Industriebauten. Gebäude mit großzügigen Fensterflächen heizen sich insbesondere im Sommer und vor allem in südlichen Regionen schnell soweit auf, dass sie mit erheblichem Energieaufwand durch Klimaanlagen gekühlt werden müssen. Analoges gilt auch für Transportmittel, wie PKW, LKW, Busse, Züge, Flugzeuge und dergleichen.

Gängige Verfahren zur Wärmeisolation (speziell zur Minimierung der Aufheizung), insbesondere zur Abschirmung von Wärmestrahlung im Wellenlängenbereich zwischen 800 nm und 2000 nm basieren auf der Absorption der Strahlung durch entsprechende Farbstoffe oder Pigmente. Die aufgenommene Energie wird jedoch durch Wärmeleitung (Wärmedissipation) zum großen Teil an den zu isolierenden Gegenstand oder Raum abgegeben.

Insbesondere bei Verglasungen ist es bekannt, Materialien einzusetzen, die Wärmestrahlung weitgehend reflektieren. Hierfür werden als breitbandige Absorber oder Reflektoren vielfach spezielle Farbstoffe oder Pigmente, aber auch Graphit oder Gold verwendet.

Als Farbstoffe kommen hierbei beispielsweise breitbandig im Infraroten (IR) absorbierende Naphthalocyanine oder auch verlackte Polymethinfarbstoffe zum Einsatz. Nachteilig ist, dass die absorbierte Strahlungsenergie in thermische Energie umgewandelt wird, die über Wärmeleitung dissipiert.

Graphit, Gold, Silber oder Indium-Zinn-Oxid(ITO), die auch als Absorber bzw. Reflektoren für IR-Strahlung eingesetzt werden, weisen vergleichbare Nachteile auf. Hier ist, insbesondere im sichtbaren Bereich des Spektrums, eine mitunter deutliche Eigenfarbe gegeben. Nur durch sehr präzise und daher aufwendige Herstellung extrem dünner Schichten wird eine hinreichend gleichmäßige hohe Transmission im sichtbaren Wellenlängenbereich gewährleistet. Solche Metallschichten werden in der Regel durch Aufdampfverfahren wie Chemical Vapor Deposition oder Physical Vapor Deposition aufgetragen, die sehr aufwendig sind. Ein weiterer Nachteil ist, dass solche Schichten oft über einen sehr breiten Bereich des elektromagnetischen Spektrums reflektieren, beispielsweise auch im Mikrowellen- und/oder Radiowellenbereich, was für viele Anwendungen, die in diesen Bereichen eine gute Transmission verlangen, nicht hinnehmbar ist.

Es ist ebenfalls bekannt, dass auch cholesterische flüssigkristalline Substanzen im IR-Bereich des elektromagnetischen Spektrums Licht reflektieren können. Cholesterische (chiral nematische) Flüssigkristalle sind bereits seit langem bekannt. Das erste Beispiel eines solchen Materials wurde von dem österreichischen Botaniker F. Reinitzer gefunden (Monatshefte Chemie, 9 (1888), 421). Die Voraussetzung für das Auftreten cholesterischer Phasen ist die Chiralität. Der chirale Molekülteil kann sowohl im flüssigkristallinen Molekül selbst vorgegeben sein, als auch als Dotierstoff zur nematischen Phase gegeben werden, wodurch die chiral nematische Phase induziert wird. Die chiral nematische Phase hat besondere optische Eigenschaften: eine hohe optische Rotation sowie einen ausgeprägten Circulardichroismus, der durch Selektivreflexion von circular polarisiertem Licht innerhalb der chiral nematischen Schicht entsteht. Dies hat zur Folge, dass maximal 50 % des mit der Reflexionswellenlänge eingestrahlten Lichtes reflektiert werden. Der Rest geht ohne Wechselwirkung mit dem Medium hindurch. Der Drehsinn des reflektierten Lichtes wird dabei durch den Drehsinn der Helix bestimmt: Eine Rechtshelix reflektiert rechtszirkular polarisiertes Licht, eine Linkshelix linkszirkular polarisiertes Licht. Durch Änderung der Konzentration eines chiralen Dotierstoffs kann die Ganghöhe und damit der Wellenlängenbereich selektiv reflektierten Lichtes einer chiral nematischen Schicht variiert werden. Hierbei besteht zwischen der reziproken beobachteten Ganghöhe p (englisch "pitch") und der Konzentration der chiralen Verbindung ($x_{ch}$) eine direkte Beziehung:

$$1/p = HTP\ x_{ch}$$

HTP steht für Helical Twisting Power und gibt das (je nach Verbindung unterschiedliche) Verdrillungsvermögen des chiralen Dotierstoffes an.

Aus der US 4,637,896 sind cholesterische flüssigkristalline Verbindungen auf der Basis von Cholesterin-Derivaten sowie photopolymerisierte cholesterische Beschichtungen, die diese einpolymerisiert enthalten, bekannt. Die beschriebenen cholesterischen Filme weisen mehrheitlich Reflexionsmaxima im sichtbaren Wellenlängenbereich auf. Es werden jedoch auch zwei Beispiele für farblose Filme angegeben, deren Reflexionsmaxima bei 950 bzw. 1260 nm liegen. Der engen Reflexionsbreite wegen sind diese Filme aber nicht als Wärmeisolationsbeschichtung geeignet.

Aus der US 5,629,055 sind feste cholesterische Filme auf Cellulose-Basis bekannt. Die Filme sind aus Kolloid-Suspensionen von Cellulosekristalliten erhältlich, wobei die Kolloid-Suspensionen durch saure Hydrolyse kristalliner Cellulose hergestellt werden. Die festen Filme haben cholesterische Eigenschaften und ihre Reflexionswellenlänge soll

über den gesamten Spektralbereich von Infrarot bis Ultraviolett einstellbar sein. Die beschriebenen Materialien werden insbesondere als optische Authentifizierungsmittel vorgeschlagen, da Druck- oder Fotokopiertechniken den cholesterischen Effekt nicht reproduzieren können.

Die WO 2006/128091 beschreibt mehrschichtige Laminate, die neben wenigstens einer Polymerfolie mit einem bestimmten Elastizitätsmodul auch eine oder mehrere Schichten aus verdrillten nematischen Flüssigkristallen enthalten. Diese sollen Strahlung im IR-Wellenlängenbereich reflektieren, wodurch das Laminat wärmeisolierend wirkt.

Die wärmeisolierende Wirkung ist jedoch noch nicht zufriedenstellend.

Die WO 2008/012292 betrifft flüssigkristalline Gemische, die wenigstens eine härtbare Komponente A, die im UV- und/oder sichtbaren Wellenlängenbereich reflektiert, und wenigstens eine Strahlung absorbierende, ggf. fluoreszierende konjugierte polycyclische Verbindung B umfassen, daraus erhaltene Polymerisate und polymere Filme, daraus hergestellte Pigmente, Beschichtungsmittel, die solche flüssigkristallinen Gemische enthalten, und damit beschichtete Substrate.

US 4,293,435 betrifft flüssigkristalline Polymere aus einer nematischen Verbindung und einer chiralen Verbindung. Die konkret beschriebenen Verbindungen unterscheiden sich jedoch strukturell von den erfindungsgemäß eingesetzten nematischen und chiralen Verbindungen.

US 2003/0219548 betrifft die Verwendung polymerisierbarer flüssigkristalliner Verbindungen zur Herstellung von optischen Elementen mit einer farb- und polarisationssensitiven Reflexion und optische Elemente, die diese Verbindungen in monomerer oder polymerisierter Form enthalten. Eine Aussage über eine Reflexion im IR-Bereich wird nicht getroffen.

WO 03/093216 betrifft flüssigkristalline Alkinverbindungen und ihre Verwendung zur Herstellung von optischen Bauteilen, zum Bedrucken oder Beschichten von Substraten und zur Herstellung von Dispersionen, Emulsionen, Folien und Pigmenten.

WO 96/17901 beschreibt ein flüssigkristallines Material in Form eines cholesterischen Polymernetzwerks, erhältlich durch Copolymerisation einer nematischen und einer chiralen terpinoiden Verbindung.

EP-A-1627905 betrifft flüssigkristalline Di(meth)acrylate und daraus hergestellte Filme. Bei diesen Verbindungen handelt es sich um Nematen; diese werden nicht im Gemisch mit chiralen Verbindungen eingesetzt.

US 2008/0113115 betrifft optische Elemente, die polymerisierbare flüssigkristalline Monomere enthalten. Eine Reflexion im IR-Bereich wird nicht erwähnt. Außerdem handelt es sich bei den flüssigkristallinen Monomeren um Nematen; diese werden nicht im Gemisch mit chiralen Verbindungen eingesetzt.

US 2005/0206818 betrifft optische Elemente mit Doppelbrechungseigenschaften. Eine Reflexion im IR-Bereich wird nicht erwähnt. Außerdem unterscheiden sich die konkret beschriebenen Verbindungen strukturell von den erfindungsgemäß eingesetzten nematischen und chiralen Verbindungen.

Aufgabe der vorliegenden Erfindung war es, leicht herzustellende wärmeisolierende Folien und Laminate bereitzustellen, die elektromagnetische Strahlung mit einer Wellenlänge im Infrarot (IR-Strahlung), insbesondere IR-Strahlung in einem Wellenlängenbereich von 751 bis etwa 2000 nm, reflektieren und die, falls gewünscht, gleichzeitig im sichtbaren Bereich des elektromagnetischen Spektrums nahezu vollständig transparent sind. Außerdem sollten wärmeisolierenden Folien und Laminate gewünschtenfalls bestimmte Wellenlängen oder Wellenlängenbereiche in anderen Bereichen des elektromagnetischen Spektrums gezielt transmittieren oder reflektieren können.

Die Aufgabe wird gelöst durch eine wärmeisolierende Folie, die im Wellenlängenbereich von 751 bis 2000 nm mindestens 40 %, vorzugsweise wenigstens 45 % der auftreffenden Strahlung reflektiert, umfassend

(a) wenigstens eine flüssigkristalline Schicht in gehärteter Form, die im Wellenlängenbereich des Infrarot reflektiert und die erhältlich ist durch Härtung

(a.1) einer Zusammensetzung enthaltend wenigstens ein achirales nematisches polymerisierbares Monomer und wenigstens ein chirales polymerisierbares Monomer;
wobei das wenigstens eine achirale nematische polymerisierbare Monomer wenigstens ein difunktioneil polymerisierbares achirales nematisches Monomer enthält, das ausgewählt ist unter Verbindungen der Formeln I.a, I.b und Gemischen davon:

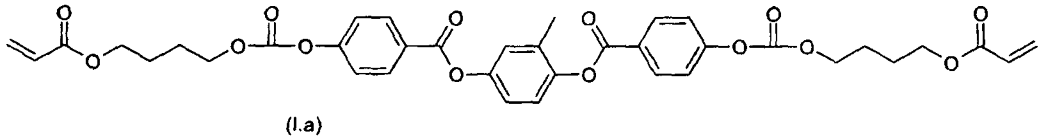

(I.a)

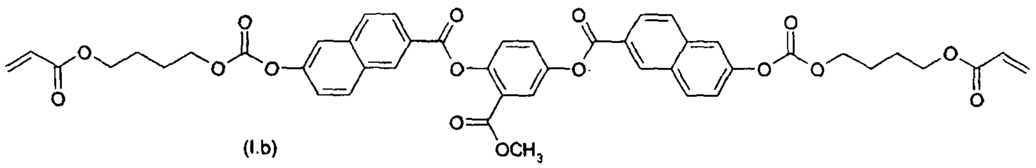

(I.b)

und das wenigstens eine chirale polymerisierbare Monomer ausgewählt ist unter Verbindungen der Formeln IV.a, IV.b, IV.c und Gemischen davon:

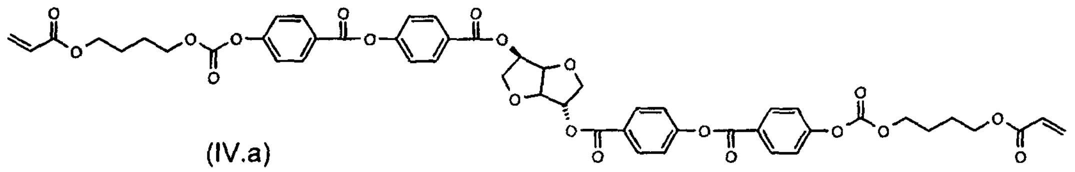

(IV.a)

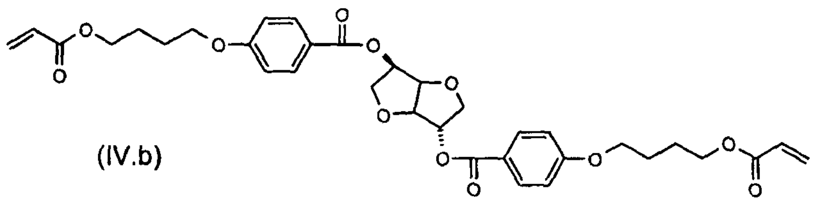

(IV.b)

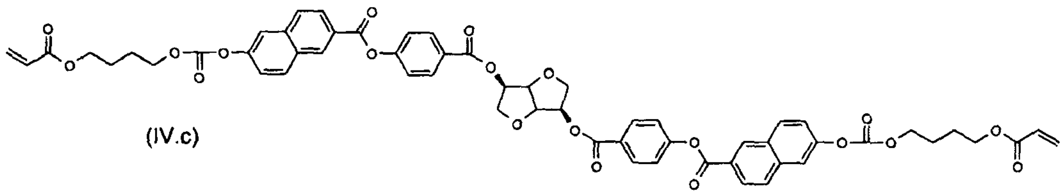

(IV.c)

(b) optional wenigstens eine Trägerfolie;
(c) optional wenigstens eine Orientierungsschicht, die mit wenigstens einer flüssigkristallinen Schicht in Kontakt steht;
(d) optional wenigstens eine $\lambda/2$-Folie;
(e) optional wenigstens eine Klebeschicht, Schutzschicht und/oder Releaseschicht.

Die nachfolgenden Ausführungen zu bevorzugten Merkmalen der erfindungsgemäßen Folie, insbesondere der Komponenten a, b, c, d und e und auch weiterer optionaler Komponenten, der erfindungsgemäßen Laminate, des erfindungsgemäßen Verfahrens und der erfindungsgemäßen Pigmente gelten sowohl allein für sich genommen als auch insbesondere in Kombination miteinander.

Der Begriff "wärmeisolierend" bezeichnet im Rahmen der vorliegenden Erfindung insbesondere Abschirmung von Wärmestrahlung.

Der Begriff "flüssigkristallin" wird im Rahmen der vorliegenden Erfindung im Wesentlichen synonym mit "cholesterisch" verwendet, wenn aus dem jeweiligen Zusammenhang nicht etwas anderes hervorgeht.

Unter einer Folie wird im Rahmen der vorliegenden Erfindung ein selbsttragendes, flächiges Gebilde, d.h. ein Gebilde, dessen Dicke maximal 5 mm, bevorzugt maximal 3 mm, besonders bevorzugt maximal 1,5 mm und insbesondere maximal 1 mm beträgt, dessen Dicke außerdem im Verhältnis zu Länge und Breite vernachlässigbar klein ist, z.B. um einen Faktor von wenigstens 20 oder wenigstens 50 oder wenigstens 100 oder wenigstens 500 kleiner als die nächstgroße Dimension, und das gleichzeitig noch flexibel ist. Die Flexibilität ist dabei so groß, dass die Folie ohne zu brechen aufgerollt werden kann.

Als Wellenlängenbereich (Spektralbereich) des Infrarot (IR-Strahlung) versteht man allgemein den Spektralbereich der elektromagnetischen Strahlung mit einer Wellenlänge von > 750 nm (z. B. 751 nm) bis etwa 1 mm.

Die erfindungsgemäße Folie reflektiert im Wellenlängenbereich des nahen Infrarot (NIR), d.h. im Spektralbereich mit einer Wellenlänge von > 750 nm (z. B. 751 nm) bis etwa 2000 nm. Die Reflexion in der Nähe des sichtbaren Spektrums führt häufig zu einer Rotstichigkeit des Films, die bei manchen Anwendungen nicht erwünscht ist. Besonders bevorzugt reflektiert daher die erfindungsgemäße Folie in einem Wellenlängenbereich von 850 bis 2000 nm, stärker

bevorzugt von 900 bis 2000 nm und insbesondere von 950 bis 2000 nm. Die Reflexion erfolgt in diesem Bereich vorzugsweise nicht in Form eines scharfen Peaks, sondern in Form einer möglichst breiten Reflexionsbande. Bevorzugt besitzt die Folie dabei zwei oder mehrere Reflexionsbanden, z.B. 2, 3 oder 4 Reflexionsbanden, von denen sich vorzugsweise wenigstens zwei, z.B. 2, 3 oder 4, mit der/den Nachbarbanden teilweise überlagern. Durch die teilweise Überlagerung wird im Wellenlängenbereich der Reflexionsbanden ein hoher Reflexionsgrad erreicht.

Vorzugsweise reflektiert die erfindungsgemäße Folie im Wellenlängenbereich von 751 bis 2000 nm wenigstens 45 % der auftreffenden Strahlung.

Gleichzeitig weist die erfindungsgemäße Folie im sichtbaren Wellenlängenbereich, d.h. von etwa 350 bis 750 nm, eine Transmission von vorzugsweise mindestens 80 %, besonders bevorzugt wenigstens 95 % der auftreffenden Strahlung auf.

Die Folie kann aber gewünschtenfalls für bestimmte Anwendungen auch so gestaltet werden, dass die Transmission im sichtbaren Wellenlängenbereich geringer ist. So betrifft eine bevorzugte Ausführungsform der Erfindung eine Folie, die, wie zuvor beschrieben, IR-Strahlung reflektiert und außerdem elektromagnetische Strahlung im sichtbaren Wellenlängenbereich (d.h. von etwa 350 bis 750 nm), vorzugsweise im Bereich von 550 bis 750 nm, speziell von 600 bis 700 nm, reflektiert. Genauer gesagt besitzt die erfindungsgemäße Folie in dieser bevorzugten Ausführungsform ein oder mehrere, z.B. 1, 2 oder 3, vorzugsweise 1, Reflexionsbande(n) mit einem Maximum im sichtbaren Wellenlängenbereich, vorzugsweise im Bereich von 550 bis 750 nm und speziell im Bereich von 600 bis 700 nm.

In diesem Fall betrifft die Erfindung vorzugsweise eine wärmeisolierende Folie, umfassend

(a) wenigstens eine flüssigkristalline Schicht in gehärteter Form, die im Wellenlängenbereich des Infrarot reflektiert und die erhältlich ist durch Härtung

(a.1) einer Zusammensetzung enthaltend wenigstens ein achirales nematisches polymerisierbares Monomer und wenigstens ein chirales polymerisierbares Monomer; wobei das wenigstens eine achirale nematische polymerisierbare Monomer wenigstens ein difunktionell polymerisierbares achirales nematisches Monomer enthält, das ausgewählt ist unter Verbindungen der Formeln I.a, I.b und Gemischen davon:

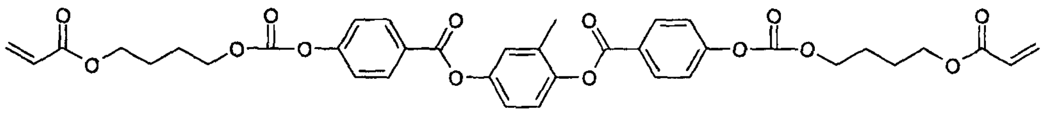

(I.a)

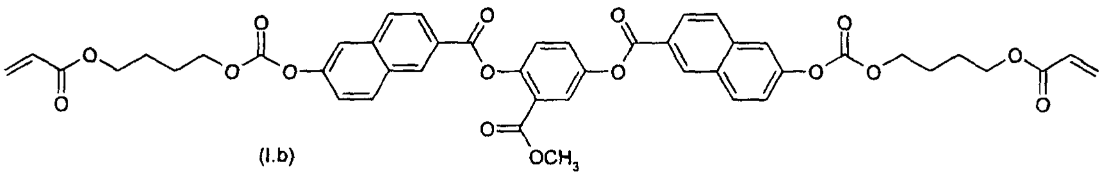

(I.b)

und

das wenigstens eine chirale polymerisierbare Monomer ausgewählt ist unter Verbindungen der Formeln IV.a, IV.b, IV.c und Gemischen davon:

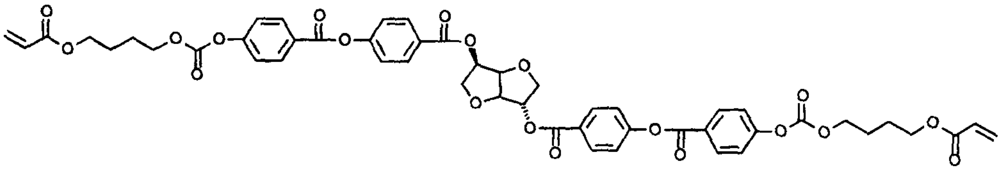

(IV.a)

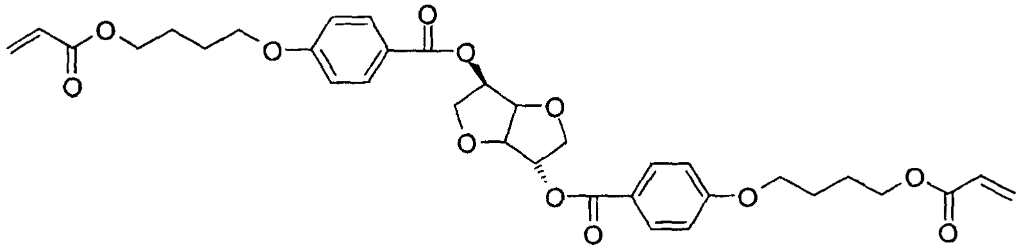

(IV.b)

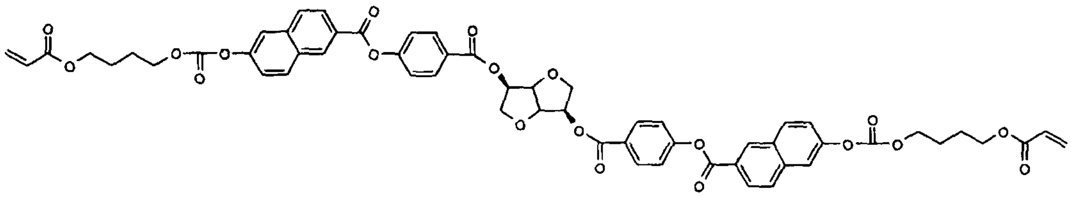

(IV.c);

(b) optional wenigstens eine Trägerfolie;
(c) optional wenigstens eine Orientierungsschicht, die mit wenigstens einer flüssigkristallinen Schicht in Kontakt steht;
(d) optional wenigstens eine λ/2-Folie;
(e) optional wenigstens eine Klebeschicht, Schutzschicht und/oder Releaseschicht;
(f) wenigstens eine flüssigkristalline Schicht in gehärteter Form, die im Wellenlängenbereich von 350 bis 750 nm, vorzugsweise im Bereich von 550 bis 750 nm, speziell von 600 bis 700 nm, reflektiert und die erhältlich ist durch Härtung

(f.1) einer Zusammensetzung enthaltend wenigstens ein achirales nematisches polymerisierbares Monomer und wenigstens ein chirales polymerisierbares Monomer;
wobei das wenigstens eine achirale nematische polymerisierbare Monomer wenigstens ein difunktionell polymerisierbares achirales nematisches Monomer enthält, das ausgewählt ist unter Verbindungen der Formeln I.a, I.b und Gemischen davon:

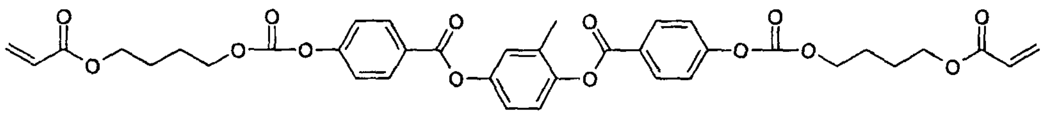

(I.a)

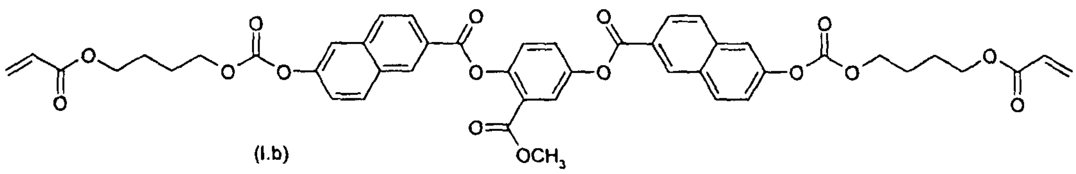

(I.b)

und
das wenigstens eine chirale polymerisierbare Monomer ausgewählt ist unter Verbindungen der Formeln IV.a, IV.b, IV.c und Gemischen davon:

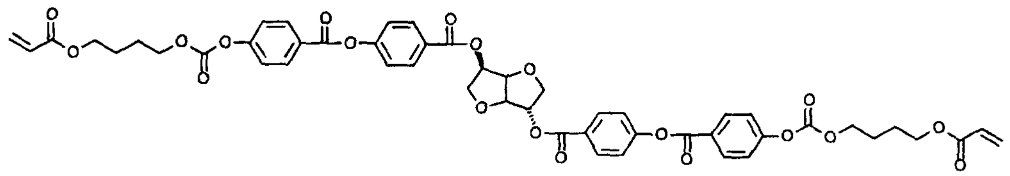

(IV.a)

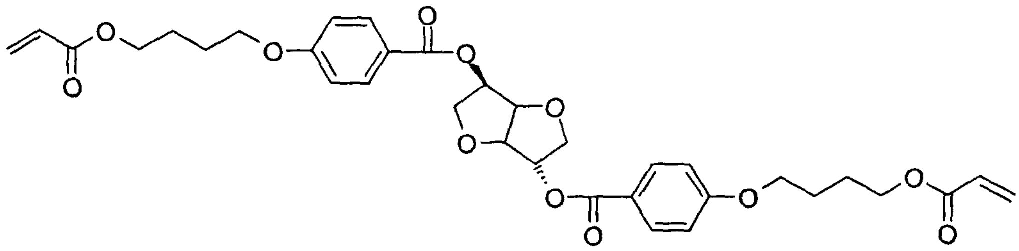

(IV.b)

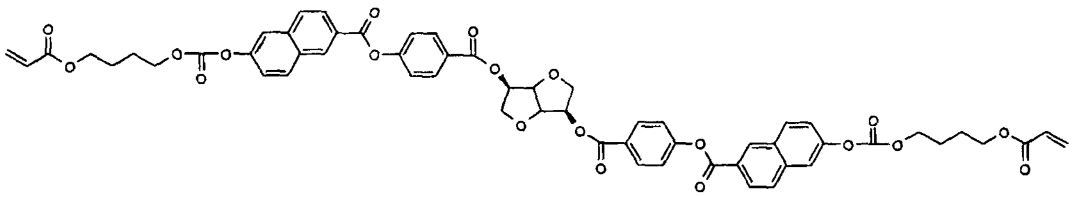

(IV.c).

Die erfindungsgemäße Folie ist in einer bevorzugten Ausführungsform alternativ oder zusätzlich außerdem auch so gestaltet, dass sie im gesamten Radiowellenbereich oder in bestimmten Wellenlängenbereichen für Radiowellen eine Transmission von vorzugsweise mindestens 80 %, besonders bevorzugt wenigstens 95 % der auftreffenden Strahlung aufweist. Hierzu ist die erfindungsgemäße Folie in dieser Ausführungsform im Wesentlichen metallfrei, d.h. sie enthält höchstens 0,5 Gew.-%, bevorzugt höchstens 0,1 Gew.-% und insbesondere höchstens 0,05 Gew.-%, bezogen auf das Gesamtgewicht der Folie, an metallischen Bestandteilen, welche die Transmission von Radiowellen stören können. Eine möglichst vollständige Transmission von Radiowellen ist beispielsweise wichtig, um Radio- und Funkwellen, z.B. für Handy oder W-LAN senden und empfangen zu können. Weiterhin ist eine hohe Durchlässigkeit von Radiowellen beispielsweise für Regensensoren in Autos oder Gebäuden wichtig, die das An- und Ausgehen und die Wischstärke der Scheibenwischer von Autos sowie das Schließen und Öffnen von Gebäudefenstern in Abhängigkeit von der Wetterlage auslösen und steuern.

Ebenso ist die erfindungsgemäße Folie in einer bevorzugten Ausführungsform außerdem auch so gestaltet, dass sie im gesamten Mikrowellenbereich oder in bestimmten Wellenlängenbereichen für Mikrowellen eine Transmission von vorzugsweise mindestens 80 %, besonders bevorzugt wenigstens 95 % der auftreffenden Strahlung aufweist.

Im Rahmen der vorliegenden Erfindung wird unter Vernetzung die kovalente Verknüpfung polymerer Verbindungen und unter Polymerisation die kovalente Verknüpfung monomerer Verbindungen zu Polymeren verstanden. Unter Härtung wird Vernetzung, Polymerisation oder das Einfrieren der cholesterischen Phase verstanden. Durch Härtung wird die gleichmäßige Orientierung der cholesterischen Moleküle in der flüssigkristallinen Schicht fixiert.

Die achiralen nematischen difunktionell polymerisierbaren Monomere sind ausgewählt unter Verbindungen der folgenden Formeln I.a und I.b

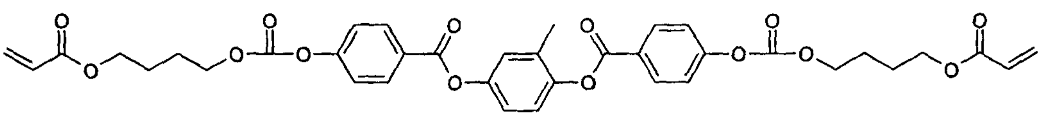

(I.a)

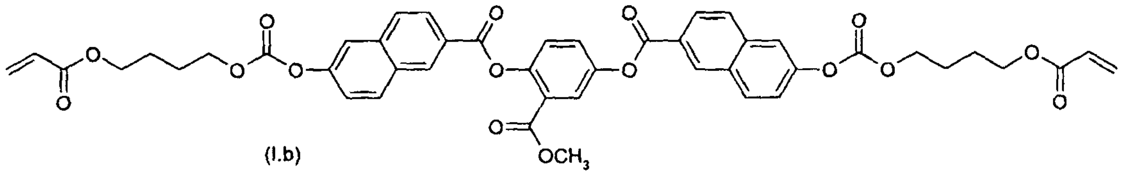

(I.b)

sowie Gemischen davon.

Die Zusammensetzung (a.1) kann jedoch auch ein monofunktionell polymerisierbares achirales nematisches Monomer enthalten. Dieses weist vorzugsweise die allgemeine Formel (IIIa) und/oder (IIIb) auf:

$$A^3\text{-}Y^2\text{-}M\text{-}Y^3\text{-}(A^2\text{-}Y^4)_w\text{-}Z^2 \quad \text{(IIIa)}$$

$$Z^1\text{-}(Y^1\text{-}A^1)_v\text{-}Y^2\text{-}M\text{-}Y^3\text{-}A^3 \quad \text{(IIIb)}$$

worin $Z^1$, $A^1$, $V^1$, $Y^2$, $Y^3$, $Y^4$, v, w und M unabhängig eine der für Formel (I) angegebene allgemeine oder bevorzugte Bedeutung besitzen; und

$A^3$ für eine lineare $C_1$-$C_{30}$-Alkylgruppe, vorzugsweise für eine lineare $C_1$-$C_{12}$-Alkylgruppe, die durch Sauerstoff, Schwefel und/oder gegebenenfalls einfach substituiertem Stickstoff unterbrochen sein kann, wobei diese unterbrechenden Gruppen nicht benachbart sein dürfen; wobei geeignete Aminsubstituenten $C_1$-$C_4$-Alkylgruppen umfassen, wobei die Alkylgruppe durch Fluor, Chlor, Brom, Cyano, Methyl oder Ethyl substituiert sein kann, oder für CN oder -N=C=S- steht.

$A^3$ steht vorzugsweise für lineares $C_2$-$C_8$-Alkyl oder CN und insbesondere für lineares $C_4$-$C_8$-Alkyl oder CN.

$Y^1$, $Y^2$, $Y^3$, $Y^4$ und $Y^5$ stehen unabhängig voneinander vorzugsweise für -O-CO-, -CO-O-, -O-CO-O- oder eine C-C-Dreifachbindung.

$Z^1$ steht vorzugsweise für eine C-C-Doppelbindung (bevorzugt $-CH=CH_2$ oder $-C(CH_3)=CH_2$).

M steht vorzugsweise für eine mesogene Gruppe der allgemeinen Formeln II. Bevorzugt stehen dabei $T^1$ und $T^2$ unabhängig voneinander für eine aromatische Gruppe, besonders bevorzugt für Phenyl oder Naphthyl, die 0, 1, 2, 3 oder 4 Reste $R^b$ tragen können, wobei $R^b$ eine der oben angegebenen allgemeinen oder bevorzugten Bedeutungen hat, insbesondere für 1,4-gebundenes Phenyl oder 2,6-gebundenes Naphthyl, die 0, 1, 2, 3 oder 4 Reste $R^b$ tragen können, wobei $R^b$ eine der oben angegebenen allgemeinen oder bevorzugten Bedeutungen hat, und insbesondere für nicht substituiertes 1,4-gebundenes Phenyl oder nicht substituiertes 2,6-gebundenes Naphthyl. y steht dabei vorzugsweise für 0 oder 1.

Besonders bevorzugte monofunktionell polymerisierbare achirale nematische Monomere sind ausgewählt unter folgenden Strukturen:

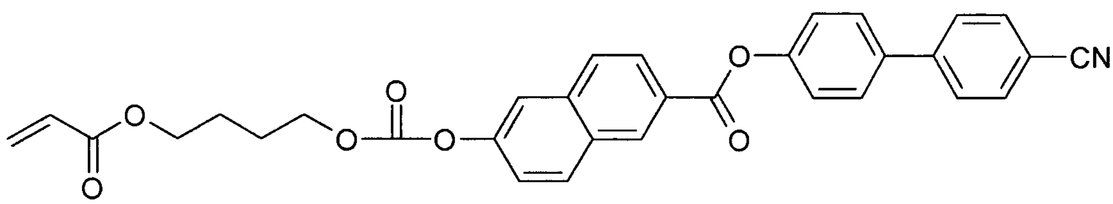

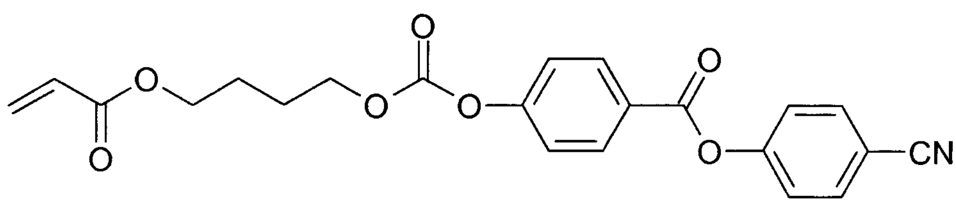

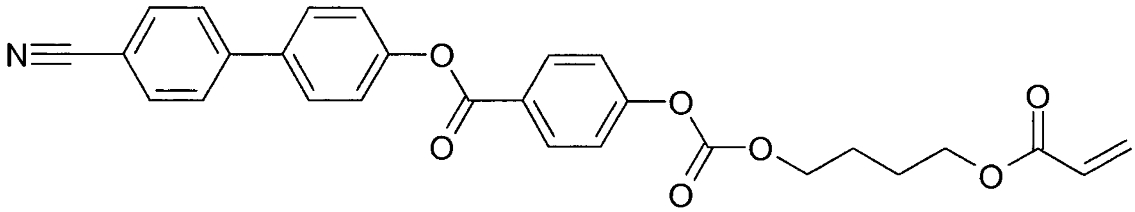

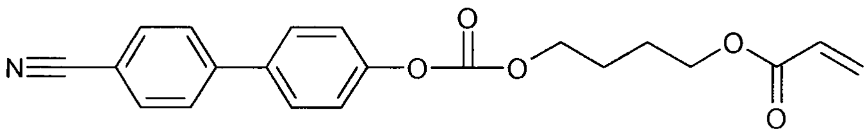

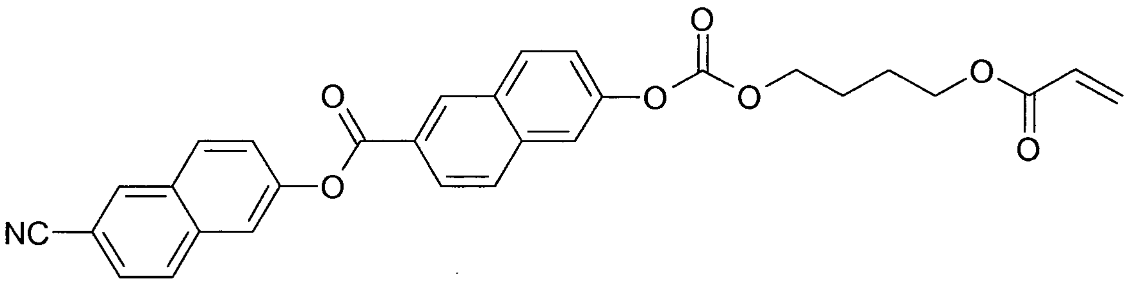

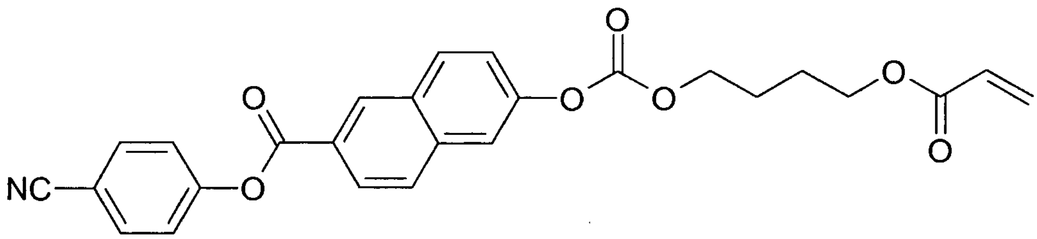

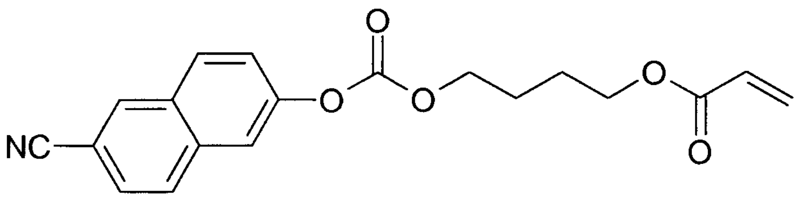

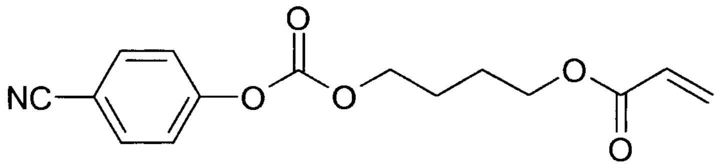

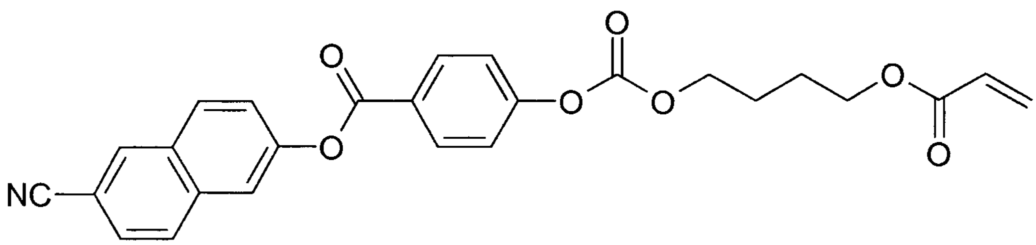

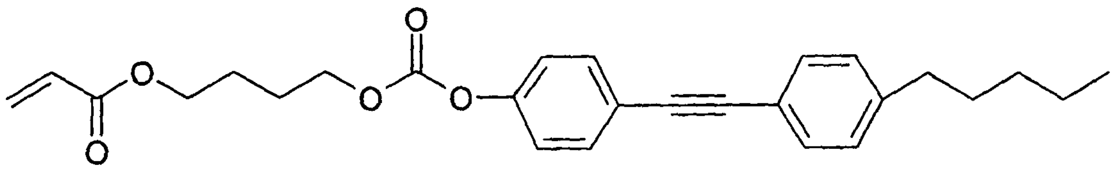

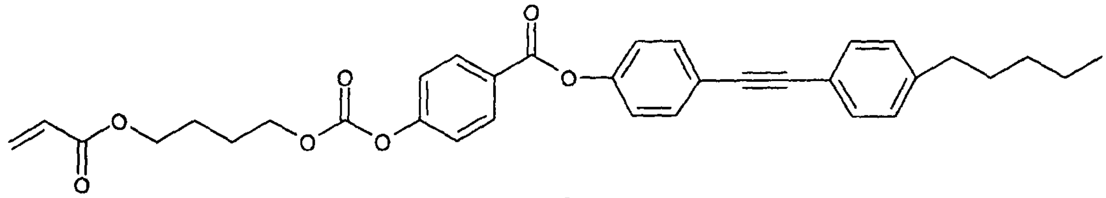

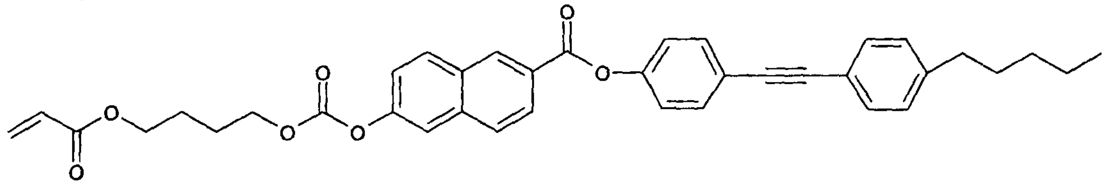

Das wenigstens eine achirale nematische polymerisierbare Monomer der Zusammensetzung (a.1) umfasst vorzugsweise

(i) wenigstens ein difunktionell polymerisierbares achirales nematisches Monomer vorzugsweise ein oder zwei difunktionell polymerisierbare achirale nematische Monomere die ausgewählt sind unter Verbindungen Ia, Ib und Gemischen davon; und
(ii) optional wenigstens ein monofunktionell polymerisierbares achirales nematisches Monomer der Formel (IIIa) und/oder (IIIb).

Wenn die Zusammensetzung (a.1) ein oder mehrere monofunktionell polymerisierbare Monomere enthält, so sind diese vorzugsweise in einer Gesamtmenge von höchstens 40 Gew.-%, besonders bevorzugt von höchstens 20 Gew.-%, stärker bevorzugt von höchstens 10 Gew.-% und insbesondere von höchstens 5 Gew.-%, bezogen auf das Gesamtgewicht von poly- und monofunktionell polymerisierbaren achiralen nematischen Monomeren, in der Zusammensetzung enthalten.

In einer speziellen Ausführungsform enthält die Zusammensetzung (a.1) keine monofunktionell polymerisierbaren achiralen nematischen Monomere, sondern nur wenigstens ein, vorzugsweise ein oder zwei, difunktionell polymerisierbare achirale nematische Monomere, die ausgewählt sind unter Verbindungen Ia, Ib und Gemischen davon.

Das chirale polymerisierbare Monomeristunter folgenden Strukturformeln ausgewählt

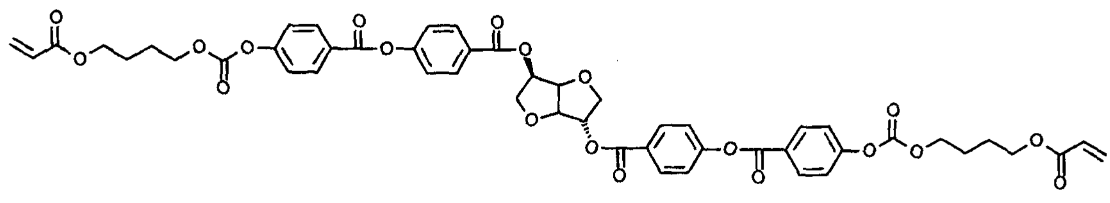

IV.a

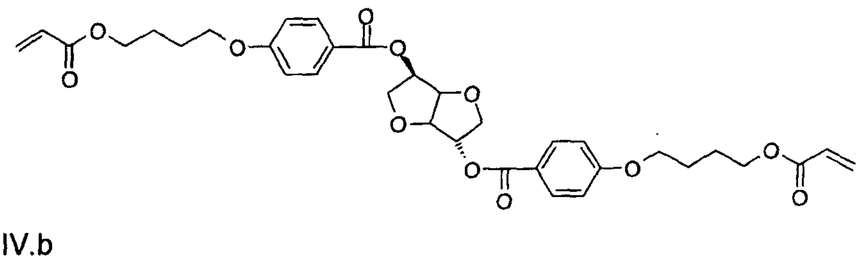

IV.b

IV.c

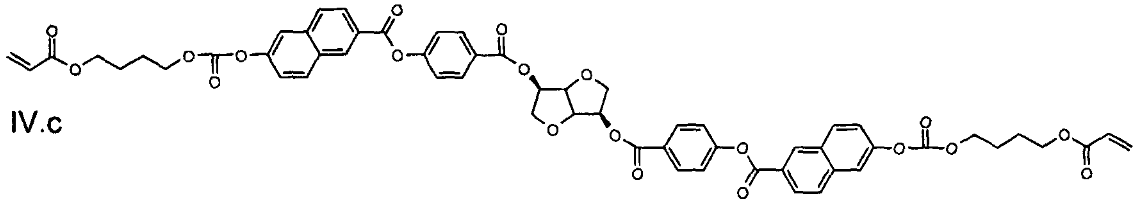

Bevorzugt sind hierunter die Verbindungen der Formeln IV.a und IV.c. Insbesondere ist die Verbindung der Formel IV.c bevorzugt.

Bevorzugt ist wenigstens eine flüssigkristalline Schicht (a) der erfindungsgemäßen Folie aus einer Zusammensetzung (a.1) aufgebaut, in der als chirale polymerisierbare Verbindung die Verbindung IV.c eingesetzt wird.

Das Mengenverhältnis von achiralem nematischem Monomer zu chiralem Monomer wird im erfindungsgemäßen Gemisch (a.1) so gewählt, dass das aus diesen Monomeren entstehende Polymerisat nach der Orientierung eine Ganghöhe der helikalen struktur aufweist, die einer Wellenlänge IR-Spektralbereich und vorzugsweise im Bereich von 751 bis 2000 nm entspricht. Dabei hängt das Mengenverhältnis von der Art der nematischen und chiralen Monomeren ab und muss von Einzelfall zu Einzelfall bestimmt werden.

Generell gilt aber, dass bei einem bestimmten nematischen Monomer und einem bestimmten chiralen Monomer mit zunehmender Konzentration der chiralen Komponente im Vergleich zur nematischen Komponente sich das Maximum der Reflexionsbande zu kürzeren Wellenlängen verschiebt.

Beispielsweise setzt man für die Herstellung von flüssigkristallinen, IR-reflektierenden Schichten (a), die im Wesentlichen keine Eigenfärbung haben, also im sichtbaren Wellenlängenbereich eine Transmission von wenigstens 80 %, vorzugsweise wenigstens 85 % aufweisen, aus Verbindungen I.b und IV.a die Verbindung IV.a in einer Menge von vorzugsweise höchstens 4,0 Gew.-%, z.B. 1,0 bis 4,0 Gew.-% oder 1,5 bis 4,0 Gew.-% oder 2,0 bis 4,0 Gew.-%, besonders bevorzugt höchstens 3,5 Gew.-%, z.B. 1,0 bis 3,5 Gew.-% oder 1,5 bis 3,5 Gew.-% oder 2,0 bis 3,5 Gew.-%, und insbesondere höchstens 3,3 Gew.-%, z.B. 1,0 bis 3,3 Gew.-% oder 1,5 bis 3,3 Gew.-% oder 2,0 bis 3,3 Gew.-%, bezogen auf das Gewicht der Verbindung I.b, ein. Bei der Kombination der Verbindungen I.a und IV.a setzt man zum selben Zweck die Verbindung IV.a in einer Menge von vorzugsweise höchstens 3,2 Gew.-%, z.B. 1,0 bis 3,2 Gew.-% oder 1,5 bis 3,2 Gew.-% oder 2,0 bis 3,2 Gew.-%, besonders bevorzugt höchstens 3,0 Gew.-%, z.B. 1,0 bis 3,0 Gew.-% oder 1,5 bis 3,0 Gew.-% oder 2,0 bis 3,0 Gew.-%, und insbesondere höchstens 2,9 Gew.-%, z.B. 1,0 bis 2,9 Gew.-% oder 1,5 bis 2,9 Gew.-% oder 2,0 bis 2,9 Gew.-%, bezogen auf das Gewicht der Verbindung I.a, ein. Bei der Kombination der Verbindungen I.b und IV.c setzt man zum selben Zweck die Verbindung IV.c in einer Menge von vorzugsweise höchstens 11 Gew.-%, z.B. 1,0 bis 11 Gew.-% oder 1,5 bis 11 Gew.-% oder 2,0 bis 11 Gew.-%, besonders bevorzugt höchstens 10,0 Gew.-%, z.B. 1,0 bis 10,0 Gew.-% oder 1,5 bis 10,0 Gew.-% oder 2,0 bis 10,0 Gew.-%, stärker bevorzugt höchstens 9,0 Gew.-%, z.B. 1,0 bis 9,0 Gew.-% oder 1,5 bis 9,0 Gew.-% oder 2,0 bis 9,0 Gew.-%, und insbesondere höchstens 8,5 Gew.-%, z.B. 1,0 bis 8,5 Gew.-% oder 1,5 bis 8,5 Gew.-% oder 2,0 bis 8,5 Gew.-%, bezogen auf das Gewicht der Verbindung I.b, ein. Bei der Kombination der Verbindungen I.a und IV.c setzt man zum selben Zweck die Verbindung IV.c in einer Menge von vorzugsweise höchstens 12 Gew.-%, z.B. 1,0 bis 12 Gew.-% oder 1,5 bis 12 Gew.-% oder 2,0 bis 12 Gew.-%, besonders bevorzugt höchstens 11,5 Gew.-%, z.B. 1,0 bis 11,5 Gew.-% oder 1,5 bis 11,5 Gew.-% oder 2,0 bis 11,5 Gew.-%, und insbesondere höchstens 11,0 Gew.-%, z.B. 1,0 bis 11,0 Gew.-% oder 1,5 bis 11,0 Gew.-% oder 2,0 bis 11,0 Gew.-%, bezogen auf das Gewicht der Verbindung I.a ein.

Für die Herstellung von flüssigkristallinen Schichten mit einer Reflexionsbande im sichtbaren Wellenlängenbereich setzt man entsprechend größeren Mengen an chiraler Verbindung ein (siehe auch untere Ausführungen zu Schicht (f)). So wird beispielsweise bei einer Kombination der Verbindungen I.b und IV.c die Verbindung IV.c in einer Menge von vorzugsweise >11 bis 15 Gew.-%, besonders bevorzugt 11,1 bis 14 Gew.-% und insbesondere 11,2 bis 13,5 Gew.-%, bezogen auf das Gewicht der Verbindung I.b, eingesetzt.

Erfindungsgemäβ handelt es sich bei der Schicht (a) um die Zusammensetzung (a.1) in gehärteter Form. Bezüglich bevorzugter Ausgestaltungen der Zusammensetzung (a.1) wird auf das oben Gesagte verwiesen. Bevorzugt enthält die Zusammensetzung (a.1) das nematische polymerisierbare Monomer in einer Menge von 80 bis 99,5 Gew.-% und das chirale polymerisierbare Monomer in einer Menge von 0,5 bis 20 Gew.-%, jeweils bezogen auf das Gesamtgewicht der Zusammensetzung (a.1). Der Anteil an chiral-nematischem Monomer bestimmt dabei, in welchem Spektralbereich die Zusammensetzung (a.1) nach Härtung und Orientierung reflektiert. Der gewünschte Reflexionsbereich kann in Abhängigkeit von den einzelnen nematischen und chiralen Komponenten und ihrer jeweiligen Konzentration mit Hilfe einfacher Vorversuche eingestellt werden. Besonders bevorzugt enthält die Zusammensetzung (a.1) das nematische polymerisierbare Monomer in einer Menge von 85 bis 99,5 Gew.-%, besonders bevorzugt von 85 bis 99 Gew.-% und insbesondere von 90 bis 98 Gew.-% und das chirale polymerisierbare Monomer in einer Menge von 0,5 bis 15 Gew.-%, besonders bevorzugt von 1 bis 15 Gew.-% und insbesondere von 2 bis 10 Gew.-%, jeweils bezogen auf das Gesamtgewicht der nematischen polymerisierbaren Monomere und der chiralen polymerisierbaren Monomere in der

Zusammensetzung (a.1). Bezüglich geeigneter und bevorzugter Mengenverhältnisse bei bevorzugt eingesetzten Monomeren wird auf die vorhergehenden Ausführungen verwiesen.

Gewünschtenfalls können die Zusammensetzungen (a.1) neben den bereits genannten Komponenten, die für das Reflexionsverhalten verantwortlich sind, weitere Mischungsbestandteile enthalten, die vorzugsweise ausgewählt sind unter

- wenigstens einer Komponente C, die ihrerseits ausgewählt ist unter

  (C.1) Photoinitiatoren;
  (C.2) Reaktivverdünnern, welche photopolymerisierbare Gruppen enthalten;
  (C.3) Verdünnungsmitteln;
  (C.4) Entschäumern und Entlüftern;
  (C.5) Gleit- und Verlaufsmitteln;
  (C.6) thermisch härtenden und/oder strahlenhärtenden Hilfsmitteln;
  (C.7) Substratnetzhilfsmitteln;
  (C.8) Netz- und Dispergierhilfsmitteln;
  (C.9) Hydrophobierungsmitteln;
  (C.10) Haftvermittlern; und
  (C.11) Hilfsmitteln zur Verbesserung der Kratzfestigkeit;

- wenigstens einer Komponente D, die ihrerseits ausgewählt ist unter

  (D.1) Farbstoffen; und
  (D.2) Pigmenten;

- wenigstens einer Komponente E, die ihrerseits ausgewählt ist unter Licht-, Hitze- und Oxidationsstabilisatoren; und

- wenigstens einer Komponente F, die ihrerseits ausgewählt ist unter IRabsorbierenden Verbindungen.

Wenn die Zusammensetzungen (a.1) photochemisch polymerisiert werden sollen, können sie handelsübliche Photoinitiatoren enthalten. Für eine Härtung durch Elektronenstrahlen sind solche nicht notwendig. Geeignete Photoinitiatoren sind beispielsweise Isobutylbenzoinether, 2,4,6-Trimethylbenzoyidiphenylphosphinoxid, 1-Hydroxycyclohexylphenylketon, 2-Benzyl-2-dimethylamino-1-(4-morpholinophenyl)-furan-1-on, Mischungen von Benzophenon und 1-Hydroxycyclohexyl-phenylketon, 2,2-Dimethoxy-2-phenylacetophenon, perfluorierte Diphenyltitanocene, 2-Methyl-1-(4-[methylthio]phenyl)-2-(4-morpholinyl)-1-propanon, 2-Hydroxy-2-methyl-1-phenylpropan-1-on, 4-(2-Hydroxyethoxy)phenyl-2-hydroxy-2-propylketon, 2,2-Diethoxyacetophenon, 4-Benzoyl-4'-methyldiphenyl-sulfid, Ethyl-4-(dimethylamino)benzoat, Mischungen von 2-Isopropylthioxanthon und 4-Isopropylthioxanthon, 2-(Dimethylamino)ethylbenzoat, d,l-Campherchinon, Ethyl-d,l-campherchinon, Mischungen von Benzophenon und 4-Methylbenzophenon, Benzophenon, 4,4'-Bisdimethylamin-benzophenon, ($\eta^5$-Cyclopentadienyl) ($\eta^6$-isopropylphenyl)-eisen(II)-hexafluorophosphat, Triphenylsulfonium-hexafluorophosphat oder Mischungen von Triphenylsulfoniumsalzen, sowie Butandioldiacrylat, Dipropylenglykoldiacrylat, Hexandioldiacrylat, 4-(1,1-Dimethylethyl)cyclohexylacrylat, Trimethylolpropantriacrylat und Tripropylenglykoldiacrylat.

Geeignete handelsübliche Photoinitiatoren (C.1) sind beispielsweise solche, die unter den Markennamen Lucirin®, Irgacure® und Darocure® kommerziell erhältlich sind. Bevorzugt werden die Initiatoren Lucirin® TPO, Lucirin® TPO-L, Irgacure® Oxe 01, Irgacure® Oxe 02, Irgacure® 1300, Irgacure® 184, Irgacure® 369, Irgacure® 907 oder Darocure® 1173 und besonders bevorzugt die Initiatoren Lucirin® TPO, Lucirin® TPO-L, Irgacure® Oxe 01, Irgacure® Oxe 02, Irgacure® 1300 oder Irgacure® 907 verwendet.

Die Photoinitiatoren werden üblicherweise in einem Anteil von etwa 0,1 bis 5,0 Gew.-% bezogen auf das Gesamtgewicht des flüssigkristallinen Gemischs eingesetzt. Speziell, wenn man das Härten unter Inertgasatmosphäre durchführt, ist es möglich, deutlich geringere Mengen an Photoinitiatoren zu verwenden, In diesem Fall werden die Photoinitiatoren in einem Anteil von etwa 0,1 bis 1,0 Gew.-%, vorzugsweise 0,2 bis 0,6 Gew.-%, bezogen auf das Gesamtgewicht des flüssigkristallinen Gemischs, eingesetzt.

Reaktivverdünner (C.2) werden z. B. als polymerisierbare Verdünner in Komponente (a.4) eingesetzt; sie sind dann zwingender Bestandteil des erfindungsgemäßen Gemischs.

Als Reaktivverdünner finden nicht nur solche Substanzen, welche im eigentlichen Sinne als Reaktivverdünner zu bezeichnen sind (Gruppe C.2.1) Verwendung, sondern auch Hilfsverbindungen, weiche ein oder mehrere komplementäre reaktive Einheiten, z. B. Hydroxy- oder Aminogruppen, enthalten, über welche eine Reaktion mit den polymerisierbaren Einheiten der flüssigkristallinen Verbindungen erfolgen kann (Gruppe C.2.2).

Zu den Substanzen der Gruppe (C.2.1), welche üblicherweise zur Photopolymerisation befähigt sind, zählen beispielsweise mono-, bi- oder polyfunktionelle Verbindungen mit mindestens einer olefinischen Doppelbindung. Beispiele hierfür sind Vinylester von Carbonsäuren, wie z. B. der Laurin-, Myristin-, Palmitin- oder Stearinsäure, oder von Dicarbonsäuren, wie z. B. der Bernsteinsäure und Adipinsäure, Allyl- oder Vinylether oder Methacryl- oder Acrylsäureester monofunktioneller Alkohole, wie z. B. des Lauryl-, Myristyl-, Palmityl- oder Stearylalkohols, oder Diallyl- oder Divinylether bifunktioneller Alkohole, wie z. B. des Ethylenglycols und des Butan-1,4-diols.

Weiter kommen z. B. in Frage Methacryl- oder Acrylsäureester polyfunktioneller Alkohole, insbesondere solcher, welche neben den Hydroxylgruppen keine weiteren funktionellen Gruppen oder allenfalls Ethergruppen enthalten. Beispiele solcher Alkohole sind z. B. bifunktionelle Alkohole, wie Ethylenglykol, Propylenglykol, und deren höher kondensierte Vertreter, wie z. B. Diethylenglykol, Triethylenglykol, Dipropylenglykol, Tripropylenglykol etc., Butandiol, Pentandiol, Hexandiol, Neopentylglykol, alkoxylierte phenolische Verbindungen, wie ethoxylierte bzw. propoxylierte Bisphenole, Cyclohexandimethanol, trifunktionelle und höherfunktionelle Alkohole, wie Glycerin, Trimethylolpropan, Butantriol, Trimethylolethan, Pentaerythrit, Ditrimethylolpropan, Dipentaerythrit, Sorbit, Mannit und die entsprechenden alkoxylierten, insbesondere ethoxy- und propoxylierte Alkohole.

Als Reaktivverdünner der Gruppe (C.2.1) kommen weiter in Frage Polyester(meth)-acrylat, wobei es sich hierbei um die (Meth)acrylsäureester von Polyesterolen handelt.

Als Polyesterole kommen beispielsweise solche in Betracht, die durch Veresterung von Polycarbonsäuren, vorzugsweise Dicarbonsäuren, mit Polyolen, vorzugsweise Diolen, hergestellt werden können. Die Ausgangsstoffe für solche hydroxylgruppenhaltige Polyester sind dem Fachmann bekannt. Als Dicarbonsäuren können Bernsteinsäure, Glutarsäure, Adipinsäure, Sebacinsäure, o-Phthalsäure und deren Isomere und Hydrierungsprodukte, sowie veresterbare oder umesterbare Derivate der genannten Säuren, wie z. B. Anhydride oder Dialkylester eingesetzt werden. Als Polyole kommen die oben genannten Alkohole, vorzugsweise Ethylenglykol, 1,2- und 1,3-Propylenglykol, 1,4-Butandiol, 1,6-Hexandiol, Neopentylglykol, Cyclohexandimethanol sowie Polyglykole vom Typ des Ethylenglykols und Propylenglykols in Betracht.

Weiterhin kommen als Reaktivverdünner der Gruppe (C.2.1) in Frage 1,4-Divinylbenzol, Triallylcyanurat, Acrylsäureester des Tricyclodecenylalkohols der nachstehenden Formel

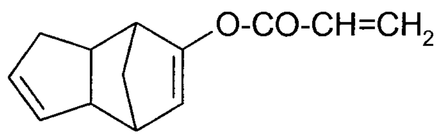

auch bekannt unter dem Namen Dihydrodicyclopentadienylacrylat, sowie die Allylester der Acrylsäure, der Methacrylsäure und der Cyanacrylsäure.

Unter den exemplarisch genannten Reaktivverdünnern der Gruppe (C.2.1) werden insbesondere und im Hinblick auf die oben angesprochenen bevorzugten erfindungsgemäßen Gemische solche verwendet, welche photopolymerisierbare Gruppen enthalten.

Zur Gruppe (C.2.2) sind beispielsweise zu zählen zwei- oder mehrwertige Alkohole, wie z. B. Ethylenglykol, Propylenglykol, und deren höher kondensierte Vertreter, z. B. wie Diethylenglykol, Triethylenglykol, Dipropylenglykol, Tripropylenglykol etc., Butandiol, Pentandiol, Hexandiol, Neopentylglykol, Cyclohexandimethanol, Glycerin, Trimethylolpropan, Butantriol, Trimethylolethan, Pentaerythrit, Ditrimethylolpropan, Dipentaerythrit, Sorbit, Mannit und die entsprechenden alkoxylierten, insbesondere ethoxy- und propoxylierte Alkohole.

Weiter zählen zur Gruppe (C.2.2) beispielsweise auch alkoxylierte phenolische Verbindungen, wie etwa ethoxylierte oder propoxylierte Bisphenole.

Weiterhin kann es sich bei diesen Reaktivverdünnern z. B. um Epoxid- oder Urethan-(meth)acrylate handeln.

Epoxid(meth)acrylate sind z. B. solche wie sie durch dem Fachmann bekannte Umsetzung von epoxidierten Olefinen oder Poly- bzw. Diglycidylethern, wie Bisphenol-A-diglycidylether, mit (Meth)acrylsäure erhältlich sind.

Bei Urethan(meth)acrylaten handelt es sich insbesondere um dem Fachmann ebenfalls bekannte Umsetzungsprodukte von Hydroxyalkyl(meth)acrylaten mit Poly- bzw. Diisocyanaten.

Solche Epoxid- oder Urethan(meth)acrylate sind als "Mischformen" der unter den Gruppen (C.2.1) und (C.2.2) aufgeführten Verbindungen aufzufassen.

Setzt man Reaktivverdünner ein, so müssen deren Menge und Eigenschaften so an die jeweiligen Verhältnisse angepasst werden, dass einerseits ein zufriedenstellender gewünschter Effekt, z. B. die erwünschte Farbe der erfindungsgemäßen Gemische, erreicht wird, andererseits das Phasenverhalten des flüssigkristallinen Gemischs jedoch nicht zu stark beeinträchtigt wird. Für die Herstellung niedrigvernetzender (hochvernetzender) flüssigkristalliner Gemische kann man beispielsweise entsprechende Reaktiwerdünner verwenden, welche eine relativ geringe (hohe) Anzahl an reaktiven Einheiten je Molekül besitzen.

Die Reaktivverdünner werden üblicherweise in einem Anteil von etwa 0,5 bis 20,0 Gew.-% bezogen auf das Gesamtgewicht des flüssigkristallinen Gemischs eingesetzt.

Auch die Komponenten (a.1) bzw. Gemische, welche diese Komponenten enthalten, können in kleinen Mengen polymerisierbare Verdünnungsmittel enthalten. Bevorzugte (a.1) zusetzbare polymerisierbare Lösungsmittel sind Acrylate, insbesondere höherfunktionelle Acrylate wie Bis-, Tris- oder Tetraacrylate, besonders bevorzugt hochsiedende Oligoacrylate. Die bevorzugte Zusatzmenge liegt bei etwa 5 Gew.-%, bezogen auf das Gesamtgewicht der Zusammensetzung.

In die Gruppe (C.3) der Verdünnungsmittel fallen beispielsweise $C_1$-$C_4$-Alkohole, wie z. B. Methanol, Ethanol, n-Propanol, Isopropanol, Butanol, Isobutanol, sec-Butanol, tert-Butanol sowie die $C_5$-$C_{12}$-Alkohole n-Pentanol, n-Hexanol, n-Heptanol, n-Octanol, n-Nonanol, n-Decanol, n-Undecanol und n-Dodecanol und deren Isomere, Glykole, wie z. B. 1,2-Ethylenglykol, 1,2- oder 1,3-Propylenglykol, 1,2-, 2,3- oder 1,4-Butylenglykol, Di- oder Triethylenglykol oder Dioder Tripropylenglykol, Ether, z. B. offenkettige Ether, wie Methyl-tert-butylether, 1,2-Ethylenglykolmono- oder -dimethylether, 1,2-Ethylenglykolmono- oder -diethylether, 3-Methoxypropanol oder 3-Isopropoxypropanol, oder cyclische Ether, wie Tetrahydrofuran oder Dioxan, offenkettige Ketone, wie z. B. Aceton, Methylethylketon, Methylisobutylketon oder Diacetonalkohol (4-Hydroxy-4-methyl-2-pentanon), cyclische Ketone, wie Cyclopentanon, $C_1$-$C_5$-Alkylester, wie z. B. Essigsäuremethylester, Essigsäureethylester, Essigsäurepropylester, Essigsäurebutylester oder Essigsäureamylester, $C_1$-$C_4$-Alkoxy-$C_1$-$C_4$-alkylester, wie 1-Methoxyprop-2-ylacetat, Carbonsäureamide, wie Dimethylformamid und Dimethylacetamid, N-Heterocyclen, wie N-Methylpyrrolidon, aliphatische oder aromatische Kohlenwasserstoffe wie z. B. Pentan, Hexan, Heptan, Octan, Isooctan, Petrolether, Toluol, Xylol, Ethylbenzol, Tetralin, Dekalin, Dimethylnaphthafin, Testbenzin, Shellsol® oder Solvesso®, Mineralöle, wie z. B. Benzin, Kerosin, Dieselöl oder Heizöl, aber auch natürliche Öle, wie z. B. Olivenöl, Sojaöl, Rapsöl, Leinöl oder Sonnenblumenöl. Selbstverständlich kommen auch Mischungen dieser Verdünnungsmittel für die Verwendung in den erfindungsgemäßen Gemischen in Betracht.

Sofern zumindest eine teilweise Mischbarkeit gegeben ist können diese Verdünnungsmittel auch mit Wasser gemischt werden. In Frage kommen hierbei etwa $C_1$-$C_4$-Alkohole, z. B. Methanol, Ethanol, n-Propanol, Isopropanol, Butanol, Isobutanol oder sec-Butanol, Glykole, z. B. 1,2-Ethylenglykol, 1,2- oder 1,3-Propylenglykol, 1,2-, 2,3-oder 1,4-Butylenglykol, Di- oder Triethylenglykol oder Di- oder Tripropylenglykol, Ether, z. B. Tetrahydrofuran oder Dioxan, Ketone, z. B. Aceton, Methylethylketon oder Diacetonalkohol (4-Hydroxy-4-methyl-2-pentanon), oder $C_1$-$C_4$-Alkylester, wie z. B. Essigsäuremethyl-, -ethyl-, -propyl- oder -butylester in Betracht. Solche wasserhaltigen Mischungen besitzen oftmals eine begrenzte Mischbarkeit mit unpolareren Verdünnungsmittel, wie z. B. den bereits genannten aliphatischen oder aromatischen Kohlenwasserstoffen, Mineralölen aber auch natürlichen Ölen, wodurch sich dann auch ternäre (oder quasiternäre) Verdünnungsmittel aus Wasser, mit Wasser zumindest teilweise mischbaren und mit Wasser unmischbaren Verdünnungsmitteln herstellen und verwenden lassen.

Geeignete Verdünnungsmittel für die Verbindungen der Gruppen (a.1) sind insbesondere lineare oder verzweigte Ester, besonders Essigsäureester, $C_1$-$C_4$-Alkoxy-$C_1$-$C_4$-alkylester, wie 1-Methoxyprop-2-ylacetat, cyclische Ester, Carbonsäureamide, wie Dimethylformamid und Dimethylacetamid, offenkettige und cyclische Ether, Alkohole, Lactone, offenkettige und cyclische Ketone sowie aliphatische und aromatische Kohlenwasserstoffe, wie Toluol, Xylol und Cyclohexan. Bevorzugte Verdünnungsmittel für die Verbindungen der Gruppen (a.1) oder (a.2) sind $C_1$-$C_4$-Alkoxy-$C_1$-$C_4$-alkylester, wie 1-Methoxyprop-2-ylacetat, Carbonsäureamide, wie Dimethylformamid und Dimethylacetamid, offenkettige Ether, wie 1,2-Ethylenglykolmono- oder - dimethylether, 1,2-Ethylenglykolmono- oder -diethylether, 3-Methoxypropanol oder 3-Isopropoxypropanol, offenkettige und cyclische Ketone, wie Aceton, Methylethylketon, Methylisobutylketon, Diacetonalkohol (4-Hydroxy-4-methyl-2-pentanon) oder Cyclopentanon, Alkohole, wie Methanol, Ethanol, n-Propanol, Isopropanol, Butanol, Isobutanol, sec-Butanol, tert-Butanol, n-Pentanol, n-Hexanol, n-Heptanol, n-Octanol, n-Nonanol, n-Decanol, n-Undecanol und n-Dodecanol, Lactone, wie N-Methylpyrrolidon, und Aromaten, wie Toluol. Stärker bevorzugt sind die genannten Carbonsäureamide, offenkettigen Ether, offenkettigen und cyclischen Ketone und Lactone. Insbesondere verwendet man die genannten offenkettigen und cyclischen Ketone oder Gemische davon.

Die Verdünnungsmittel werden üblicherweise in einem Anteil von etwa 0,5 bis 10,0 Gew.-%, vorzugsweise von etwa 1,0 bis 5,0 Gew.-%, bezogen auf das Gesamtgewicht der Zusammensetzung, eingesetzt.

Handelt es sich bei der Zusammensetzung um eine Lösung oder Dispersion, so beträgt der Anteil an Verdünnungsmittel vorzugsweise 5 bis 95 Gew.-%, besonders bevorzugt 30 bis 80 Gew.-% und insbesondere 40 bis 70 Gew.-%, bezogen auf das Gesamtgewicht der Zusammensetzung.

Die unter Komponente C aufgeführten Entschäumer und Entlüfter (C.4), Gleit- und Verlaufshilfsmittel (C.5), thermisch härtenden oder strahlenhärtenden Hilfsmittel (C.6), Substratnetzhilfsmittel (C.7), Netz- und Dispergierhilfsmittel (C.8), Hydrophobierungsmittel (C.9), Haftvermittler (C.1 0) und Hilfsmittel zur Verbesserung der Kratzfestigkeit (C.11) lassen sich in ihrer Wirkung meist nicht streng voneinander abgrenzen. So wirken Gleit- und Verlaufshilfsmittel oftmals zusätzlich als Entschäumer und/oder Entlüfter und/oder als Hilfsmittel zur Verbesserung der Kratzfestigkeit. Strahlenhärtende Hilfsmittel können wiederum als Gleit- und Verlaufshilfsmittel und/oder Entlüfter und/oder auch als Substratnetzhilfsmittel wirken. Im Einzelfall können manche dieser Hilfsmittel auch die Funktion eines Haftvermittlers (C.11) erfüllen. Entsprechend dem zuvor Gesagten kann daher ein bestimmtes Additiv mehreren der nachfolgend beschriebenen Gruppen (C.4) bis (C.11) zugeordnet sein.

Unter den Entschäumern der Gruppe (C.4) finden sich siliciumfreie und siliciumhaltige Polymere. Bei den siliciumhaltigen Polymeren handelt es sich beispielsweise um unmodifizierte oder modifizierte Polydialkylsiloxane oder um verzweigte Copolymere, Kamm- oder Blockcopolymere aus Polydialkylsiloxan- und Polyethereinheiten, wobei letztere aus Ethylen- oder Propylenoxid zugänglich sind.

Zu den Entlüftern der Gruppe (C.4) gehören beispielsweise organische Polymere, wie etwa Polyether und Polyacrylate, Dialkyl-, insbesondere Dimethylpolysiloxane, organisch modifizierte Polysiloxane, wie etwa arylalkylmodifizierte Polysiloxane oder auch Fluorsilicone. Die Wirkung von Entschäumern beruht im Wesentlichen darauf, Schaumbildung zu verhindern oder bereits gebildeten Schaum zu zerstören. Entlüfter wirken im Wesentlichen in der Weise, dass sie die Koaleszenz feinverteilter Gas- bzw. Luftblasen zu größeren Blasen im zu entlüftenden Medium, beispielsweise den erfindungsgemäßen Gemischen, fördern und damit das Entweichen des Gases (der Luft) beschleunigen. Da oftmals Entschäumer auch als Entlüfter eingesetzt werden können und umgekehrt, wurden diese Additive gemeinsam unter Gruppe (C.4) subsumiert. Solche Hilfsmittel sind beispielsweise kommerziell von der Firma Tego als TEGO® Foamex 800, TEGO® Foamex 805, TEGO® Foamex 810, TEGO® Foamex 815, TE-GO® Foamex 825, TEGO® Foamex 835, TEGO® Foamex 840, TEGO® Foamex 842, TEGO® Foamex 1435, TEGO® Foamex 1488, TEGO® Foamex 1495, TEGO® Foamex 3062, TEGO® Foamex 7447, TEGO® Foamex 8020, Tego® Foamex N, TEGO® Foamex K 3, TEGO® Antifoam 2-18, TEGO® Antifoam 2-57, TEGO® Antifoam 2-80, TEGO® Antifoam 2-82, TEGO® Antifoam 2-89, TEGO® Antifoam 2-92, TEGO® Antifoam 14, TEGO® Antifoam 28, TEGO® Antifoam 81, TEGO® Antifoam D 90, TEGO® Antifoam 93, TEGO® Antifoam 200, TEGO® Antifoam 201, TEGO® Antifoam 202, TEGO® Antifoam 793, TEGO® Antifoam 1488, TEGO® Antifoam 3062, TEGOPREN® 5803, TEGOPREN® 5852, TEGOPREN® 5863, TEGOPREN® 7008, TEGO® Antifoam 1-60, TEGO® Antifoam 1-62, TEGO® Antifoam 1-85, TEGO® Antifoam 2-67, TE-GO® Antifoam WM 20, TEGO® Antifoam 50, TEGO® Antifoam 105, TEGO® Antifoam 730, TEGO® Antifoam MR 1015, TEGO® Antifoam MR 1016, TEGO® Antifoam 1435, TEGO® Antifoam N, TEGO® Antifoam KS 6, TEGO® Antifoam KS 10, TEGO® Antifoam KS 53, TEGO® Antifoam KS 95, TEGO® Antifoam KS 100, TEGO® Antifoam KE 600, TEGO® Antifoam KS 911, TEGO® Antifoam MR 1000, TEGO® Antifoam KS 1100, Tego® Airex 900, Tego® Airex 910, Tego® Airex 931, Tego® Airex 935, Tego® Airex 960, Tego® Airex 970, Tego® Airex 980 und Tego® Airex 985 und von der Firma BYK als BYK®-011, BYK®-019, BYK®-020, BYK®-021, BYK®-022, BYK®-023, BYK®-024, BYK®-025, BYK®-027, BYK®-031, BYK®-032, BYK®-033, BYK®-034, BYK®-035, BYK®-036, BYK®-037, BYK®-045, BYK®-051, BYK®-052, BYK®-053, BYK®-055, BYK®-057, BYK®-065, BYK®-067, BYK®-070, BYK®-080, BYK®-088, BYK®-141 und BYK®-A 530 erhältlich.

Die Hilfsmittel der Gruppe (C.4) werden üblicherweise in einem Anteil von etwa 0,05 bis 3,0 Gew.-%, vorzugsweise von etwa 0,5 bis 2,0 Gew.-% bezogen auf das Gesamtgewicht des flüssigkristallinen Gemischs eingesetzt.

In die Gruppe (C.5) der Gleit- und Verlaufshilfsmittel gehören typischerweise siliciumfreie aber auch siliciumhaltige Polymere, wie z. B. Polyacrylate oder modifizierte, niedermolekulare Polydialkylsiloxane. Die Modifizierung besteht darin, dass ein Teil der Alkylgruppen durch verschiedenste organische Reste ersetzt ist. Bei diesen organischen Resten handelt es sich beispielsweise um Polyether, Polyester oder auch langkettige Alkylreste, wobei erstere am häufigsten Verwendung finden.

Die Polyetherreste der entsprechend modifizierten Polysiloxane werden dabei üblicherweise über Ethylen- und/oder Propylenoxideinheiten aufgebaut. Je höher der Anteil an diesen Alkylenoxideinheiten im modifizierten Polysiloxan ist, desto hydrophiler ist in der Regel das resultierende Produkt.

Solche Hilfsmittel sind beispielsweise kommerziell von der Firma Tego als TEGO® Glide 100, TEGO® Glide ZG 400, TEGO® Glide 406, TEGO® Glide 410, TEGO® Glide 411, TEGO® Glide 415, TEGO® Glide 420, TEGO® Glide 435, TEGO® Glide 440, TEGO® Glide 450, TEGO® Glide A 115, TEGO® Glide B 1484 (auch als Entschäumer und Entlüfter einsetzbar), TEGO® Flow ATF, TEGO® Flow ATF2, TEGO® Flow 300, TEGO® Flow 460, TEGO® Flow 425 und TEGO® Flow ZFS 460 erhältlich. Als strahlenhärtbare Gleit- und Verlaufshilfsmittel, welche darüber hinaus auch der Verbesserung der Kratzfestigkeit dienen, lassen sich die ebenfalls von der Firma Tego erhältlichen Produkte TEGO® Rad 2100, TEGO® Rad 2200, TEGO® Rad 2300, TEGO® Rad 2500, TEGO® Rad 2600, TEGO® Rad 2700 und TEGO® Twin 4000 einsetzen. Von der Firma BYK sind solche Hilfsmittel beispielsweise als BYK®-300 BYK®-306, BYK®-307, BYK®-310, BYK®-320, BYK®-322, BYK®-331, BYK®-333, BYK®-337, BYK®-341, Byk® 354, Byk® 361 N, BYK®-378 und BYK®-388 erhältlich.

Die Hilfsmittel der Gruppe (C.5) werden üblicherweise in einem Anteil von etwa 0,05 bis 3,0 Gew.-%, vorzugsweise von etwa 0,5 bis 2,0 Gew.-% bezogen auf das Gesamtgewicht des flüssigkristallinen Gemischs eingesetzt.

In die Gruppe (C.6) gehören als strahlenhärtende Hilfsmittel vor allem Polysiloxane mit endständigen Doppelbindungen, welche z. B. Bestandteil einer Acrylatgruppe sind. Solche Hilfsmittel können durch aktinische oder z. B. Elektronenstrahlung zur Vernetzung gebracht werden. Diese Hilfsmittel vereinen in der Regel mehrere Eigenschaften auf sich. Sie können im unvernetzten Zustand als Entschäumer, Entlüfter, Gleit- und Verlaufshilfsmittel und/oder Substratnetzhilfsmittel wirken, im vernetzten Zustand erhöhen sie vor allem die Kratzfestigkeit z. B. von Beschichtungen oder Filmen, welche mit den erfindungsgemäßen Gemischen hergestellt werden können. Die Verbesserung des Glanzverhaltens, z. B. ebensolcher Beschichtungen oder Filme ist dabei im Wesentlichen als Folge der Wirkung dieser Hilfsmittel als Entschäumer, Entlüfter und/oder Gleit- und Verlaufshilfsmittel (im unvernetzten Zustand) zu sehen. Als strahlenhärtende Hilfsmittel lassen sich beispielsweise die von der Firma Tego erhältlichen Produkte TEGO® Rad 2100, TEGO® Rad 2200, TEGO® Rad 2500, TEGO® Rad 2600 und TEGO® Rad 2700 und das von der Firma BYK erhältliche Produkt BYK®-371 einsetzen. Thermisch härtende Hilfsmittel der Gruppe (C.6) enthalten beispielsweise primäre OH-Gruppen, welche mit Isocyanatgruppen z. B. des Bindemittels reagieren können.

Als thermisch härtende Hilfsmittel lassen sich beispielsweise die von der Firma BYK erhältlichen Produkt BYK®-370, BYK®-373 und BYK®-375 einsetzen. Die Hilfsmittel der Gruppe (C.6) werden üblicherweise in einem Anteil von etwa 0,1 bis 5,0 Gew.-%, vorzugsweise von etwa 0,1 bis 3,0 Gew.-% bezogen auf das Gesamtgewicht des flüssigkristallinen Gemischs eingesetzt.

Die Hilfsmittel der Gruppe (C.7) der Substratnetzhilfsmittel dienen vor allem der Erhöhung der Benetzbarkeit des Substrats, welches etwa durch Druckfarben oder Beschichtungsmittel, z. B. Zusammensetzungen (a.1) bis (a.5), bedruckt oder beschichtet werden soll. Die damit in der Regel einhergehende Verbesserung des Gleit- und Verlaufsverhaltens solcher Druckfarben oder Beschichtungsmittel wirkt sich auf das Erscheinungsbild des fertigen (z. B. vernetzten) Drucks bzw. der fertigen (z. B. vernetzten) Schicht aus. Verschiedenste solcher Hilfsmittel sind kommerziell erhältlich, beispielsweise von der Firma Tego als TEGO® Wet KL 245, TEGO® Wet 250, TEGO® Wet 260 und TEGO® Wet ZFS 453 und von der Firma BYK als BYK®-306, BYK®-307, BYK®-310, BYK®-333, BYK®-344, BYK®-345, BYK®-346 und Byk®-348.

Gut geeignet sind auch die Produkte der Marke Zonyl® der Firma Dupont, wie Zonyl® FSA und Zonyl® FSG. Dabei handelt es sich um Fluor-haltige Tenside/Netzmittel.

Die Hilfsmittel der Gruppe (C.7) werden üblicherweise in einem Anteil von etwa 0,01 bis 3,0 Gew.-%, vorzugsweise von etwa 0,01 bis 1,5 Gew.-% und insbesondere von 0,03 bis 1,5 Gew.-%, bezogen auf das Gesamtgewicht des flüssigkristallinen Gemischs, eingesetzt.

Die Hilfsmittel der Gruppe (C.8) der Netz- und Dispergierhilfsmittel dienen vor allem der Verhinderung des Aus- und Aufschwimmens sowie des Absetzens von Pigmenten und kommen daher, sofern nötig, vor allem bei pigmentierten Zusammensetzungen in Frage.

Diese Hilfsmittel stabilisieren Pigmentdispersionen im Wesentlichen durch elektrostatische Abstoßung und/oder sterische Hinderung der additivierten Pigmentteilchen, wobei in letzterem Fall die Wechselwirkung des Hilfsmittels mit dem umgebenden Medium (z. B. Bindemittel) eine größere Rolle spielt. Da die Verwendung solcher Netz- und Dispergierhilfsmittel, z. B. auf dem technischen Gebiet der Druckfarben und Anstrichmittel, gängige Praxis ist, bereitet im gegebenen Fall die Auswahl solch eines geeigneten Hilfsmittels dem Fachmann in der Regel keine Schwierigkeiten.

Solche Netz- und Dispergierhilfsmittel werden kommerziell beispielsweise von der Firma Tego als TEGO® Dispers 610, TEGO® Dispers 610 S, TEGO® Dispers 630, TE-GO® Dispers 700, TEGO® Dispers 705, TEGO® Dispers 710, TEGO® Dispers 720 W, TEGO® Dispers 725 W, TEGO® Dispers 730 W, TEGO® Dispers 735 W und TEGO® Dispers 740 W sowie von der Firma BYK als Disperbyk®, Disperbyk®-107, Disperbyk®-108, Disperbyk®-110, Disperbyk®-111, Disperbyk®-115, Disperbyk®-130, Disperbyk®-160, Disperbyk®-161, Disperbyk®-162, Disperbyk®-163, Disperbyk®-164, Disperbyk®-165, Disperbyk®-166, Disperbyk®-167, Disperbyk®-170, Disperbyk®-174, Disperbyk®-180, Disperbyk®-181, Disperbyk®-182, Disperbyk®-183, Disperbyk®-184, Disperbyk®-185, Disperbyk®-190, Anti-Terra®-U, Anti-Terra®-U 80, Anti-Terra®-P, Anti-Terra®-203, Anti-Terra®-204, Anti-Terra® 5 206, BYK®-151, BYK®-154, BYK®-155, BYK®-P 104 S, BYK®-P 105, Lactimon®, Lactimon®-WS und Bykumen® angeboten. Auch die o.g. Zonyl®-Marken, wie Zonyl® FSA unf Zonyl® FSG der Firma DuPont kommen hier in Betracht.

Die Dosierung der Hilfsmittel der Gruppe (C.8) hängt hauptsächlich von der zu belegenden Oberfläche der Pigmente und vom mittleren Molgewicht des Hilfsmittels ab.

Für anorganische Pigmente und niedermolekulare Hilfsmittel rechnet man üblicherweise mit einem Anteil an letzterem von etwa 0,5 bis 2,0 Gew.-% bezogen auf das Gesamtgewicht aus Pigment und Hilfsmittel. Im Falle hochmolekularer Hilfsmittel erhöht sich der Anteil auf etwa 1,0 bis 30 Gew.-%.

Bei organischen Pigmenten und niedermolekularen Hilfsmitteln liegt der Anteil an letzterem bei etwa 1,0 bis 5,0 Gew.-% bezogen auf das Gesamtgewicht aus Pigment und Hilfsmittel. Im Falle hochmolekularer Hilfsmittel kann dieser Anteil im Bereich von etwa 10,0 bis 90 Gew.-% liegen. In jedem Fall empfehlen sich daher Vorversuche, welche jedoch vom Fachmann in einfacher Weise bewerkstelligt werden können.

Die Hydrophobierungsmittel der Gruppe (C.9) können im Hinblick darauf verwendet werden, dass beispielsweise mit erfindungsgemäßen Gemischen erzeugte Drucke oder Beschichtungen wasserabweisende Eigenschaften erhalten. Hierdurch ist ein Quellen durch Wasseraufnahme und damit eine Veränderung z. B. der optischen Eigenschaften solcher Drucke oder Beschichtungen nicht mehr möglich oder zumindest stark unterdrückt. Darüber hinaus kann man bei Verwendung der Gemische z. B. als Druckfarbe im Offsetdruck deren Wasseraufnahme verhindern oder zumindest stark eindämmen. Kommerziell erhältlich sind solche Hydrophobierungsmittel beispielsweise von der Firma Tego als Tego® Phobe WF, Tego® Phobe 1000, Tego® Phobe 1000 S, Tego® Phobe 1010, Tego® Phobe 1030, Tego® Phobe 1040, Tego® Phobe 1050, Tego® Phobe 1200, Tego® Phobe 1300, Tego® Phobe 1310 und Tego® Phobe 1400.

Die Hilfsmittel der Gruppe (C.9) werden üblicherweise in einem Anteil von etwa 0,05 bis 5,0 Gew.-%, vorzugsweise von etwa 0,1 bis 3,0 Gew.-% bezogen auf das Gesamtgewicht des flüssigkristallinen Gemischs eingesetzt.

Haftvermittler der Gruppe (C.10) dienen der Verbesserung der Haftung zweier in Kontakt stehender Grenzflächen. Hieraus wird direkt ersichtlich, dass im Wesentlichen nur der Anteil des Haftvermittlers wirksam ist, welcher sich in der einen, der anderen oder in beiden Grenzflächen befindet. Will man auf ein festes Substrat beispielsweise flüssige oder pastöse Druckfarben, Beschichtungs- oder Anstrichmittel aufbringen, so bedeutet dies in der Regel, dass man entweder letzteren die Haftvermittler direkt zusetzen oder das Substrat einer Vorbehandlung mit den Haftvermittlern unterziehen muss (auch als Primerung bezeichnet), d. h. dass man diesem Substrat geänderte chemische und/oder physikalisch Oberflächeneigenschaften verleiht.

Sofern das Substrat vorher mit einer Untergrundfarbe grundiert worden ist, bedeutet dies, dass die in Kontakt stehenden Grenzflächen nun jene der Untergrundfarbe einerseits und der Druckfarbe bzw. des Beschichtungs- oder Anstrichmittels andererseits sind. Somit spielen in diesem Fall nicht nur die Haftungseigenschaften zwischen Substrat und Untergrundfarbe, sondern auch zwischen Untergrundfarbe und Druckfarbe bzw. Beschichtungs- oder Anstrichmittel eine Rolle für die Haftung des gesamten Verbundes auf dem Substrat. Als Haftvermittler im weiteren Sinne können auch die bereits unter Gruppe (C.7) aufgeführten Substratnetzhilfsmittel angesprochen werden, jedoch besitzen diese in der Regel nicht dasselbe Vermögen zur Haftungsvermittlung.

Im Hinblick auf die unterschiedlichste physikalische und chemische Beschaffenheit von Substraten und von beispielsweise für ihre Bedruckung oder Beschichtung vorgesehenen Druckfarben, Beschichtungs- und Anstrichmitteln ist die Vielzahl von Haftvermittlersystemen nicht verwunderlich. Haftvermittler auf Basis von Silanen sind beispielsweise 3-Aminopropyltrimethoxysilan, 3-Aminopropyltriethoxysilan, 3-Aminopropylmethyldiethoxysilan, N-Aminoethyl-3-aminopropyltrimethoxysilan, N-Aminoethyl-3-aminopropyl-methyldimethoxysilan, N-Methyl-3-aminopropyl-trimethoxysilan, 3-Ureidopropyltriethoxysilan, 3-Methacryloyloxypropyltrimethoxysilan, 3-Glycidyloxypropyltrimethoxysilan, 3-Mercaptopropyltrimethoxysilan, 3-Chlorpropyltrimethoxysilan oder Vinyltrimethoxysilan. Diese und weitere Silane sind z. B. unter dem Markennamen DYNASILAN® von der Firma Hüls erhältlich.

Haftvermittler auf Basis von Titanaten/Zirkonaten und Titan-/Zirkoniumbisacetylacetonaten entsprechen beispielsweise den folgenden Formeln

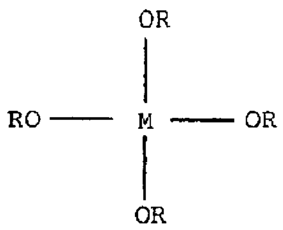

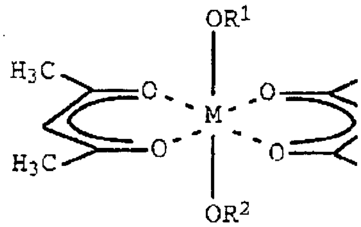

worin M für Titan oder Zirkonium steht und R, $R^1$ und $R^2$ $C_1$-$C_4$-Alkyl, wie z. B. Isopropyl oder n-Butyl bedeuten. Beispiele für solche Verbindungen sind etwa Tetraisopropyltitanat, Tetra-n-butyltitanat, Titan-bis(acetylacetonat)-diisopropanolat, Titan-bis(acetylacetonat)-dibutanolat, Titan-bis(acetylacetonat)-monobutanolat-mono-isopropanolat oder Titan-bis (acetylacetonat)-monoethanolat-monoisopropanolat.

Weitere als Haftvermittler verwendbare Titan- und Zirkoniumverbindungen sind n-Butylpolytitanat, Isopropyltriisostearoyltitanat, Isopropyl-tris(N-ethylaminoethyl-amino)titanat und Zirkoniumbis(diethylcitrat)-diisopropanolat. Solche und weitere Titan- und Zirkoniumverbindungen sind z. B. unter den Markennamen TYZOR® (Firma DuPont), Ken-React® (Firma Kenrich Petrochemicals Inc.) und Tilcom® (Firma Tioxide Chemicals) erhältlich. Als Haftvermittler können auch Zirkoniumaluminate dienen, wie sie z. B. unter dem Markennamen Manchem® (Firma Rhone Poulenc) erhältlich sind. Weiter kommen beispielsweise als haftvermittelnde Additive in Druckfarben oder Anstrichmitteln chlorierte Polyolefine (z. B. von den Firmen Eastman Chemical und Toyo Kasei erhältlich), Polyester (z. B. von den Firmen Hüls AG, BASF SE, Gebr. Borchers AG, Pluess-Staufer AG, Hoechst AG und Worlee erhältlich), Verbindungen auf Basis von Saccharose, beispielsweise Sucrosebenzoat oder Sucroseacetoisobutyrat (letzteres z. B. von der Firma Eastman Chemical erhältlich), Phosphorsäureester (z. B. von den Firmen The Lubrizol Company und Hoechst AG erhältlich) und Polyethylenimine (z. B. von der Firma BASF SE erhältlich) und beispielsweise als haftvermittelnde Additive in Druckfarben für den Flexo-, Folien- und Verpackungsdruck Kolophoniumester (z. B. von der Firma Robert Kraemer GmbH erhältlich) in Frage.

Üblicherweise wird man beispielsweise das zu bedruckende oder zu beschichtende Substrat entsprechend vorbehandeln, d. h. solche Additive als Primer verwenden. Von den Herstellern solcher Additive sind hierfür entsprechende technische Informationen in der Regel in Erfahrung zu bringen oder der Fachmann kann durch entsprechende Vorversuche diese Informationen in einfacher Weise erhalten.

Sollen diese Additive jedoch als Hilfsmittel der Gruppe (C.10) den erfindungsgemäßen Gemischen zugegeben

werden, so entspricht deren Anteil üblicherweise etwa 0,05 bis 5,0 Gew.-% bezogen auf das Gesamtgewicht des flüssigkristallinen Gemischs. Diese Konzentrationsangaben dienen hierbei lediglich als Anhaltspunkt, da Menge und Identität des Additivs im Einzelfall durch die Natur des Substrats und des Bedruckungs/Beschichtungsmittels bestimmt sind. Üblicherweise sind von den Herstellern solcher Additive für diesen Fall entsprechende technische Informationen verfügbar oder lassen sich vom Fachmann durch entsprechende Vorversuche in einfacher Weise ermitteln.

In die Gruppe (C.11) der Hilfsmittel zur Verbesserung der Kratzfestigkeit gehören beispielsweise die von der Firma Tego erhältlichen und bereits oben genannten Produkte TEGO® Rad 2100, TEGO® Rad 2200, TEGO® Rad 2500, TEGO® Rad 2600 und TEGO® Rad 2700.

Für diese Hilfsmittel kommen ebenfalls die in Gruppe (C.6) genannten Mengenangaben in Betracht, d. h. diese Additive werden üblicherweise in einem Anteil von etwa 0,1 bis 5,0 Gew.-%, vorzugsweise von etwa 0,1 bis 3,0 Gew.-% bezogen auf das Gesamtgewicht des flüssigkristallinen Gemischs eingesetzt.

In die Gruppe (D.1) der Farbstoffe gehören beispielsweise Farbstoffe aus der Klasse der Azofarbstoffe, Metallkomplexfarbstoffe, basische Farbstoffe wie Di- und Triarylmethanfarbstoffe und deren Salze, Azomethinderivate, Polymethine, Antrachinonfarbstoffe und dergleichen. Einen Überblick über geeignete Farbstoffe, welche in das erfindungsgemäße Gemisch eingesetzt werden können, gibt das Buch von H. Zollinger, "Color Chemistry", Wiley-VCH, Weinheim, 3. Auflage 2003.

Den erfindungsgemäßen Gemischen können insbesondere auch photochrome, thermochrome oder lumineszierende Farbstoffe sowie Farbstoffe, welche eine Kombination dieser Eigenschaften aufweisen, zugegeben werden. Unter fluoreszierenden Farbstoffen sind neben den typischen Fluoreszenzfarbstoffen auch optische Aufheller zu verstehen.

Letztere gehören z. B. der Klasse der Bisstyrylbenzole, insbesondere der Cyanostyrylverbindungen, an und entsprechen der Formel

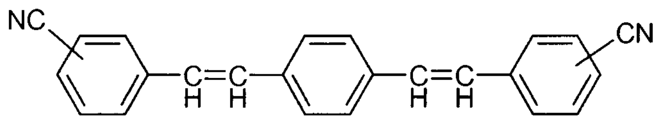

Weitere geeignete optische Aufheller aus der Klasse der Stilbene besitzen z. B. die Formeln

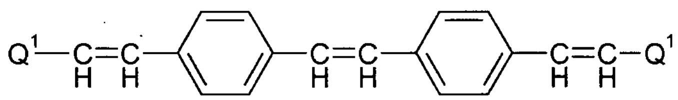

und

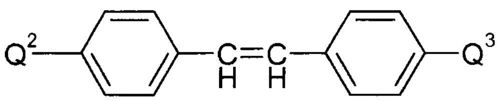

worin $Q^1$ jeweils $C_1$-$C_4$-Alkoxycarbonyl oder Cyano, $Q^2$ Benzoxazol-2-yl, das ein- oder zweifach durch $C_1$-$C_4$-Alkyl, insbesondere Methyl substituiert sein kann, $Q^3$ $C_1$-$C_4$-Alkoxycarbonyl oder 3-($C_1$-$C_4$-Alkyl)-1,2,4-oxadiazol-3-yl.

Weitere geeignete optische Aufheller aus der Klasse der Benzoxazole sind beispielsweise solche der Formeln

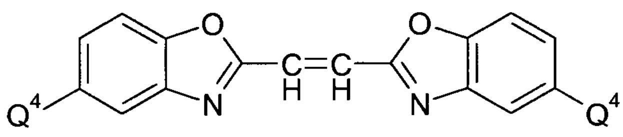

oder

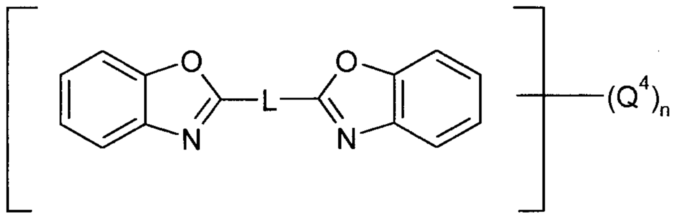

worin $Q^4$ jeweils $C_1$-$C_4$-Alkyl, insbesondere Methyl, L einen Rest der Formel

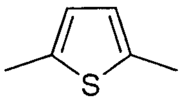

oder

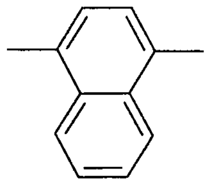

und n einen ganzzahligen Wert von 0 bis 2 bedeutet.

Geeignete optische Aufheller aus der Klasse der Cumarine besitzen z. B. die Formel

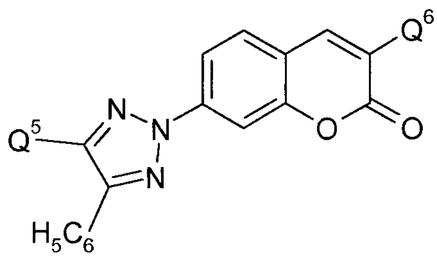

in der

$Q^5$ $C_1$-$C_4$-Alkyl und
$Q^6$ Phenyl oder 3-Halogenpyrazol-1-yl, insbesondere 3-Chlorpyrazol-1-yl, bedeuten.

Weitere geeignete optische Aufheller aus der Klasse der Pyrene entsprechen z. B. der Formel

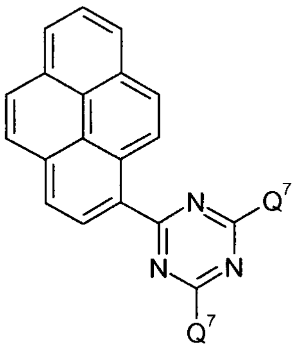

in der

$Q^7$ jeweils $C_1$-$C_4$-Alkoxy, insbesondere Methoxy, bedeutet.

Die oben genannten Aufheller können sowohl alleine als auch in Mischung miteinander angewendet werden.

Bei den oben genannten optischen Aufhellern handelt es sich in der Regel um an sich bekannte und handelsübliche Produkte. Sie sind beispielsweise in Ullmann's Encyclopedia of Industrial Chemistry, 5. Auflage, Band A18, Seiten 156 bis 161, beschrieben oder können nach den dort genannten Methoden erhalten werden.

Insbesondere verwendet man, sofern dies gewünscht ist, einen oder mehrere optische Aufheller aus der Klasse der Bisstyrylbenzole, insbesondere der Cyanostyrylbenzole. Letztere können als Einzelverbindungen, aber auch als Mischung der isomeren Verbindungen zur Anwendung gelangen.

Die Isomeren entsprechen dabei den Formeln

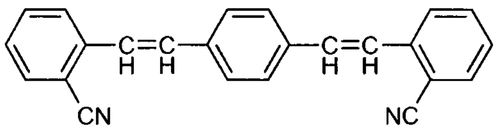
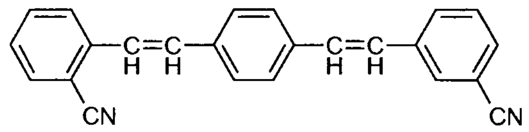

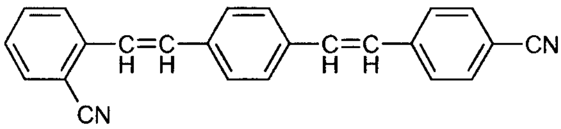
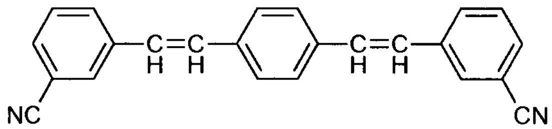

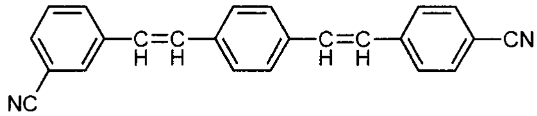
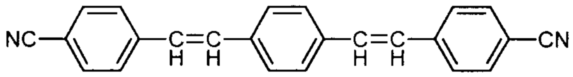

Optische Aufheller werden beispielsweise kommerziell als Ultraphor® SF 004, Ultraphor® SF MO, Ultraphor® SF MP und Ultraphor® SF PO von der Firma BASF SE vertrieben.

In die Gruppe (D.2) der Pigmente gehören sowohl anorganische als auch organische Pigmente. Einen Überblick über anorganische Buntpigmente, welche in den erfindungsgemäßen Gemischen zur Verwendung kommen können, gibt das Buch von H. Endriß "Aktuelle anorganische Bunt-Pigmente" (Herausgeber U. Zorll, Curt-R.-Vincentz-Verlag Hannover 1997) sowie das Buch von G. Buxbaum, "Industrial Inorganic Pigments", Wiley-VCH, Weinheim, 3. Auflage 2005. Darüber hinaus kommen als weitere Pigmente, welche im zuvor genannten Buch nicht aufgeführt sind, auch Pigment Black 6 und Pigment Black 7 (Ruß), Pigment Black 11 (Eisenoxidschwarz, $Fe_3O_4$), Pigment White 4 (Zinkoxid, ZnO), Pigment White 5 (Lithopone, $ZnS/BaSO_4$), Pigment White 6 (Titanoxid, $TiO_2$) und Pigment White 7 (Zinksulfid, ZnS) in Frage.

Einen Überblick über organische Pigmente, welche man den erfindungsgemäßen Gemischen zugeben kann, liefert das Buch von W. Herbst und K. Hunger "Industrielle organische Pigmente", Wiley-VCH, Weinheim, 3. Auflage 2004.

Den erfindungsgemäßen Gemischen können auch magnetische, elektrisch leitende, photochrome, thermochrome oder lumineszierende Pigmente sowie Pigmente, welche eine Kombination dieser Eigenschaften aufweisen, zugegeben werden.

Als Pigmente mit lumineszierenden Eigenschaften kommen neben einigen organischen, wie z. B. Lumogen® Yellow 0790 (Fa. BASF SE), auch anorganische, dotierte oder undotierte Verbindungen in Frage, welche im Wesentlichen auf Erdalkalimetalloxiden, Erdalkalimetall/Übergangsmetall-, Erdalkalimetall/Aluminium-, Erdalkalimetall/Silicium- oder Erdalkalimetall/Phosphoroxiden, Erdalkalimetallhalogeniden, Zn/Siliciumoxiden, Zn/Erdalkalimetallhalogeniden, Seltenerdmetalloxiden, Seltenerdmetall/Übergangsmetall-, Seltenerdmetall/Aluminium-, Seltenerdmetall/Silicium- oder Seltenerdmetall/Phosphoroxiden, Seltenerdmetalloxidsulfiden oder - oxidhalogeniden, Zinkoxid, -sulfid oder -selenid, Cadmiumoxid, -sulfid oder -selenid oder Zink/Cadmiumoxid, -sulfid oder -selenid basieren, wobei die cadmiumhaltigen Verbindungen wegen ihrer toxikologischen und ökologischen Relevanz an Bedeutung verlieren.

Als Dotierstoffe finden in diesen Verbindungen üblicherweise Aluminium, Zinn, Antimon, Seltenerdmetalle, wie Cer, Europium oder Terbium, Übergangsmetalle, wie Mangan, Kupfer, Silber oder Zink oder auch Kombinationen dieser Elemente Verwendung.

Exemplarisch sind nachfolgend lumineszierende Pigmente angegeben, wobei die Schreibweise "Verbindung: Element(e)" dem einschlägigen Fachmann zu verstehen gibt, dass die genannte Verbindung mit dem(den) entsprechenden Element(en) dotiert ist. Darüber hinaus bedeutet beispielsweise die Schreibweise "(P,V)", dass entsprechende Gitterplätze in der Festkörperstruktur des Pigments statistisch durch Phosphor und Vanadium besetzt sind.

Beispiele solcher, zu Lumineszenz befähigter Verbindungen sind $MgWO_4$, $CaWO_4$, $Sr_4Al_{14}O_{25}$:Eu, $BaMg_2Al_{10}O_{27}$:EU, $MgAl_{11}O_{19}$:Ce, Tb, $MgSiO_3$:Mn, $Ca_{10}(PO_4)_6(F,Cl)$:Sb,Mn, $(SrMg)_2P_2O_7$:Eu, $SrMg_2P_2O_7$:Sn, BaFCl: Eu, $Zn_2SiO_4$:Mn, $(Zn,Mg)F_2$:Mn, $Y_2O_3$:Eu, $YVO_4$:Eu, $Y(P,V)O_4$:Eu, $Y_2SiO_5$:Ce,Tb, $Y_2O_2S$:Eu, $Y_2O_2S$:Tb, $La_2O_2S$:Tb, $Gd_2O_2S$:Tb, LaOBr:Tb, ZnO:Zn, ZnS:Mn, ZnS:Ag, ZnS/CdS:Ag, ZnS:Cu,Al, ZnSe:Mn, ZnSe:Ag und ZnSe:Cu.

Da die erfindungsgemäße Folie vorzugsweise im Wesentlichen transparent sein soll, werden die Komponenten der Gruppe D in maximal solchen Mengen verwendet, dass die Folie wenigstens 80 % der auftreffenden Strahlung mit

einer Wellenlänge von 350 bis 750 nm transmittiert. Mit der Komponente D wird der Folie gewünschtenfalls ein Farbstich verliehen. Um eine möglichst große Transparenz zu gewährleisten, werden als Verbindungen der Komponente D vorzugsweise solche mit einer Partikelgröße von maximal 20 nm eingesetzt.

Als Komponente E der Licht-, Hitze- und/oder Oxidationsstabilisatoren sind beispielsweise zu nennen alkylierte Monophenole, wie 2,6-Di-tert-butyl-4-methylphenol, 2-Tert-butyl-4,6-dimethylphenol, 2,6-Di-tert-butyl-4-ethylphenol, 2,6-Di-tert-butyl-4-n-butylphenol, 2,6-Di-tert-butyl-4-isobutylphenol, 2,6-Dicyclopentyl-4-methylphenol, 2-(α-Methylcyclohexyl)-4,6-dimethylphenol, 2,6-Dioctadecyl-4-methylphenol, 2,4,6-Tricyclohexylphenol, 2,6-Di-tert-butyl-4-methoxymethylphenol, Nonylphenole, welche eine lineare oder verzweigte Seitenkette besitzen, beispielsweise 2,6-Dinonyl-4-methylphenol, 2,4-Dimethyl-6-(1'-methylundec-1'-yl)-phenol, 2,4-Dimethyl-6-(1'-methylheptadec-1'-yl)-phenol, 2,4-Dimethyl-6-(1'-methyltridec-1'-yl)phenol und Mischungen dieser Verbindungen, Alkylthiomethylphenole wie 2,4-Dioctylthiomethyl-6-tert-butylphenol, 2,4-Dioctylthiomethyl-6-methylphenol, 2,4-Dioctylthiomethyl-6-ethylphenol und 2,6-Didodecylthiomethyl-4-nonylphenol, Hydrochinone und alkylierte Hydrochinone wie 2,6-Di-tert-butyl-4-methoxyphenol, 2,5-Di-tert-butylhydrochinon, 2,5-Di-tertamylhydrochinon, 2,6-Diphenyl-4-octadecyloxyphenol, 2,6-Di-tert-butylhydrochinon, 2,5-Di-tert-butyl-4-hydroxyanisol, 3,5-Di-tert-butyl-4-hydroxyanisol, 3,5-Di-tert-butyl-4-hydroxyphenylstearat und Bis-(3,5-di-tert-butyl-4-hydroxyphenyl)adipat, Tocopherole wie α-Tocopherol, β-Tocopherol, γ-Tocopherol, δ-Tocopherol und Mischungen dieser Verbindungen, sowie Tocopherolderivate, wie beispielsweise Tocopherylacetat, -succinat, -nicotinat und -polyoxyethylensuccinat ("Tocofersolat"), hydroxylierte Diphenylthioether wie 2,2'-Thiobis(6-tert-butyl-4-methylphenol), 2,2'-Thio-bis(4-octylphenol), 4,4'-Thiobis(6-tert-butyl-3-methylphenol), 4,4'-Thiobis(6-tert-butyl-2-methylphenol), 4,4'-Thiobis-(3,6-di-sec-amylphenol) und 4,4'-Bis-(2,6-dimethyl-4-hydroxyphenyl)disulfid, Alkylidenbisphenole wie 2,2'-Methylenbis(6-tert-butyl-4-methylphenol), 2,2'-Methylenbis-(6-tert-butyl-4-ethylphenol), 2,2'-Methylenbis [4-methyl-6-(α-methylcyclohexyl)phenol], 2,2'-Methylenbis(4-methyl-6-cyclohexylphenol), 2,2'-Methylenbis(6-nonyl-4-methylphenol), 2,2'-Methylenbis(4,6-di-tert-butylphenol), 2,2-Ethylidenbis(4,6-di-tert-butylphenol), 2,2'-Ethylidenbis(6-tert-butyl-4-isobutylphenol), 2,2'-Methylenbis[6-(α-methylbenzyl)-4-nonylphenol], 2,2'-Methylenbis[6-(α,α-dimethylbenzyl)-4-nonylphenol], 4,4'-Methylenbis(2,6-di-tert-butylphenol), 4,4'-Methylenbis-(6-tert-butyl-2-methylphenol), 1,1-Bis(5-tert-butyl-4-hydroxy-2-methylphenyl)butan, 2,6-Bis(3-tert-butyl-5-methyl-2-hydroxybenzyl)-4-methylphenol, 1,1,3-Tris (5-tert-butyl-4-hydroxy-2-methylphenyl)butan, 1,1-Bis(5-tert-butyl-4-hydroxy-2-methyl-phenyl)-3-n-dodecylmercaptobutan, Ethylenglycolbis[3,3-bis(3'-tertbutyl-4'-hydroxyphenyl)butyrat], Bis(3-tert-butyl-4-hydroxy-5-methylphenyl)dicyclopentadien, Bis[2-(3'-tert-butyl-2'-hydroxy-5'-methylbenzyl)-6-tert-butyl-4-methylphenyl]-terephthalat, 1,1-Bis(3,5-dimethyl-2-hydroxyphenyl)butan, 2,2-Bis-(3,5-di-tert-butyl-4-hydroxyphenyl)propan, 2,2-Bis-(5-tert-butyl-4-hydroxy-2-methylphenyl)-4-n-dodecylmercaptobutan und 1,1,5,5-Tetrakis-(5-tert-butyl-4-hydroxy-2-methylphenyl)pentan, O-, N- und S-Benzylverbindungen wie 3,5,3',5'-Tetra-tert-butyl-4,4'-dihydroxydibenzylether, Octadecyl-4-hydroxy-3,5-dimethylbenzylmercaptoacetat, Tridecyl-4-hydroxy-3,5-di-tert-butylbenzylmercaptoacetat, Tris(3,5-di-tert-butyl-4-hydroxybenzyl)-amin, Bis(4-tert-butyl-3-hydroxy-2,6-dimethylbenzyl)dithioterephthalat, Bis(3,5-di-tert-butyl-4-hydroxybenzyl) sulfid und Isooctyl-3,5-di-tert-butyl-4- hydroxybenzylmercaptoacetat, aromatische Hydroxybenzylverbindungen wie 1,3,5-Tris-(3,5-di-tert-butyl-4-hydroxybenzyl)-2,4,6-trimethylbenzol, 1,4-Bis(3,5-di-tert-butyl-4-hydroxybenzyl)-2,3,5,6-tetramethylbenzol und 2,4,6-Tris(3,5-di-tert-butyl-4-hydroxybenzyl)phenol,

Triazinverbindungen wie 2,4-Bis(octylmercapto)-6-(3,5-di-tert-butyl-4-hydroxyanilino)-1,3,5-triazin, 2-Octylmercapto-4,6-bis(3,5-di-tert-butyl-4-hydroxyanilino)-1,3,5-triazin, 2-Octylmercapto-4,6-bis(3,5-di-tert-butyl-4-hydroxyphenoxy)-1,3,5-triazin, 2,4,6-Tris(3,5-di-tert-butyl-4-hydroxyphenoxy)-1,2,3-triazin, 1,3,5-Tris(3,5-di-tert-butyl-4-hydroxybenzyl)isocyanurat, 1,3,5-Tris(4-tert-butyl-3-hydroxy-2,6-dimethylbenzyl)isocyanurat, 2,4,6-Tris(3,5-di-tert-butyl-4-hydroxyphenylethyl)-1,3,5-triazin, 1,3,5-Tris-(3,5-di-tert-butyl-4-hydroxyphenylpropionyl)-hexahydro-1,3,5-triazin, 1,3,5-Tris(3,5-dicyclohexyl-4-hydroxybenzyl)-isocyanurat und 1,3,5-Tris(2-hydroxyethyl)isocyanurat, Benzylphosphonate wie Dimethyl-2,5-di-tert-butyl-4-hydroxybenzylphosphonat, Diethyl-3,5-di-tert-butyl-4-hydroxybenzylphosphonat, Dioctadecyl-3,5-di-tert-butyl-4-hydroxybenzylphosphonat und Dioctadecyl-5-tert-butyl-4-hydroxy-3-methylbenzylphosphonat, Acylaminophenole wie 4-Hydroxylauroylanilid, 4-Hydroxystearoylanilid und Octyl-N-(3,5-di-tert-butyl-4-hydroxyphenyl)carbamat, Propion- und Essigsäureester beispielsweise von ein- oder mehrwertigen Alkoholen wie Methanol, Ethanol, n-Octanol, Isooctanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)isocyanurat, N,N'-Bis(hydroxyethyl)oxamid, 3-Thiaundecanol, 3-Thiapentadecanol, Trimethylhexandiol, Trimethylolpropan und 4-Hydroxymethyl-l-phospha-2,6,7-trioxabicyclo[2.2.2]-octan, Propionsäureamide basierend auf Aminderivaten wie beispielsweise N, N'-Bis(3,5-di-tert-butyl-4-hydroxyphenylpropionyl)hexamethylendiamin, N,N'-Bis(3,5-di-tert-butyl-4-hydroxyphenylpropionyl)trimethylendiamin und N,N'-Bis(3,5-di-tert-butyl-4-hydroxyphenylpropionyl)hydrazin, Ascorbinsäure (Vitamin C) und Ascorbinsäurederivate wie beispielsweise Ascorbylpalmitat, -laurat und -stearat sowie Ascorbylsulfat und -phosphat, Antioxidantien auf Basis von Aminverbindungen wie N,N'-Di-isopropyl-p-phenylendiamin, N,N'-Di-sec-butyl-p-phenylendiamin, N,N'-Bis(1,4-dimethylpentyl)-p-phenylendiamin, N,N'-Bis(1-ethyl-3-methylpentyl)-p-phenylendiamin, N,N'-Bis(1-methylheptyl)-p-phenylendiamin, N,N'-Dicyclohexyl-p-phenylendiamin, N,N'-Diphenyl-p-phenylendiamin, N,N'-Bis-(2-naphthyl)-p-phenylendiamin, N-Isopropyl-N'-phenyl-p-phenylendiamin, N-(1,3-Dimethylbutyl)-N'-phenyl-p-phenylendiamin, N-(1-Methylheptyl)-N'-phenyl-p-phenylendiamin, N-Cyclohexyl-N'-phenyl-p-phenylendiamin, 4-(p-Toluolsulfamoyl)-diphenylamin, N,N'-Dimethyl-N,N'-di-sec-butyl-p-phenylendiamin, Diphenylamin, N-Allyldiphenylamin, 4-Isopropoxydiphenylamin, N-Phenyl-1-naphthylamin, N-(4-Tert-octylphenyl)-1-naphthylamin, N-Phenyl-2-naphthylamin, octylsubstituiertes Diphenylamin, wie beispielsweise p,p'-Di-tert-octyldiphenylamin, 4-n-Butylaminophenol, 4-Butyrylaminophenol, 4-Nonanoylaminophenol, 4-Dodecanoylaminophenol, 4-Octadecanoylaminophenol, Bis[4-methoxyphenyl) amin, 2,6-Di-tert-butyl-4-dimethylaminomethylphenol, 2,4-Diaminodiphenylmethan, 4,4'-Diaminodiphenylmethan, N,N,N',N'-Tetramethyl-4,4'-di-aminodiphenylmethan, 1,2-Bis[(2-methylphenyl)-amino]ethan, 1,2-Bis(phenylamino)propan, (o-Tolyl)biguanid, Bis[4-(1',3'-dimethylbutyl)phenyl]amin, tert-Octyl substituiertes N-Phenyl-1-naphthylamin, eine Mischung von mono- und dialkyliertem Tert-butyl/Tert-octyldiphenylamin, eine Mischung von mono-und dialkyliertem Nonyldiphenylamin, eine Mischung von mono- und dialkyliertem Dodecyldiphenylamin, eine Mischung von mono- und dialkyliertem Isopropyl/ Isohexyldiphenylamin, eine Mischung von mono- und dialkyliertem Tert-butyldiphenylamin, 2,3-Dihydro-3,3-dimethyl-4H-1,4-benzothiazin, Phenothiazin, eine Mischung von mono- und dialkyliertem Tert-butyl/Tert-octylphenothiazin, eine Mischung von mono- und dialkyliertem Tert-octylphenothiazin, N-Allylphenothiazin, N,N,N',N'-Tetraphenyl-1,4-diaminobut-2-en, N,N-Bis(2,2,6,6-tetramethyl-piperidin-4-yl)-hexamethylendiamin, Bis(2,2,6,6-tetramethylpiperidin-4-yl)sebacat, 2,2,6,6-Tetramethylpiperidin-4-on und 2,2,6,6-Tetramethylpiperidin-4-ol, Phosphite und Phosphonite wie Triphenylphosphit, Diphenylalkylphosphit, Phenyldialkylphosphit, Tris(nonylphenyl)phosphit, Trilaurylphosphit, Trioctadecylphosphit, Distearylphentaerythritoldiphosphit, Tris(2,4-di-tert-butylphenyl)phosphit, Diisodecylpentaerythritoldiphosphit, Bis(2,4-di-tert-butylphenyl)pentaerythritoldiphosphit, Bis(2,6-di-tert-butyl-4-methylphenyl)-pentaerythritoldiphosphit, Diisodecyloxypentaerythritoldiphosphit, Bis(2,4-di-tert-butyl-6-methylphenyl)pentaerythritoldiphosphit, Bis(2,4,6-tris-(tert-butylphenyl))pentaerythritoldiphosphit, Tristearylsorbitoltriphosphit, Tetrakis(2,4-di-tert-butylphenyl)-4,4'-biphenylendiphosphonit, 6-Isooctyloxy-2,4,8,10-tetra-tertbutyl-12H-dibenz-[d,g]-1,3,2-dioxaphosphocin, 6-Fluoro-2,4,8,10-tetra-tert-butyl-12-methyl-dibenz[d,g]-1,3,2-dioxaphosphocin, Bis(2,4-di-tert-butyl-6-methylphenyl)methylphosphit und Bis(2,4-di-tert-butyl-6- methylphenyl)ethylphosphit, 2-(2'-Hydroxyphenyl)-benzotriazole wie 2-(2'-Hydroxy-5'-methylphenyl)-benzotriazol, 2-(3',5'-Di-tert-butyl-2'-hydroxyphenyl)-benzotriazol, 2-(5'-Tert-butyl-2'-hydroxyphenyl)benzotriazol, 2-(2'-Hydroxy-5'-(1,1,3,3-tetramethylbutyl)phenyl)benzotriazol, 2-(3',5'-Di-tert-butyl-2'-hydroxyphenyl)-5-chloro-benzotriazol, 2-(3'-Tert-butyl-2'-hydroxy-5'-methylphenyl)-5-chloro-benzotriazol, 2-(3'-Sec-butyl-5'-tert-butyl-2'-hydroxyphenyl)-benzotriazol, 2-(2'-Hydroxy-4'-octyloxyphenyl)-benzotriazol, 2-(3',5'-Ditert-amyl-2'-hydroxyphenyl)-benzotriazol, 2-(3',5'-Bis-(α,α-dimethylbenzyl)-2'-hydroxyphenyl)-benzotriazol, eine Mischung von 2-(3'-Tert-butyl-2'-hydroxy-5'-(2-octyloxycarbonylethyl)phenyl)-5-chloro-benzotriazol, 2-(3'-Tert-butyl-5'-[2-(2-ethylhexyloxy)-carbonylethyl]-2'-hydroxyphenyl)-5-chloro-benzotriazol, 2-(3'-Tert-butyl-2'-hydroxy-5'-(2-methoxycarbonylethyl) phenyl)-5-chlorobenzotriazol, 2-(3'-Tert-butyl-2'-hydroxy-5'-(2-methoxycarbonylethyl)phenyl)-benzotriazol, 2-(3'-Tert-butyl-2'-hydroxy-5'-(2-octyloxycarbonylethyl)phenyl)-benzotriazol, 2-(3'-Tert-butyl-5'-[2-(2-ethylhexyloxy)carbonylethyl]-2'-hydroxyphenyl)-benzotriazol, 2-(3'-Dodecyl-2'-hydroxy-5'-methylphenyl)-benzotriazol und 2-(3'-Tert-butyl-2'-hydroxy-5'-(2-isooctyloxycarbonylethyl)-phenylbenzotriazol, 2,2'-Methylen-bis[4-(1,1,3,3-tetramethylbutyl)-6-benzotriazol-2-ylphenol]; das Produkt der vollständigen Veresterung von 2-[3'-Tert-butyl-5'-(2-methoxycarbonylethyl)-2'-hydroxyphenyl]-2H-benzotriazol mit Polyethylenglycol 300; $[R-CH_2CH_2-COO(CH_2)_3]_2$, mit R = 3'-Tert-butyl-4'-hydroxy-5'-2H-benzotriazol-2-ylphenyl], schwefelhaltige Peroxidfänger bzw. schwefelhaltige Antioxidantien wie z. B. Ester der 3,3'-Thiodipropionsäure, beispielsweise die Lauryl-, Stearyl-, Myristyl- oder Tridecylester, Mercaptobenzimidazol oder das Zinksalz von 2-Mercaptobenzimidazol, Zinkdibutyldithiocarbamat, Dioctadecyldisulfid und Pentaerythritoltetrakis(β-dodecylmercapto)-propionat, 2-Hydroxybenzophenone wie beispielsweise die 4-Hydroxy-, 4-Methoxy-, 4-Octyloxy-, 4-Decycloxy-, 4-Dodecyloxy-, 4-Benzyloxy-, 4,2',4'-Trihydroxy- und 2'-Hydroxy-4,4'-dimethoxy-Derivate, Ester der unsubstituierten und substituierten Benzoesäure wie beispielsweise 4-Tertbutylphenylsalicylat, Phenylsalicylat, Octylphenylsalicylat, Dibenzoylresorcinol, Bis(4-tert-butylbenzoyl)resorcinol, Benzoylresorcinol, 2,4-Di-tert-butylphenyl-3,5-di-tert-butyl-4-hydroxybenzoat, Hexadecyl-3,5-di-tert-butyl-4-hydroxybenzoat, Octadecyl-3,5-di-tert-butyl-4-hydroxybenzoat und 2-Methyl-4,6-di-tert-butylphenyl-3,5-di-tert-butyl-4-hydroxybenzoat, Acrylate wie beispielsweise Ethyl-α-cyano-β,β-diphenylacrylat, Isooctyl-α-cyano-β,β-diphenylacrylat, Methyl-α-methoxycarbonylcinnamat, Methyl-α-cyano-β-methyl-p-methoxycinnamat, Butyl-α-cyano-β-methyl-p-methoxy-cinnamat und Methyl-α-methoxycarbonyl-p-methoxycinnamat, sterisch gehinderte Amine wie beispielsweise Bis(2,2,6,6-tetramethylpiperidin-4-yl)-sebacat, Bis(2,2,6,6-tetramethylpiperidin-4-yl)succinat, Bis(1,2,2,6,6-pentamethylpiperidin-4-yl)sebacat, Bis(1-octyloxy-2,2,6,6-tetramethylpiperidin-4-yl)sebacat, Bis(1,2,2,6,6-pentamethylpiperidin-4-yl)-n-butyl-3,5-di-tert-butyl-4-hydroxybenzylmalonat, das Kondensationsprodukt aus 1-(2-Hydroxyethyl)-2,2,6,6-tetramethyl-4-hydroxypiperidin und Bernsteinsäure, das Kondensationsprodukt aus N,N'-Bis(2,2,6,5-tetramethylpiperidin-4-yl)hexamethylendiamin und 4-Tert-octylamino-2,6-dichloro-1,3,5-triazin, Tris(2,2,6,6-tetramethylpiperidin-4-yl)nitrilotriacetat, Tetrakis(2,2,6,6-tetramethylpiperidin-4-yl)-1,2,3,4-butantetracarboxylat, 1,1'-(1,2-Ethylen)-bis(3,3,5,5-tetramethylpiperazinon), 4-Benzoyl-2,2,6,6-tetramethylpiperidin, 4-Stearyloxy-2,2,6,6-tetramethylpiperidin, Bis(1,2,2,6,6-pentamethylpiperidin-4-yl)-2-n-butyl-2-(2-hydroxy-3,5-di-tert-butylbenzyl)malonat, 3-n-Octyl-7,7,9,9-tetramethyl-1,3,8-triazaspiro[4.5]decan-2,4-dion, Bis(1-octyloxy-2,2,6,6-tetramethylpiperidin-4-yl)sebacat, Bis(1-octyloxy-2,2,6,5-tetramethylpiperidin-4-yl)succinat, das Kondensationsprodukt aus N,N'-Bis-(2,2,6,6-tetramethylpiperidin-4-yl)hexamethylendiamin und 4-Morpholino-2,6-dichloro-1,3,5-triazin, das Kondensationsprodukt aus 2-Chloro-4,6-bis(4-n-butylamino-2,2,6,6-tetramethylpiperidin-4-yl)-1,3,5-triazin und 1,2-Bis(3-aminopropylamino)ethan, das Kondensationsprodukt aus 2-Chloro-4,6-di-(4-n-butylamino-1,2,2,6,6-pentamethylpiperidin-4-yl)-1,3,5-triazin und 1,2-Bis-(3-aminopropylamino)ethan, 8-Acetyl-3-dodecyl-7,7,9,9-tetramethyl-1,3,8-triazaspiro [4.5]-decan2,4-dion, 3-Dodecyl-1-(2,2,6,6-tetramethylpiperidin-4-yl)pyrrolidin-2,5-dion, 3-Dodecyl-1-(1,2,2,6,6-pentamethylpiperidin-4-yl)pyrrolidin-2,5-dion, eine Mischung aus 4-Hexadecyloxy- und 4-Stearyloxy-2,2,6,6-tetramethylpiperidin, das Kondensationsprodukt aus N,N'-Bis-(2,2,6,6-tetramethylpiperidin-4-yl)-hexamethylendiamin und 4-Cyclohexylamino-2,6-dichloro-1,3,5-triazin, das Kondensationsprodukt aus 1,2-Bis(3-aminopropylamino)-ethan und 2,4,6-Trichloro-1,3,5-triazin, 4-Butylamino-2,2,6,6-tetramethylpiperidin, N-(2,2,6,6-Tetramethylpiperidin-4-yl)-n-dodecylsuccinimid, N-(1,2,2,6,6-Pentamethylpiperidin-4-yl)-n-dodecylsuccinimid, 2-Undecyl-7,7,9,9-tetramethyl-I-oxa-3,8-diaza-4-oxo-spiro[4.5]-decan, das Kondensationsprodukt aus 7,7,9,9-Tetramethyl-2-cycloundecyl-I-oxa-3,8-diaza-4-oxospiro-[4.5]decan und Epichlorhydrin, die Kondensationsprodukte aus 4-Amino-2,2,6,6-tetramethylpiperidin mit Tetramethylolacetylendiharnstoffen und Poly(methoxypropyl-3-oxy)-[4(2,2,6,6-tetramethyl)piperidinyl]siloxan, Oxamide wie beispielsweise 4,4'-Dioctyloxyoxanilid, 2,2'-Diethoxyoxanilid, 2,2'-Dioctyloxy-5,5'-di-tert-butoxanilid, 2,2'-Didodecyloxy-5,5'-di-tert-butoxanilid, 2-Ethoxy-2'-ethyloxanilid, N,N'-Bis(3-dimethylaminopropyl)oxamid, 2-Ethoxy-5-tert-butyl-2'-ethoxanilid und dessen Mischung mit 2-Ethoxy-2'-ethyl-5,4'-ditert-butoxanilid sowie Mischungen von ortho-, para-Methoxy-disubstituierten Oxaniliden und Mischungen von ortho- und para-Ethoxy disubstituierten Oxaniliden und 2-(2-Hydroxyphenyl)-1,3,5-triazine wie beispielsweise 2,4,6-Tris-(2-hydroxy-4-octyloxyphenyl)-1,3,5-triazin, 2-(2-Hydroxy-4-octyl-oxyphenyl)-4,6-bis(2,4-dimethylphenyl)-1,3,5-triazin, 2-(2,4-Dihydroxyphenyl)-4,6-bis(2,4-dimethylphenyl)-1,3,5-triazin, 2,4-Bis(2-hydroxy-4-propyloxyphenyl)-6-(2,4-dimethylphenyl)-1,3,5-triazin, 2-(2-Hydroxy-4-octyloxyphenyl)-4,6-bis(4-methyl-5 phenyl)-1,3,5-triazin, 2-(2-Hydroxy-4-dodecyloxyphenyl)-4,6-bis(2,4-dimethylphenyl)-1,3,5-triazin, 2-(2-Hydroxy-4-tridecyloxyphenyl)-4,6-bis(2,4-dimethylphenyl)-1,3,5-triazin, 2-[2-Hydroxy-4-(2-hydroxy-3-butyloxy-propoxy)-phenyl]-4,6-bis(2,4-dimethyl)-1,3,5-triazin, 2-[2-Hydroxy-4-(2-hydroxy-3-octyloxy-propoxy)phenyl]-4,6-bis(2,4-dimethyl)-1,3,5-triazin, 2-[4-(Dodecyloxy/tridecyloxy-2-hydroxypropoxy)-2-hydroxy-phenyl]-4,6-bis(2,4dimethylphenyl)-1,3,5- triazin, 2-[2-hydroxy-4-(2-hydroxy-3-dodecyloxy-propoxy)phenyl]-4,6-bis-(2,4-dimethylphenyl)-1,3,5-triazin, 2-(2-Hydroxy-4-hexyloxyphenyl)-4,6-diphenyl-1,3,5-triazin, 2-(2-Hydroxy-4-methoxyphenyl)-4,6-diphenyl-1,3,5-triazin, 2,4,6-Tris[2-hydroxy-4-(3-butoxy-2-hydroxy-propoxy)phenyl]-1,3,5-triazin und 2-(2-Hydroxyphenyl)-4-(4-methoxyphenyl)-6-phenyl-1,3,5-triazin.

Als Komponente F der IR-Absorber werden Verbindungen verwendet, die im Spektralbereich des Infrarot, d.h. von >750 nm, z.B. von 751 nm, bis 1 mm eine oder mehrere Absorptionsbanden zeigen. Bevorzugt werden Verbindungen verwendet, die im Spektralbereich des nahen Infrarot (NIR), d. h. von > 750 (z. B. 751) bis 2000 nm, und gegebenenfalls zusätzlich auch im sichtbaren Spektralbereich, insbesondere von 550 bis 750 nm, eine Absorptionsbande zeigen. Wenn die Verbindungen sowohl im IR- als auch im sichtbaren Spektralbereich absorbieren, zeigen sie vorzugsweise das größte Absorptionsmaximum im IR-Bereich und ein kleineres Maximum (häufig in Form einer sogenannten Absorptionsschulter) im sichtbaren Bereich. In einer besonderen Ausführungsform zeigen die Verbindungen der Komponente F darüber hinaus auch eine Fluoreszenz. Fluoreszenz ist der Übergang eines durch Absorption von elektromagnetischer Strahlung (meist sichtbares Licht, UV-Strahlung, Röntgenstrahlung oder Elektronenstrahlung) angeregten Systems in einen Zustand niedrigerer Energie durch spontane Emission von Strahlung gleicher (Resonanzfluoreszenz) oder längerer Wellenlänge. Bevorzugte Verbindungen der Komponente F zeigen, wenn sie fluoreszieren, eine Fluoreszenz im IR-Spektralbereich, vorzugsweise im NIR.

Solche Verbindungen sind beispielsweise ausgewählt unter Naphthalinen, Anthracenen, Phenanthrenen, Tetracenen, Perylenen, Terrylenen, Quaterrylenen, Pentarylenen, Hexarylenen, Anthrachinonen, Indanthronen, Acridinen, Carbazolen, Dibenzofuranen, Dinaphthofuranen, Benzimidazolen, Benzthiazolen, Phenazinen, Dioxazinen, Chinacridonen, Metallphthalocyaninen, Metallnaphthalocyaninen, Metallporphyrinen, Cumarinen, Dibenzofuranonen, Dinaphthofuranonen, Benzimidazolonen, Indigoverbindungen, Thioindigoverbindungen, Chinophthalonen, Naphthochinophthalonen und Diketopyrrolopyrrolen. Besonders bevorzugte IR-Strahlung absorbierende und gegebenenfalls fluoreszierende Verbindungen der Komponente F sind ausgewählt unter Naphthalinen, Anthracenen, Phenanthrenen, Tetracenen, Perylenen, Terrylenen, Quaterrylenen, Pentarylenen und Hexarylenen, stärker bevorzugt unter Perylenen, Terrylenen und Quaterrylenen und insbesondere unter Terrylenen und Quaterrylenen. Speziell handelt es sich um ein Quaterrylen. Geeignete Verbindungen sind in der WO 2008/012292 beschrieben, worauf hiermit in vollem Umfang Bezug genommen wird.

Wie eingangs erläutert, führt die Selektivreflexion von zirkular polarisiertem Licht der chiral nematischen Phase dazu, dass maximal 50 % des mit der Reflexionswellenlänge eingestrahlten Lichtes reflektiert werden. Der Rest geht ohne Wechselwirkung mit dem Medium hindurch. Um einen möglichst hohen Reflexionsgrad zu erzielen, umfasst daher die erfindungsgemäße Folie in einer bevorzugten Ausführungsform wenigstens zwei flüssigkristalline Schichten in gehärteter Form, die im Wellenlängenbereich des Infrarot reflektieren, wobei die wenigstens zwei Schichten wenigstens ein Schichtenpaar bilden, in welchem zwei einen ähnlichen Wellenlängenbereich des Infrarot reflektieren und sich die zwei Schichten dieses Schichtenpaares in ihrer Chiralität unterschieden. Vorzugsweise umfasst die erfindungsgemäße Folie eine durch 2 teilbare Anzahl cholesterischer (= flüssigkristalliner) Schichten, wie z.B. 2, 4, 6, 8 oder 10 Schichten, wobei immer zwei Schichten ein Schichtenpaar bilden, in welchem diese Schichten zwar in einem ähnlichen Wellenlängenbereich des Infrarot reflektieren, aber eine entgegengesetzte Chiralität aufweisen.

"Einen ähnlichen Wellenlängenbereich des Infrarot reflektieren" bedeutet, dass die Ganghöhe der helikalen Überstrukturen in diesen Schichten im Wesentlichen gleich ist. "Im Wesentlichen gleich" bedeutet dabei, dass sich die Ganghöhen in den beiden Schichten um höchstens 6%, bevorzugt um höchstens 3% unterscheiden. Die Lagen der Maxima der beiden Reflexionsbanden unterscheiden sich um höchstens 40 nm, bevorzugt um höchstens 20 nm und insbesondere um höchstens 10 nm.

Im Rahmen der vorliegenden Erfindung soll der Begriff "Schichtenpaar" nicht einschränkend verstanden werden und soll insbesondere nicht bedingen, dass die zwei Schichten, die es bilden, benachbart sind. Die relative Lage solcher zweier Schichten innerhalb der Folie ist vielmehr im Wesentlichen unkritisch, und der Begriff Schichtenpaar bezeichnet nur die o.g. Bedingungen für ihre physikalischen Eigenschaften (im Wesentlichen gleiche Ganghöhe; entgegengesetzte Chiralität).

Wenn die erfindungsgemäße Folie mehr als ein wie oben definiertes cholesterisches Schichtenpaar enthält, ist es bevorzugt, dass diese weiteren Schichtenpaare jeweils in einem anderen Wellenlängenbereich des Infrarot reflektieren, d.h. alle Schichtenpaare Reflexionsmaxima mit jeweils anderen Wellenlängen aufweisen. Dabei befinden sich jedoch alle Reflexionsmaxima im Infrarot und vorzugsweise in den oben als bevorzugt angegebenen IR-Bereichen.

In einer alternativ bevorzugten Ausführungsform der Erfindung umfasst die erfindungsgemäße Folie wenigstens ein Schichtenpaar aus zwei flüssigkristallinen Schichten in gehärteter Form, wobei diese zwei Schichten jeweils in einem ähnlichen Wellenlängenbereichen des Infrarot reflektieren und die gleiche Chiralität aufweisen und wobei sich zwischen diesen zwei Schichten eine $\lambda/2$-Folie befindet. Auch in dieser Ausführungsform gilt: Wenn die erfindungsgemäße Folie mehr als ein wie eben definiertes cholesterisches Schichtenpaar enthält, ist es bevorzugt, dass diese weiteren Schichtenpaare jeweils in einem anderen Wellenlängenbereich des Infrarot reflektieren, d.h. alle Schichtenpaare Reflexionsmaxima mit jeweils anderen Wellenlängen aufweisen. Dabei befinden sich jedoch alle Reflexionsmaxima im Infrarot und vorzugsweise in den oben als bevorzugt angegebenen IR-Bereichen. Auch in diesem Zusammenhang soll der Begriff "Schichtenpaar" nicht einschränkend verstanden werden und soll insbesondere nicht bedingen, dass die zwei Schichten, die es bilden, benachbart sind. Die relative Lage solcher zweier Schichten innerhalb der Folie ist vielmehr im Wesentlichen unkritisch, und der Begriff Schichtenpaar bezeichnet nur die o.g. Bedingungen für ihre physikalischen Eigenschaften (im Wesentlichen gleiche Ganghöhe; gleiche Chiralität). In diesem Fall ist es jedoch bevorzugt, dass die zwei Schichten, die zusammen ein Schichtenpaar bilden, nur durch die $\lambda/2$-Folie und insbesondere nicht durch eine weitere flüssigkristalline Schicht mit unterschiedlichem Reflexionsbereich und/oder Chiralität getrennt werden. Natürlich kann sich jedoch zwischen den zwei Schichten des Schichtenpaars (außer der $\lambda/2$-Folie) eine Schicht ohne wesentliche optische Eigenschaften, z.B. eine Orientierungsschicht, befinden.

Wenn die erfindungsgemäße Folie Schichten mit unterschiedlichen Reflexionsmaxima enthält, so ist es bevorzugt, dass die Schichten relativ zueinander in der Reihenfolge zunehmender Wellenlängen der Reflexionsmaxima aufgebaut sind, d.h. zuerst kommt die Schicht mit der kürzesten Wellenlänge des Reflexionsmaximums, dann diejenige mit der zweitkürzesten Wellenlänge des Reflexionsmaximums, etc. Enthält die Folie zwei oder mehr Schichtenpaare aus Schichten gleicher Ganghöhe, aber entgegengesetzter Chiralität und sind diese nicht benachbart, so ist die Folie vorzugsweise so aufgebaut, dass erst alle Schichten der einen Chiralität in der Reihenfolge zunehmender Wellenlängen der Reflexionsmaxima und dann alle Schichten der anderen Chiralität ebenfalls in der Reihenfolge zunehmender Wellenlängen der Reflexionsmaxima aufeinanderfolgen. Zur Veranschaulichung sind nachfolgend einige Beispiele für solchermaßen bevorzugte Reihenfolgen aufgeführt, wobei optionale Schichten, wie Trägerfolie, Orientierungsschicht etc. nicht berücksichtigt sind:

| | |
|---|---|
| RZPL-RS; $\lambda_R 1$ | LZPL-RS; $\lambda_R 1$ |
| LZPL-RS; $\lambda_R 1$ | RZPL-RS; $\lambda_R 1$ |
| RZPL-RS; $\lambda_R 2$ | LZPL-RS; $\lambda_R 2$ |
| LZPL-RS; $\lambda_R 2$ | RZPL-RS; $\lambda_R 2$ |
| RZPL-RS; $\lambda_R 3$ | LZPL-RS; $\lambda_R 3$ |
| LZPL-RS; $\lambda_R 3$ | RZPL-RS; $\lambda_R 3$ |
| etc. | etc. |

| | |
|---|---|
| RZPL-RS; $\lambda_R 1$ | LZPL-RS; $\lambda_R 1$ |
| RZPL-RS; $\lambda_R 2$ | LZPL-RS; $\lambda_R 2$ |

(fortgesetzt)

| | |
|---|---|
| RZPL-RS; $\lambda_R3$ | LZPL-RS; $\lambda_R3$ |
| LZPL-RS; $\lambda_R1$ | RZPL-RS; $\lambda_R1$ |
| LZPL-RS; $\lambda_R2$ | RZPL-RS; $\lambda_R2$ |
| LZPL-RS; $\lambda_R3$ | RZPL-RS; $\lambda_R3$ |
| etc. | etc. |

| | |
|---|---|
| RZPL-RS; $\lambda_R1$ | LZPL-RS; $\lambda_R1$ |
| $\lambda$/2-Folie | $\lambda$/2-Folie |
| RZPL-RS; $\lambda_R1$ | LZPL-RS; $\lambda_R1$ |
| RZPL-RS; $\lambda_R2$ | LZPL-RS; $\lambda_R2$ |
| $\lambda$/2-Folie | $\lambda$/2-Folie |
| RZPL-RS; $\lambda_R2$ | LZPL-RS; $\lambda_R2$ |
| RZPL-RS; $\lambda_R3$ | LZPL-RS; $\lambda_R3$ |
| $\lambda$/2-Folie | $\lambda$/2-Folie |
| RZPL-RS; $\lambda_R3$ | LZPL-RS; $\lambda_R3$ |
| etc. | etc. |

Dabei bedeutet RZPL-RS rechtszirkular polarisiertes Licht reflektierende Schicht und LZPL-RS linkszirkular polarisiertes Licht reflektierende Schicht; $\lambda_R1$ ist die kürzeste Wellenlänge des Reflexionsmaximums, $\lambda_R2$ ist die zweitkürzeste und $\lambda_R3$ die drittkürzeste Wellenlänge des Reflexionsmaximums.

Wenn die erfindungsgemäße Folie auch ein oder mehrere Reflexionsmaxima im sichtbaren Wellenlängenbereich aufweist, so ist es bevorzugt, dass die Folie wenigstens eine Schicht umfasst, bei der es sich um eine flüssigkristalline Schicht in gehärteter Form handelt, die im Wellenlängenbereich des sichtbaren Lichts reflektiert (Schicht (f)). Schicht (f) kann im Wesentlichen wie Schicht (a) aufgebaut sein, wobei sich natürlich die Ganghöhen unterscheiden müssen. Bezüglich der geeigneten Zusammensetzung solcher Schichten wird dementsprechend auf die obigen Ausführungen zu Schicht (a), insbesondere zu Schicht (a.1), Bezug genommen. Wie bereits ausgeführt, unterscheiden sich im Falle von Zusammensetzungen (f.1) solche Schichten von Schichten mit einem Reflexionsmaximum im IR-Bereich (a.1) durch die Menge an chiralem Monomer.

Wenn die erfindungsgemäße Folie zwei oder mehrere Schichten umfasst, die im Wellenlängenbereich des sichtbaren Lichts reflektieren, so ist es bevorzugt, dass die Folie keine Schichtenpaare aus Schichten gleicher Ganghöhe, aber entgegen gesetzter Chiralität umfasst, die im Wellenlängenbereich des sichtbaren Lichts reflektieren. Besonders bevorzugt enthält die Folie nur eine Schicht, die im Wellenlängenbereich des sichtbaren Lichts reflektiert, oder mehrere Schichten, die im Wellenlängenbereich des sichtbaren Lichts reflektieren, wobei in diesem Fall die Schichten entweder gleiche Chiralität und/oder unterschiedliche Ganghöhen aufweisen.

Zur Veranschaulichung sind nachfolgend einige Beispiele für bevorzugte Reihenfolgen in Folien aufgeführt, die eine Schicht umfassen, die im sichtbaren Wellenlängenbereich wenigstens ein Reflexionsmaximum besitzt, wobei optionale Schichten, wie Trägerfolie, Orientierungsschicht etc. nicht berücksichtigt sind:

| | |
|---|---|
| RZPL- oder LZPL-RS; $\lambda_R$vis | RZPL- oder LZPL-RS; $\lambda_R$vis |
| RZPL-RS; $\lambda_R1$ | LZPL-RS; $\lambda_R1$ |
| LZPL-RS; $\lambda_R1$ | RZPL-RS; $\lambda_R1$ |
| RZPL-RS; $\lambda_R2$ | LZPL-RS; $\lambda_R2$ |
| LZPL-RS; $\lambda_R2$ | RZPL-RS; $\lambda_R2$ |
| RZPL-RS; $\lambda_R3$ | LZPL-RS; $\lambda_R3$ |
| LZPL-RS; $\lambda_R3$ | RZPL-RS; $\lambda_R3$ |

(fortgesetzt)

| | |
|---|---|
| etc. | etc. |

| | |
|---|---|
| RZPL- oder LZPL-RS; $\lambda_R$vis | RZPL- oder LZPL-RS; $\lambda_R$vis |
| RZPL-RS; $\lambda_R$1 | LZPL-RS; $\lambda_R$1 |
| RZPL-RS; $\lambda_R$2 | LZPL-RS; $\lambda_R$2 |
| RZPL-RS; $\lambda_R$3 | LZPL-RS; $\lambda_R$3 |
| LZPL-RS; $\lambda_R$1 | RZPL-RS; $\lambda_R$1 |
| LZPL-RS; $\lambda_R$2 | RZPL-RS; $\lambda_R$2 |
| LZPL-RS; $\lambda_R$3 | RZPL-RS; $\lambda_R$3 |
| etc. | etc. |

| | |
|---|---|
| RZPL- oder LZPL-RS; $\lambda_R$1 | RZPL- oder LZPL-RS; $\lambda_R$1 |
| RZPL-RS; $\lambda_R$1 | LZPL-RS; $\lambda_R$1 |
| $\lambda$/2-Folie | $\lambda$/2-Folie |
| RZPL-RS; $\lambda_R$1 | LZPL-RS; $\lambda_R$1 |
| RZPL-RS; $\lambda_R$2 | LZPL-RS; $\lambda_R$2 |
| $\lambda$/2-Folie | $\lambda$/2-Folie |
| RZPL-RS; $\lambda_R$2 | LZPL-RS; $\lambda_R$2 |
| RZPL-RS; $\lambda_R$3 | LZPL-RS; $\lambda_R$3 |
| $\lambda$/2-Folie | $\lambda$/2-Folie |
| RZPL-RS; $\lambda_R$3 | LZPL-RS; $\lambda_R$3 |
| etc. | etc. |

Dabei bedeutet RZPL-RS rechtszirkular polarisiertes Licht reflektierende Schicht und LZPL-RS linkszirkular polarisiertes Licht reflektierende Schicht; $\lambda_R$1 ist die kürzeste Wellenlänge des Reflexionsmaximums, $\lambda_R$2 ist die zweitkürzeste, $\lambda_R$3 die drittkürzeste Wellenlänge des Reflexionsmaximums im IR und $\lambda_R$vis ist die Wellenlänge des Reflexionsmaximums im sichtbaren Spektralbereich.

Wenn die erfindungsgemäße Folie eine Trägerfolie enthält, ist die flüssigkristalline Schicht mit der kürzesten Wellenlänge des Reflexionsmaximums der Trägerfolie vorzugsweise am nächsten.

Die erfindungsgemäße Folie umfasst optional wenigstens eine Trägerfolie. In einer bevorzugten Ausführungsform umfasst sie eine Trägerfolie. Die Trägerfolie kann dabei einseitig oder beidseitig mit den übrigen Schichten beschichtet sein. Bezüglich des Begriffteils "Folie" wird auf die vorstehenden Ausführungen Bezug genommen. Der Begriffteil "Träger" bedingt, dass die Trägerfolie nicht nur selbsttragend ist, sondern auch die übrigen Schichten tragen kann, ohne zu reißen.

Geeignete Materialien, aus denen die Trägerfolie aufgebaut ist, umfassen Polyethylenterephthalat, Polyethylennaphthalat, Polyvinylbutyral, Polyvinylchlorid, Weichpolyvinylchlorid, Polymethylmethacrylat, Poly(ethylen-co-vinylacetat), Polycarbonat, Cellulosetriacetat, Polyethersulfon, Polyester, Polyamid, Polyolefine und Acrylharze. Bevorzugt sind hierunter Polyethylenterephthalat, Polyvinylbutyral, Polyvinylchlorid, Weichpolyvinylchlorid und Polymethylmethacrylat.

Bevorzugt ist die Trägerfolie biaxial orientiert.

In einer bevorzugten Ausführungsform umfasst die erfindungsgemäße Folie wenigstens eine Trägerfolie, besonders bevorzugt eine oder zwei Trägerfolien, und wenigstens eine, vorzugsweise eine, dieser Trägerfolien ist eine Adhäsionsfolie. Vorzugsweise bildet die Adhäsionsfolie die äußerste oder zweitäußerste Schicht der erfindungsgemäßen Folie, wobei in letzterem Fall die äußerste Schicht eine Schutzfolie ist, die unerwünschte Adhäsion der Adhäsionsfolie

mit der Umgebung bis zum gewünschten Zeitpunkt verhindert. Die adhäsive Seite der Folie ist dabei selbstverständlich nach außen, d.h. Entgegengesetzt den restlichen Folienschichten, gerichtet. Die Adhäsionsfolie ist vorzugsweise so gestaltet, dass sie klebstofffrei auf polaren Oberflächen haften kann. Polare Oberflächen sind beispielsweise Glas oder Kunststoff.

Die klebstofffreie Haftung auf polaren Oberflächen wird zum einen durch die Wahl eines geeigneten Materials gewährt. Geeignete Materialien sind thermoplastische Kunststoffe, insbesondere thermoplastische Polyolefine, Weich-PVC und Polymethylmethacrylat (PMMA). Während Weich-PVC und PMMA polar sind und damit die erforderlichen Eigenschaft für eine Haftung an polaren Oberflächen inhärent in sich tragen, müssen an und für sich unpolare Polyolefine zunächst durch eine Oberflächenaktivierung, wie Beflammen, Plasmabehandlung oder Coronabehandlung, polarisiert werden, damit sie Haftungseigenschaften bekommen.

Die Haftung wird aber erhöht, wenn zumindest die Oberflächenrauhigkeit derjenigen Seite der Folie, die adhäsiv wirken soll, sehr gering ist und beispielsweise einen Wert Ra von maximal 5 $\mu$m, z.B. von 0,05 bis 5 $\mu$m, vorzugsweise von maximal 3 $\mu$m, z.B. von 0,05 bis 3 $\mu$m, besonders bevorzugt von maximal 1 $\mu$m, z.B. von 0,05 bis 1 $\mu$m, stärker bevorzugt von maximal 0,5 $\mu$m, z.B. von 0,05 bis 0,5 $\mu$m, und insbesondere von maximal 0,25 $\mu$m, z.B. von 0,05 bis 0,25 $\mu$m, aufweist. Die entgegengesetzte Seite kann eine deutlich höhere Rauhigkeit aufweisen, beispielsweise eine um den Faktor 1,5 oder 2 oder 5 oder 10 oder 100 größere Rauhigkeit Ra.

Die gegebenenfalls über die Adhäsionsfolie angeordnete Schutzfolie ist geeigneterweise ebenfalls aus einem polaren oder polarisierten thermoplastischen polymeren Material. Geeignet sind neben den zuvor genannten thermoplastischen Kunststoffen insbesondere auch Polyester.

Solche Adhäsionsfolien und dafür geeignete Schutzfolien sowie Verfahren zu ihrer Herstellung sind beispielsweise in der DE-A-102006017881 beschrieben, worauf hiermit in vollem Umfang Bezug genommen wird.

In einer alternativ bevorzugten Ausführungsform umfasst die wenigstens eine Trägerfolie wenigstens eine Dekorfolie. Dabei kann die Dekorfolie eine oder alle Trägerfolien und/oder eine oder alle Adhäsionsfolien ersetzen oder eine zusätzliche Schicht innerhalb der erfindungsgemäßen Folie bilden.

Die Dekorfolie ist geeigneterweise aus einem transparenten thermoplastischen Kunststoff als Grundmaterial aufgebaut; geeignet sind alle zuvor für die Träger- und die Adhäsionsfolie genannten Kunststoffe. Zu dekorativen Zwekken weist die Dekorfolie eine Pigmentierung, Musterung, Bedruckung, Profilierung und/oder Prägestruktur, so dass z.B. ein 3D-Effekt entsteht, auf. Ist die Dekorfolie als Adhäsionsfolie ausgestaltet, so befinden sich Pigmentierung, Musterung und Bedruckung vorzugsweise auf der Seite, die nicht adhäsiv ist. Geeignete Polymere, Pigmente und Farbstoffe sowie geeignete Verfahren zum Färben, Bedrucken, Profilieren und Prägen der Dekorfolie sind beispielsweise in der DE-A-102006017881 sowie in der DE-A-10100692 beschrieben, worauf hiermit in vollem Umfang Bezug genommen wird.

In einer bevorzugten Ausführungsform umfasst die erfindungsgemäße Folie wenigstens eine Orientierungsschicht. Dabei ist die wenigstens eine Orientierungsschicht für den Fall, dass die erfindungsgemäße Folie wenigstens eine Trägerfolie umfasst, vorzugsweise zwischen der wenigstens einen Trägerfolie und der wenigstens einen flüssigkristallinen Schicht und/oder zwischen wenigstens zwei flüssigkristallinen Schichten angeordnet. Umfasst die erfindungsgemäße Folie keine Trägerfolie, so ist die wenigstens eine Orientierungsschicht vorzugsweise zwischen wenigstens zwei flüssigkristallinen Schichten angeordnet.

Orientierungsschichten dienen dazu, die einheitlich planare Ausrichtung der flüssigkristallinen Schicht zu verbessern, so dass die flüssigkristalline Schicht möglichst als Monodomäne vorliegt. Multidomänen führen nämlich zur Lichtstreuung in alle Raumrichtungen und lassen die Schicht trüb erscheinen.

Orientierungsschichten sind üblicherweise aus Polymerfilmen aufgebaut, die vor dem Aufbringen der cholesterischen Schicht mechanisch unidirektional gerieben werden, so dass sich die Direktoren der flüssigkristallinen Moleküle in Reibungsrichtung ausrichten.

Geeignete Polymere sind beispielsweise Polyimide und Polyvinylalkohol. Auch Photoalignment-Materialien (LPP = linearly photo-polymerizable polymer), beispielsweise der Firmen Rolic oder Chisso, sind geeignet. Geeignet sind auch anorganische Orientierungsschichten, wie Siliziumdioxid, welche durch Kathodenzerstäubung oder schiefes Aufdampfen aufgetragen werden.

Bevorzugt sind die Orientierungsschichten jedoch ausgewählt unter Polyimiden, beispielsweise der Marke Sunever® von der Firma Nissan oder von der Firma JSR, oder Polyvinylalkohol, wobei Polyimide stärker bevorzugt sind. Polyimide werden üblicherweise in Form der entsprechenden Polyamidsäure aufgebracht und dann beispielsweise thermisch zum Polyimid gehärtet.

In einer weiteren bevorzugten Ausführungsform umfasst die erfindungsgemäße Folie wenigstens eine Schicht, die IR-Strahlung absorbiert.

Die IR-absorbierende Schicht enthält vorzugsweise wenigstens eine der als Komponente F beschriebenen IR-reflektierenden Substanzen. Diese sind entweder als solche aufgebracht, beispielsweise durch Aufbringen einer Lösung oder Suspension, in der sie gelöst oder dispergiert sind, und Verdampfen des Lösungsmittels, oder vorzugsweise in einer Trägerfolie, insbesondere in einer Polyvinylbutyral-Trägerfolie, eingebettet.

In einer weiteren bevorzugten Ausführungsform umfasst die erfindungsgemäße Folie wenigstens eine Schutzschicht, Klebeschicht und/oder Releaseschicht.

Bezüglich Schutzschichten für die Adhäsivseite einer Adhäsivfolie wird auf die obigen Ausführungen zu der Schutzfolie für Adhäsivfolien Bezug genommen.

Geeignete Schutzschichten (Topcoats), die auf einer flüssigkristallinen Schicht aufgebracht sind, sind beispielsweise solche auf Polyurethan-, Polyesterurethan-, Polyesteracrylat- oder Nitrocelluloselack-Basis. Vorzugsweise ist die Schutzschicht photochemisch vernetzbar, wenn die Härtung der cholesterischen Schicht photochemisch erfolgt. In diesem Fall wird besonders bevorzugt die cholesterische Schicht nicht vollständig polymerisiert, so dass bei der anschließenden Vernetzung der Schutzschicht ein Teil der cholesterischen Schicht mit der Schutzschicht vernetzt wird. Vorzugsweise weist das Topcoat eine Schichtdicke von wenigstens 5 $\mu$m, besonders bevorzugt von wenigstens 10 $\mu$m, auf. Vorzugsweise enthält das Topcoat einen Lichtschutzwirkstoff (s.o. Komponente E). Geeignete Schutzschichten werden beispielsweise mit den Laromer®-Marken der BASF-SE erhalten.

Geeignete Klebeschichten werden beispielsweise durch die Verwendung der oben beschriebenen Haftvermittler hergestellt. Die Klebeschicht bildet vorzugsweise eine der äußeren Schichten der erfindungsgemäßen Folie. Wenn die erfindungsgemäße Folie eine Klebeschicht umfasst, so ist diese vorzugsweise noch mit einer Releaseschicht versehen, um ein unerwünschtes Verkleben der Folie zu verhindern, und bildet somit eine der zweitäußersten Schichten der erfindungsgemäßen Folie.

Die erfindungsgemäße Folie kann durch übliche Verfahren des Standes der Technik zur Herstellung beschichteter Folien hergestellt werden. Dazu wird in der Regel eine Trägerfolie bereitgestellt und mit den gewünschten Schichten in der gewünschten Reihenfolge versehen. Die flüssigkristallinen Schichten können dabei nach jedem Auftragen gehärtet werden oder auch nass in nass mit den weiteren Schichten beschichtet werden. Bevorzugt ist es jedoch, jede flüssigkristalline Schicht nach dem Aufbringen zumindest teilweise zu härten, bevor die nächste Schicht aufgebracht wird. Es ist auch möglich, zwei Trägerfolien getrennt zu beschichten und sie dann zu verkleben. Von dieser verklebten Folie kann dann gewünschtenfalls eine oder beide Trägerfolien abgelöst werden und die Folienseiten können mit weiteren Schichten beschichtet und/oder mit weiteren Folien verklebt werden, bis die gewünschte Folienzusammensetzung erreicht ist. Wenn die erfindungsgemäße Folie keine Trägerfolie enthalten soll, wird diese nach erfolgter Beschichtung/Verklebung entfernt.

Eine Ausführungsform eines Verfahrens zur Herstellung der erfindungsgemäßen Folie umfasst folgende Schritte:

(I) Bereitstellen einer Trägerfolie und gegebenenfalls Reinigen und/oder Erzeugen einer Vorzugsrichtung auf der Folienoberfläche;

(II) optional: Aufbringen einer Orientierungsschicht auf die Trägerfolie und gegebenenfalls Reinigen und/oder Erzeugen einer Vorzugsrichtung auf der Orientierungsschicht;

(III) optional: Aufbringen einer Zusammensetzung (f.1), gegebenenfalls Orientieren, und zumindest teilweise Härten der Zusammensetzung;

(IV) optional: Aufbringen einer Orientierungsschicht auf die in Schritt (III) erhaltene Schicht und gegebenenfalls Reinigen und/oder Erzeugen einer Vorzugsrichtung auf der Orientierungsschicht;

(V) Aufbringen einer Zusammensetzung (a.1), gegebenenfalls Orientieren, und zumindest teilweise Härten der Zusammensetzung;

(VI) optional: Aufbringen einer Orientierungsschicht auf die in Schritt (V) erhaltene Schicht und gegebenenfalls Reinigen und/oder Erzeugen einer Vorzugsrichtung auf der Orientierungsschicht;

(VII.1) optional: Aufbringen einer Zusammensetzung (a.1), auf die in Schritt (V) oder (VI) erhaltene Folie (Schichtseite oder Trägerfolienseite), gegebenenfalls Orientieren, und zumindest teilweise Härten der Zusammensetzung; wobei die in Schritt (VII.1) erhaltene Schicht sich von der in Schritt (V) erhaltenen Schicht in der Chiralität und/oder dem reflektierten IR-Wellenlängenbereich unterscheidet; oder

(VII.2) optional: Aufbringen einer $\lambda$/2-Folie auf die in Schritt (V) erhaltene Schicht und dann Aufbringen der gleichen Zusammensetzung wie in Schritt (V) auf die $\lambda$/2-Folie, gegebenenfalls Orientieren, und zumindest teilweise Härten der Zusammensetzung;

(VIII) optional: ein- oder mehrfaches Wiederholen der Schritte (II) bis (VII), wobei beim Wiederholen Zusammensetzungen eingesetzt werden, die sich von Zusammensetzungen der vorhergehenden Schritte (V) und (VII) und optional auch (III) unterscheiden;

(IX) optional: Verkleben von zwei in Schritt (V), (VII) und/oder (VIII) erhaltenen Folien;

(X) optional: Ablösen einer oder beider Trägerfolien von den in Schritt (IX) erhaltenen verklebten Folie;

(XI) optional: ein- oder mehrfaches Wiederholen der Schritte (IX) und (X); und

(XII) optional: Aufbringen einer Schutzschicht, einer Klebeschicht und/oder einer Releaseschicht auf die in Schritt (V), (VII), (VIII), (X) oder (XI) erhaltene Schicht.

Das Reinigen der Trägerfolie in Schritt (I) kann mittels gängiger Verfahren, wie Ultraschall, Abrollen, z.B. mit

Teknek-Rolle, Abreiben, z.B. mit Samt, Abblasen mit trockener, gefilterter Luft, Abblasen mit ionisierter Lust oder Stickstoff, Zerstäubungsätzen oder Sputterätzen mit Argon oder Reaktivgasen im Vakuum (Plasmaverfahren), Plasmaverfahren an Atmosphärendruck, Coronaverfahren, UV- und/oder Ozonbehandlung erfolgen.

Das Erzeugen einer Vorzugsrichtung auf der Folienoberfläche erfolgt beispielsweise durch Verstrecken der Trägerfolie und/oder durch ein- oder mehrfaches unidirektionales Reiben mit Samt oder Mikrofasertüchern. Alternativ oder zusätzlich erfolgt das Erzeugen einer Vorzugsrichtung auf der Folienoberfläche chemisch durch Aufbringen einer Orientierungsschicht (Schritt II), die wiederum wie die Trägerfolie gereinigt und/oder mit einer Vorzugsrichtung versehen wird.

Die Art, wie die Orientierungsschicht auf die Trägerfolie in Schritt (II) oder auf eine zumindest teilweise gehärtete flüssigkristalline Schicht geeigneterweise aufgebracht wird, hängt stark von den Substanzen, welche die Orientierungsschicht bilden sollen, ab. So wird beispielsweise zur Erzeugung einer Polyimid-Orientierungsschicht, wie bereits erwähnt, die entsprechende Polyamidsäure aufgebracht und dann gehärtet, was beispielsweise thermisch durch Erhitzen erfolgen kann. Die Polyamidsäure bzw. der Polyvinylalkohol, der auch zum Herstellen von Orientierungsschichten geeignet ist, werden beispielsweise als Lösung oder Suspension aufgetragen und vom Lösungsmittel befreit. Anorganische Schichten, wie Siliziumdioxid, werden durch spezielle Verfahren, wie Kathodenzerstäubung oder schiefes Aufdampfen, erzeugt.

Die Zusammensetzungen (a.1) sowie optional (f.1) werden in der Regel in Form einer Lösung oder einer wässrigen Suspension oder Emulsion eingesetzt. Ihr Aufbringen erfolgt in der Regel mittels üblicher Verfahren, beispielsweise mittels Verfahren, die ausgewählt sind unter Luft-RakelBeschichtung, Rakelbeschichtung, Luftmesserbeschichtung, Quetschbeschichtung, Imprägnierbeschichtung, Umkehrwalzenbeschichtung, Transferwalzenbeschichtung, Gravurbeschichtung, "Kiss-Coating", Gießbeschichtung, Spraybeschichtung, Spinbeschichtung oder Druckverfahren, wie Hoch-, Tief-, Flexo-, Offset-, Inkjet-, Buch-, Tampon-, Heißsiegel- oder Sieb-Druckverfahren.

Die Orientierung der cholesterischen Schicht erfolgt in der Regel spontan während des Auftragungsvorgangs; sie kann aber auch in einem nachgeschalteten Schritt erfolgen. In diesem Fall erfolgt die Orientierung mittels der bekannten Methoden, z. B. der Wechselwirkung der Flüssigkristallphase mit Orientierungsschichten, dem Anlegen elektrischer oder magnetischer Felder oder dem mechanischen Rakeln der Flüssigkristallschichten. Vorzugsweise erfolgt die Orientierung jedoch spontan unter Einwirkung der beim Auftragen wirkenden Scherkräfte.

Anschließend kann die aufgebrachte cholesterische Schicht mittels üblicher Verfahren, beispielsweise mit Heißluft, getrocknet werden.

Die Polymerisation der cholesterischen Schicht kann thermisch, durch Elektronenstrahl oder vorzugsweise photochemisch erfolgen.

Das Aufbringen der Orientierungsschicht in Schritt (II) und das Aufbringen der Zusammensetzung (a) oder (f) auf die Orientierungsschicht oder direkt auf die Trägerfolie in Schritt (II) kann auf nur einer oder aber auf beiden Seiten der Trägerfolie erfolgen. Wird die Folie beidseitig beschichtet, so kann dies gleichzeitig oder vorzugsweise sukzessive erfolgen. Bei der sukzessiven beidseitigen Beschichtung wird die zweite Trägerfolienseite erst beschichtet, wenn die Beschichtung der ersten Seite vollständig abgeschlossen ist.

Eine andere Ausführungsform eines Verfahrens zur Herstellung einer erfindungsgemäßen wärmeisolierenden Folie umfasst folgende Schritte:

(i) Bereitstellen einer erfindungsgemäßen Folie gemäß obiger Definition;
(ii) falls die Folie auf beiden Seiten durch eine Trägerfolie oder eine Schutzfolie abgeschlossen ist, Ablösen einer der Trägerfolien oder der Schutzfolie;
(iii) Aufbringen der in Schritt (i) oder (ii) bereitgestellten Folie auf eine neue Trägerfolie; und
(iv) Transferieren der Schichten auf die neue Folie.

Das Transferieren erfolgt in der Regel durch Druck und/oder erhöhte Temperatur. Nach dem Transferieren kann eine eventuell noch aus der in Schritt (i) eingesetzten Folie vorhandene Trägerfolie gewünschtenfalls abgelöst und gegebenenfalls durch eine Schutzschicht ersetzt werden.

Vor dem Aufbringen in Schritt (iii) kann die Schicht, die mit der neuen Folie in Kontakt kommen soll, und/oder die neue Folie mit einem Haftvermittler versehen werden. Geeignete Haftvermittler sind oben genannt.

Dieses Transferverfahren bietet sich insbesondere dann an, wenn die Trägerfolie im Endprodukt Polyvinylbutyral sein soll; d. h. die in Schritt (iii) eingesetzte neue Folie ist vorzugsweise Polyvinylbutyral. Dementsprechend ist die Trägerfolie, die gegebenenfalls in der in Schritt (i) bereitgestellten Folie enthalten ist, keine Polyvinylbutyralfolie. Bevorzugt ist diese sogenannte Transferfolie ausgewählt unter Polyethylen-, Polyethylenterephthalat- und Polypropylen-Folien. Speziell handelt es sich bei der Transferfolie um eine Polyethylenterephthalatfolie.

Ein weiterer Gegenstand der Erfindung ist ein wärmeisolierendes Laminat, umfassend

(1) wenigstens eine flüssigkristalline Schicht in gehärteter Form, die wie vorstehend definiert ist;
(2) optional wenigstens ein Trägermaterial;

(3) optional wenigstens eine Orientierungsschicht;

(4) optional wenigstens eine λ/2-Folie; und

(5) optional wenigstens eine Schutzschicht, Klebeschicht und/oder Releaseschicht; wobei für den Fall, dass keine der Komponenten (2) bis (5) enthalten ist, Komponente (1) wenigstens zwei flüssigkristalline Schichten in gehärteter Form enthält.

Der Unterschied zwischen der erfindungsgemäßen Folie und dem erfindungsgemäßen Laminat besteht im Wesentlichen in der Flexibilität: Während die Folie eine solche Flexibilität besitzt, dass sie ohne zu brechen aufgerollt werden kann, ist dies beim Laminat aufgrund seiner größeren Steifheit nicht mehr der Fall.

Vorzugsweise umfasst das erfindungsgemäße Laminat wenigstens ein Trägermaterial. Bevorzugte Trägermaterialien sind ausgewählt unter Glas, transparenten Polymeren, Verbundsystemen aus Glas und transparenten Polymeren, nichttransparenten Polymeren, Metall, Keramik und Ton.

Als Glas kommen Fenster- oder Fassadenglas, Verbundglas, Isolierglas, Sicherheitsglas oder gemischte Systeme in Betracht.

Als transparente Polymere können alle bei der Trägerfolie aufgeführten Polymere genannt werden, wobei sie sich von der Trägerfolie durch ihre größere Dicke unterscheiden. Bevorzugt ist dabei Polycarbonat.

Bezüglich der übrigen Schichten (1) und (3) bis (5) wird auf die Ausführungen zur Folie verwiesen.

Die erfindungsgemäßen Laminate lassen sich prinzipiell analog zu den erfindungsgemäßen Folien herstellen. So wird in der Regel ein Trägermaterial bereitgestellt und mit den gewünschten Schichten in der gewünschten Reihenfolge beschichtet.

Eine Ausführungsform eines Verfahrens zur Herstellung des erfindungsgemäßen Laminats umfasst folgende Schritte:

(1) Bereitstellen eines Trägermaterials und gegebenenfalls Reinigen und/oder Erzeugen einer Vorzugsrichtung auf der Materialoberfläche;

(2) optional: Aufbringen einer Orientierungsschicht auf das Trägermaterial und gegebenenfalls Reinigen und/oder Erzeugen einer Vorzugsrichtung auf der Orientierungsschicht;

(3) optional: Aufbringen einer Zusammensetzung (f.1), gegebenenfalls Orientieren, und zumindest teilweise Härten der Zusammensetzung;

(4) optional: Aufbringen einer Orientierungsschicht auf die in Schritt (3) erhaltene Schicht und gegebenenfalls Reinigen und/oder Erzeugen einer Vorzugsrichtung auf der Orientierungsschicht;

(5) Aufbringen einer Zusammensetzung (a.1), gegebenenfalls Orientieren, und zumindest teilweise Härten der Zusammensetzung;

(6) optional: Aufbringen einer Orientierungsschicht auf die in Schritt (5) erhaltene Schicht und gegebenenfalls Reinigen und/oder Erzeugen einer Vorzugsrichtung auf der Orientierungsschicht;

(7.1) optional: Aufbringen einer Zusammensetzung (a.1), auf die in Schritt (5) oder (6) erhaltene Beschichtung, gegebenenfalls Orientieren, und zumindest teilweise Härten der Zusammensetzung; wobei die in Schritt (7.1) erhaltene Schicht sich von der in Schritt (5) erhaltenen Schicht in der Chiralität und/oder dem reflektierten IR-Wellenlängenbereich unterscheidet; oder

(7.2) optional: Aufbringen einer λ/2-Folie auf die in Schritt (5) erhaltene Schicht und dann Aufbringen der gleichen Zusammensetzung wie in Schritt (5) auf die λ/2-Folie, gegebenenfalls Orientieren, und zumindest teilweise Härten der Zusammensetzung;

(8) optional: ein- oder mehrfaches Wiederholen der Schritte (2) bis (7), wobei beim Wiederholen Zusammensetzungen eingesetzt werden, die sich von Zusammensetzungen der vorhergehenden Schritte (5) und (7) und optional auch (3) unterscheiden;

(9) optional: Verkleben von zwei in Schritt (5), (7) und/oder (8) erhaltenen Laminaten;

(10) optional: Aufbringen einer Schutzschicht, einer Klebeschicht und/oder einer Releaseschicht auf die in Schritt (5), (7) oder (8) erhaltene Schicht.

Bezüglich geeigneter Ausführungen der einzelnen Schritte wird auf das vorstehende Herstellungsverfahren für die erfindungsgemäße Folie verwiesen. Es sei nur erwähnt, dass geeignete Reinigungsschritte (1), insbesondere für Glas als Trägermaterial, auch Waschen in Wasser oder Tensid-haltigen Bädern umfassen.

Möglich und auch gut geeignet für die Herstellung des erfindungsgemäßen Laminats sind darüber hinaus Transferverfahren, die vorzugsweise folgende Schritte umfassen:

(i) Bereitstellen einer erfindungsgemäßen Folie gemäß obiger Definition;

(ii) falls die Folie auf beiden Seiten durch eine Trägerfolie oder eine Schutzfolie abgeschlossen ist, Ablösen einer der Trägerfolien oder der Schutzfolie;

(iii) Aufbringen der in Schritt (i) oder (ii) bereitgestellten Folie auf ein Trägermaterial; und
(iv) Transferieren der Schichten auf das Trägermaterial.

Zu den einzelnen Schritten gilt analog das zuvor Gesagte.

Ein weiterer Gegenstand der Erfindung ist eine Zusammensetzung, enthaltend die Verbindung der Formel IV.c sowie wenigstens ein achirales nematisches polymerisierbares Monomer. Bezüglich geeigneter achiraler nematischer polymerisierbarer Monomere wird auf die obigen Ausführungen verwiesen.

In einer bevorzugten Ausführungsform enthält die erfindungsgemäße Zusammensetzung die Verbindung der Formel IV.c und die Verbindung der Formel I.a. In einer alternativ bevorzugten Ausführungsform enthält die erfindungsgemäße Zusammensetzung die Verbindung der Formel IV.c und die Verbindung der Formel I.b. In einer alternativ bevorzugten Ausführungsform enthält die erfindungsgemäße Zusammensetzung die Verbindung der Formel IV.c, die Verbindung der Formel I.a und die Verbindung der Formel I.b.

Ein weiterer Gegenstand der Erfindung ist Verwendung der erfindungsgemäßen Folie oder der erfindungsgemäßen Zusammensetzung für das Wärmemanagement von Bauten und Transportmitteln.

Unter "Wärmemanagement" versteht man in diesem Zusammenhang das Abschirmen von Bauten und Transportmitteln gegenüber Wärmestrahlung.

Unter Bauten werden Gebäude und Gebäudeteile sowie alle Arten von bauwerklichen Konstruktionen verstanden, beispielsweise Privat-, Büro- und Industriegebäude, Dächer, Fenster, Außenwände, Dachkuppeln solcher Gebäude, nicht an ein Gebäude gebundene Dächer oder Wände, z.B. Stadionwände und -dächer, Passarellendächer und -wände, Wände und Dächer von überdachten Wegen und Durchgängen, Wände und Dächer von Unterständen, z.B. in Haltestellen oder Bahnhöfen und dergleichen. Bei den Transportmitteln handelt es sich um alle möglichen Verkehrsmittel und Teile davon, die gegen Wärmeeinfluss isoliert werden sollen, wie Personenkraftwagen (Autos) und Teile davon, insbesondere Heck-, Front- und Seitenfenster (Glas), Dach, Schiebedach (Glas oder Metall), Motorhaube (Metall), Lastkraftwagen und Teile davon (wie auch bei PKW), Züge, Flugzeuge, Schiffe und dergleichen. Auch die Verwendung der erfindungsgemäßen Folie oder der erfindungsgemäßen Zusammensetzung für das Wärmemanagement von Helmen, z.B. Motorradhelmen, ist Gegenstand der Erfindung.

Die nachfolgenden Beispiele sollen die Erfindung näher erläutern, ohne sie jedoch einzuschränken.

Beispiele

1.) Formulierungen

Es wurden folgende Formulierungen hergestellt:

Alle Formulierungen enthielten Cyclopentanon und Methylisobutylketon in einem Gewichtsverhältnis von 8:2 als Lösungsmittel. Außerdem enthielten sie 0,05 Gew.-% Tego Rad 2100 als Verlaufshilfsmittel und 1 Gew.-% Lucirin TPO als Photonitiator, jeweils bezogen auf die Gesamtmenge (=100%) an nematischen und chiralen Verbindungen.

Formulierung A (rechtsverdrillend):

Verbindung der Formel I.b

Verbindung der Formel IV.a in einer Menge von 3,1 Gew.-%, bezogen auf das Gewicht der Verbindung I.b

Formulierung B (rechtsverdrillend):

Verbindung der Formel I.b

Verbindung der Formel IV.a in einer Menge von 2,6 Gew.-%, bezogen auf das Gewicht der Verbindung I.b

Formulierung C (rechtsverdrillend):

Verbindung der Formel I.b

Verbindung der Formel IV.a in einer Menge von 2,0 Gew.-%, bezogen auf das Gewicht der Verbindung I.b

Formulierung D (linksverdrillend):

Verbindung der Formel I.b

Verbindung der Formel IV.c in einer Menge von 8,1 Gew.-%, bezogen auf das Gewicht der Verbindung I.b

Formulierung E (linksverdrillend):

Verbindung der Formel I.b

Verbindung der Formel IV.c in einer Menge von 6,7 Gew.-%, bezogen auf das Gewicht der Verbindung I.b

Formulierung F (linksverdrillend):

Verbindung der Formel I.b

Verbindung der Formel IV.c in einer Menge von 5,0 Gew.-%, bezogen auf das Gewicht der Verbindung I.b

Formulierung G (rechtsverdrillend):

Verbindung der Formel I.a

Verbindung der Formel IV.a in einer Menge von 2,8 Gew.-%, bezogen auf das Gewicht der Verbindung I.a

Formulierung H (linksverdrillend):

Verbindung der Formel I.a

Verbindung der Formel IV.c in einer Menge von 10,7 Gew.-%, bezogen auf das Gewicht der Verbindung I.a

Formulierung I (rechtsverdrillend):

Verbindung der Formel I.b

Verbindung der Formel IV.a in einer Menge von 5,48 Gew.-%, bezogen auf das Gewicht der Verbindung I.b

Formulierung J (rechtsverdrillend):

Verbindung der Formel I.b

Verbindung der Formel IV.a in einer Menge von 4,68 Gew.-%, bezogen auf das Gewicht der Verbindung I.b

Formulierung K (linksverdrillend):

Verbindung der Formel I.b

Verbindung der Formel IV.c in einer Menge von 13,32 Gew.-%, bezogen auf das Gewicht der Verbindung I.b

Formulierung L (linksverdrillend):

Verbindung der Formel I.b

Verbindung der Formel IV.c in einer Menge von 11,38 Gew.-%, bezogen auf das Gewicht der Verbindung I.b

2.) Herstellung von Folien - Einzellagen

Eine Polyethylenterephthalatfolie (Trägerfolie) wurde jeweils mit den o.g. Formulierungen mittels einer Gravure Roll beschichtet (Filmdicke ca. 4 $\mu$m), in einem Trockenkanal bei 100, 115 und 2x120 °C (Formulierungen A bis F und

I bis L) bzw. 4x90 °C (Formulierungen G und H) getrocknet und mittels UV-Licht (451 $mW/cm^2$) gehärtet.

Die Reflexionsmaxima der Folien A und D lagen bei 1020 nm, diejenigen der Folien B und E bei 1230 nm, diejenigen der Folien C und F bei 1590 nm, diejenigen der Folien G und H bei 930 nm, diejenigen der Folien I und K bei 600 nm und diejenigen der Folien J und L bei 700 nm.

3.) Herstellung von Folien - Mehrlagen

Die mehrlagigen Folien wurden durch Verkleben der Einzellagen, Delaminieren der obersten Trägerfolie usw. erhalten. Es wurden mehrlagige Folien auf Basis folgender Formulierung in der angegebenen Schichtenfolge hergestellt:

Folie I:

G- A- B- H- A- B

Folie II:

A- B- C- D- E- F

Folie III:

G- A- B- C- H- D- E- F

Folie IV:

I- A- B- C- D- E- F

Folie V:

K- A- B- C- D- E- F

4.) Messung der Transmissionsspektren

Die Messung der Transmission im Wellenspektrum des Sonnenlichts (300 bis 2500 nm; $T_{solar}$) erfolgte gemäß ISO 9050. Analog wurde die Transmission im sichtbaren Wellenlängenbereich ($T_{vis}$) sowie im IR-Spektralbereich mit einer Wellenlänge von 780 bis 1700 nm ($T_{IR}$) bestimmt. Die Ergebnisse sind in der nachfolgenden Tabelle aufgeführt.

Tabelle

| Folie | Folie I | Folie II | Folie III |
|---|---|---|---|
| $T_{vis}$ [%] | 87 | 86 | 86 |
| $T_{solar}$ [%] | 58 | 57 | 51 |
| $T_{IR}$ [%] | 45 | 45 | 37 |

**Patentansprüche**

1. Wärmeisolierende Folie, die im Wellenlängenbereich von 751 bis 2000 nm mindestens 40 %, vorzugsweise wenigstens 45 % der auftreffenden Strahlung reflektiert, umfassend

    (a) wenigstens eine flüssigkristalline Schicht in gehärteter Form, die im Wellenlängenbereich des Infrarot reflektiert und die erhältlich ist durch Härtung

        (a.1) einer Zusammensetzung enthaltend wenigstens ein achirales nematisches polymerisierbares Monomer und wenigstens ein chirales polymerisierbares Monomer;
        wobei das wenigstens eine achirale nematische polymerisierbare Monomer wenigstens ein difunktionell polymerisierbares achirales nematisches Monomer enthält, das ausgewählt ist unter Verbindungen der Formeln I.a, I.b und Gemischen davon:

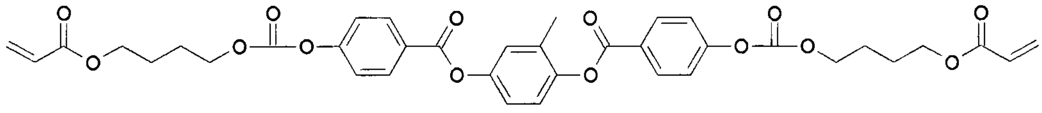

(I.a)

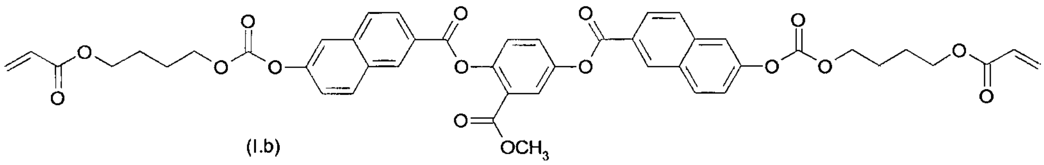

(I.b)

und

das wenigstens eine chirale polymerisierbare Monomer ausgewählt ist unter Verbindungen der Formeln IV.a, IV.b, IV.c und Gemischen davon:

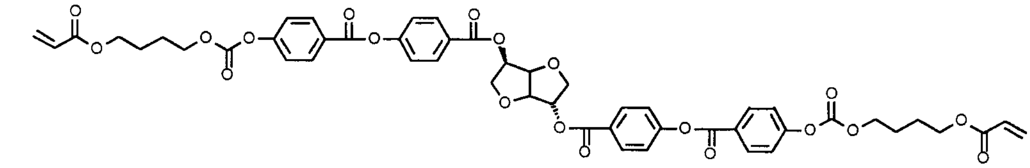

(IV.a)

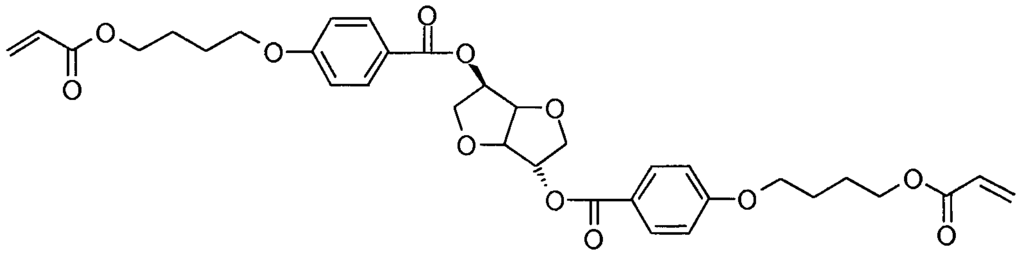

(IV.b)

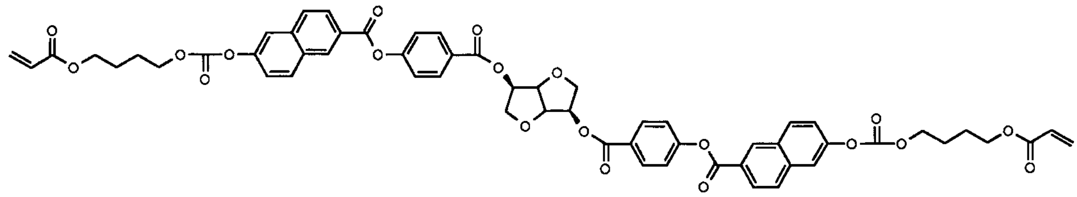

(IV.c);

(b) optional wenigstens eine Trägerfolie;
(c) optional wenigstens eine Orientierungsschicht, die mit wenigstens einer flüssigkristallinen Schicht in Kontakt steht;
(d) optional wenigstens eine λ/2-Folie;
(e) optional wenigstens eine Klebeschicht, Schutzschicht und/oder Releaseschicht.

**2.** Wärmeisolierende Folie nach Anspruch 1, die im Wellenlängenbereich von 390 bis 750 nm eine Transmission von mindestens 80 %, vorzugsweise wenigstens 95 % der auftreffenden Strahlung aufweist.

**3.** Wärmeisolierende Folie nach Anspruch 1, die im Wellenlängenbereich von 390 bis 750 nm wenigstens ein Maximum

einer Reflexionsbande aufweist.

**4.** Wärmeisolierende Folie nach einem der Ansprüche 1 oder 3, umfassend

(a) wenigstens eine flüssigkristalline Schicht in gehärteter Form, die im Wellenlängenbereich des Infrarot reflektiert und die erhältlich ist durch Härtung

(a.1) einer Zusammensetzung enthaltend wenigstens ein achirales nematisches polymerisierbares Monomer und wenigstens ein chirales polymerisierbares Monomer;
wobei das wenigstens eine achirale nematische polymerisierbare Monomer wenigstens ein difunktionell polymerisierbares achirales nematisches Monomer enthält, das ausgewählt ist unter Verbindungen der Formeln I.a, I.b und Gemischen davon:

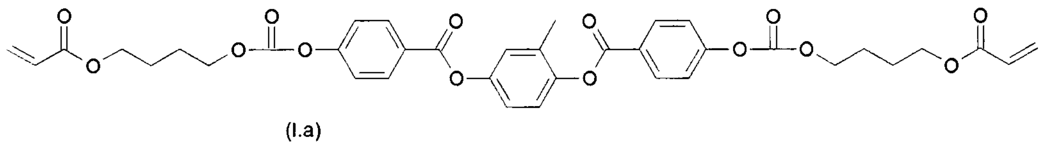

(I.a)

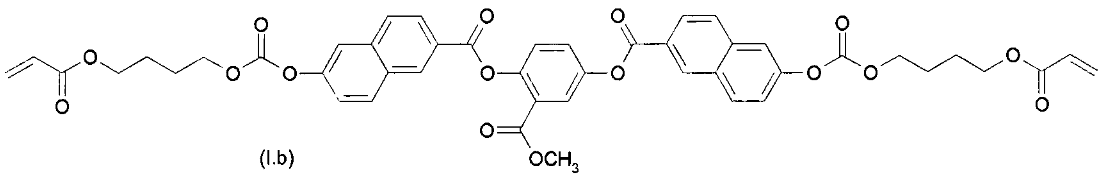

(I.b)

und
das wenigstens eine chirale polymerisierbare Monomer ausgewählt ist unter Verbindungen der Formeln IV.a, IV.b, IV.c und Gemischen davon:

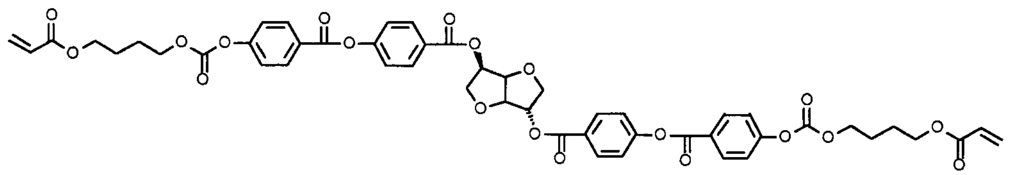

(IV.a)

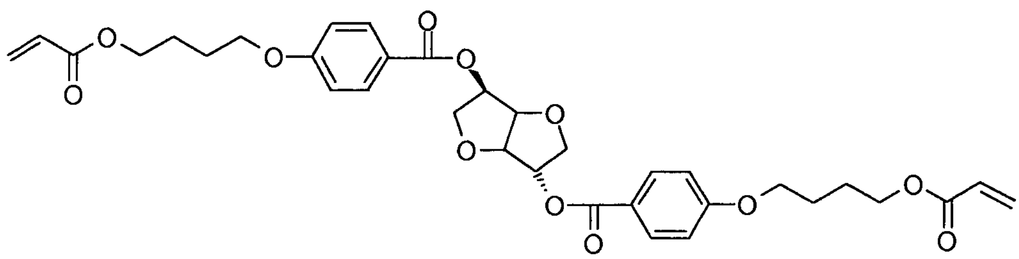

(IV.b)

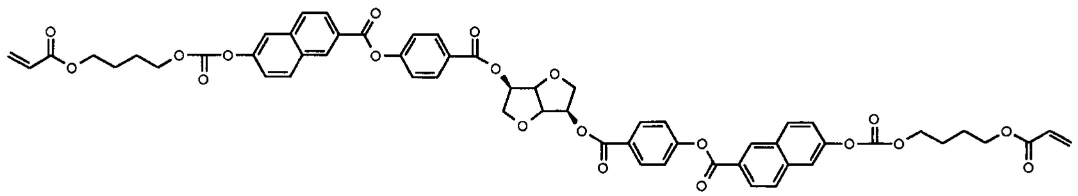

(IV.c);

(b) optional wenigstens eine Trägerfolie;
(c) optional wenigstens eine Orientierungsschicht, die mit wenigstens einer flüssigkristallinen Schicht in Kontakt steht;
(d) optional wenigstens eine λ/2-Folie;
(e) optional wenigstens eine Klebeschicht, Schutzschicht und/oder Releaseschicht
(f) wenigstens eine flüssigkristalline Schicht in gehärteter Form, die im Wellenlängenbereich von 350 bis 750 nm reflektiert und die erhältlich ist durch Härtung

(f.1) einer Zusammensetzung enthaltend wenigstens ein achirales nematisches polymerisierbares Monomer und wenigstens ein chirales polymerisierbares Monomer;
wobei das wenigstens eine achirale nematische polymerisierbare Monomer wenigstens ein difunktionell polymerisierbares achirales nematisches Monomer enthält, das ausgewählt ist unter Verbindungen der Formeln I.a, I.b und Gemischen davon:

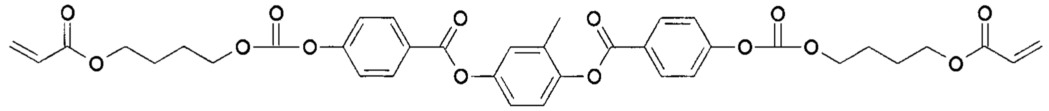

(I.a)

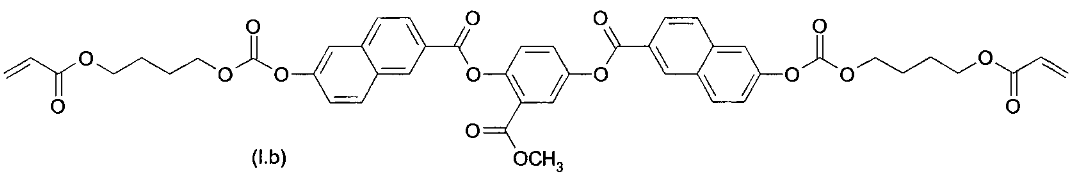

(I.b)

und
das wenigstens eine chirale polymerisierbare Monomer ausgewählt ist unter Verbindungen der Formeln IV.a, IV.b, IV.c und Gemischen davon:

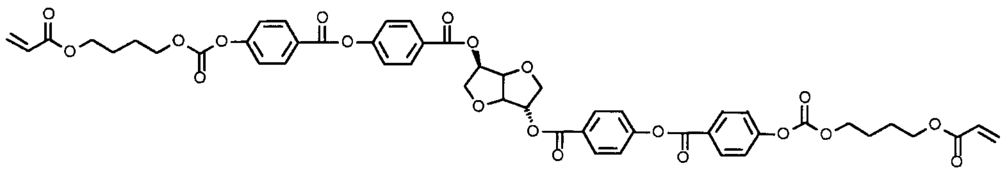

(IV.a)

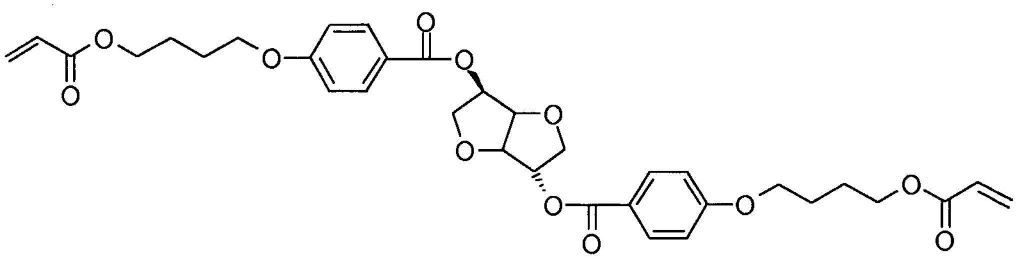

(IV.b)

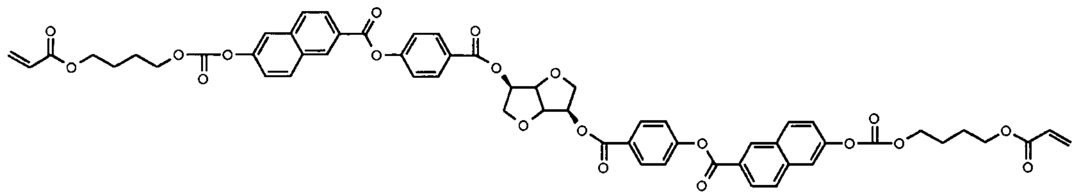

(IV.c).

**5.** Wärmeisolierende Folie nach einem der vorhergehenden Ansprüche, in der wenigstens eine flüssigkristalline Schicht aus einer Zusammensetzung (a.1) oder (f.1) erhältlich ist, die als chirales polymerisierbares Monomer die Verbindung der Formel IV.c umfasst.

**6.** Wärmeisolierende Folie nach einem der vorhergehenden Ansprüche, umfassend wenigstens zwei flüssigkristalline Schichten in gehärteter Form, die im Wellenlängenbereich des Infrarot reflektieren, wobei die wenigstens zwei Schichten wenigstens ein Schichtenpaar umfassen, wobei die zwei Schichten in diesem Schichtenpaar einen ähnlichen Wellenlängenbereich des Infrarot reflektieren und sich die zwei Schichten dieses Schichtenpaares in ihrer Chiralität unterschieden.

**7.** Wärmeisolierende Folie nach einem der vorhergehenden Ansprüche, umfassend wenigstens zwei flüssigkristalline Schichten in gehärteter Form, wobei wenigstens zwei Schichten in jeweils unterschiedlichen Wellenlängenbereichen des Infrarot reflektieren.

**8.** Wärmeisolierende Folie nach einem der Ansprüche 6 oder 7, umfassend wenigstens zwei Schichtenpaare, wobei die zwei Schichten in diesen Schichtenpaaren einen ähnlichen Wellenlängenbereich des Infrarot reflektieren, aber sich in ihrer Chiralität unterschieden und wobei die Schichten in den verschiedenen Schichtenpaaren in jeweils unterschiedlichen Wellenlängenbereichen des Infrarot reflektieren.

**9.** Wärmeisolierende Folie nach einem der vorhergehenden Ansprüche, umfassend wenigstens ein Schichtenpaar aus zwei flüssigkristallinen Schichten in gehärteter Form, wobei diese zwei Schichten jeweils in einem ähnlichen Wellenlängenbereichen des Infrarot reflektieren und die gleiche Chiralität aufweisen und wobei sich zwischen diesen zwei Schichten eine $\lambda/2$-Folie befindet.

**10.** Wärmeisolierende Folie nach einem der vorhergehenden Ansprüche, wobei die wenigstens eine Trägerfolie ausgewählt ist unter Folien aus Polyethylenterephthalat, Polyethylennaphthalat, Polyvinylbutyral, Polyvinylchlorid, Weichpolyvinylchlorid, Polymethylmethacrylat, Poly(ethylen-co-vinylacetat), Polycarbonat, Cellulosetriacetat, Polyethersulfon, Polyester, Polyamid, Polyolefinen und Acrylharzen.

**11.** Wärmeisolierendes Laminat, umfassend

(1) wenigstens eine flüssigkristalline Schicht in gehärteter Form, die wie in einem der Ansprüche 1 bis 8 definiert ist;
(2) wenigstens ein Trägermaterial, das ausgewählt ist unter Glas, transparenten Polymeren, Verbundsystemen aus Glas und transparenten Polymeren, nichttransparenten Polymeren, Metall, Keramik und Ton;
(3) optional wenigstens eine Orientierungsschicht;

(4) optional wenigstens eine λ/2-Folie; und
(5) optional wenigstens eine Schutzschicht, Klebeschicht und/oder Releaseschicht.

**12.** Wärmeisolierendes Laminat nach Anspruch 11, wobei es sich bei dem Glas um Fenster- oder Fassadenglas, Verbundglas, Isolierglas, Sicherheitsglas oder gemischte Systeme handelt.

**13.** Pigment, erhältlich durch folgende Schritte:

- falls erforderlich, Ablösen der wenigstens einen Trägerfolie von den übrigen Schichten der wärmeisolierenden Beschichtung gemäß der Definition in einem der Ansprüche 1 bis 10, und
- Zerkleinern der, falls erforderlich, von der wenigstens einen Trägerfolie befreiten Schichten.

**14.** Zusammensetzung, enthaltend eine Verbindung der Formel IV.c sowie wenigstens ein achirales nematisches polymerisierbares Monomer.

**15.** Verfahren zur Herstellung einer wärmeisolierenden Folie gemäß der Definition in einem der Ansprüche 1 bis 10, umfassend folgende Schritte:

(I) Bereitstellen einer Trägerfolie und gegebenenfalls Reinigen und/oder Erzeugen einer Vorzugsrichtung auf der Folienoberfläche;
(II) optional: Aufbringen einer Orientierungsschicht auf die Trägerfolie und gegebenenfalls Reinigen und/oder Erzeugen einer Vorzugsrichtung auf der Orientierungsschicht;
(III) optional: Aufbringen einer Zusammensetzung (f.1), gegebenenfalls Orientieren, und zumindest teilweise Härten der Zusammensetzung;
(IV) optional: Aufbringen einer Orientierungsschicht auf die in Schritt (III) erhaltene Schicht und gegebenenfalls Reinigen und/oder Erzeugen einer Vorzugsrichtung auf der Orientierungsschicht;
(V) Aufbringen einer Zusammensetzung (a.1), gegebenenfalls Orientieren, und zumindest teilweise Härten der Zusammensetzung;
(VI) optional: Aufbringen einer Orientierungsschicht auf die in Schritt (V) erhaltene Schicht und gegebenenfalls Reinigen und/oder Erzeugen einer Vorzugsrichtung auf der Orientierungsschicht;
(VII.1) optional: Aufbringen einer Zusammensetzung (a.1), auf die in Schritt (V) oder (VI) erhaltene Folie (Schichtseite oder Trägerfolienseite), gegebenenfalls Orientieren, und zumindest teilweise Härten der Zusammensetzung; wobei die in Schritt (VII.1) erhaltene Schicht sich von der in Schritt V) erhaltenen Schicht in der Chiralität und/oder dem reflektierten IR-Wellenlängenbereich unterscheidet; oder
(VII.2) optional: Aufbringen einer λ/2-Folie auf die in Schritt (V) erhaltene Schicht und dann Aufbringen der gleichen Zusammensetzung wie in Schritt (V) auf die λ/2-Folie, gegebenenfalls Orientieren, und zumindest teilweise Härten der Zusammensetzung;
(VIII) optional: ein- oder mehrfaches Wiederholen der Schritte (II) bis (VII), wobei beim Wiederholen Zusammensetzungen eingesetzt werden, die sich von Zusammensetzungen der vorhergehenden Schritte (V) und (VII) und gegebenenfalls auch (III) unterscheiden;
(IX) optional: Verkleben von zwei in Schritt (V), (VII) und/oder (VIII) erhaltenen Folien;
(X) optional: Ablösen einer oder beider Trägerfolien von den in Schritt (IX) erhaltenen verklebten Folie;
(XI) optional: ein- oder mehrfaches Wiederholen der Schritte (IX) und(X); und
(XII) optional: Aufbringen einer Schutzschicht, einer Klebeschicht und/oder einer Releaseschicht auf die in Schritt (V), (VII), (VIII), (X) oder (XI) erhaltene Schicht.

**16.** Verfahren zur Herstellung einer wärmeisolierenden Folie gemäß der Definition in einem der Ansprüche 1 bis 10, umfassend folgende Schritte:

(i) Bereitstellen einer Folie gemäß der Definition in einem der Ansprüche 1 bis 10;
(ii) falls die Folie auf beiden Seiten durch eine Trägerfolie oder eine Schutzfolie abgeschlossen ist, Ablösen einer der Trägerfolien oder der Schutzfolie;
(iii) Aufbringen der in Schritt (i) oder (ii) bereitgestellten Folie auf eine neue Trägerfolie; und
(iv) Transferieren der Schichten auf die neue Folie.

**17.** Verwendung von Folien gemäß einem der Ansprüche 1 bis 10 oder der Zusammensetzung nach Anspruch 14 für das Wärmemanagement von Bauten und Transportmitteln.

## Claims

1. A thermally insulating film which, within the wavelength range from 751 to 2000 nm, reflects at least 40%, preferably at least 45%, of the incident radiation, comprising

(a) at least one liquid-crystalline layer in hardened form, which reflects in the wavelength range of the infrared and is obtainable by hardening

(a.1) a composition comprising at least one achiral nematic polymerizable monomer and at least one chiral polymerizable monomer; wherein the at least one achiral nematic polymerizable monomer comprises at least one difunctionally polymerizable achiral nematic monomer, which is selected from compounds of the formulae I.a, I.b and mixtures thereof:

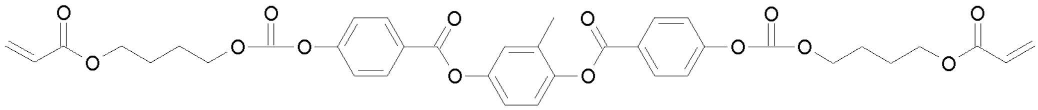

(I.a)

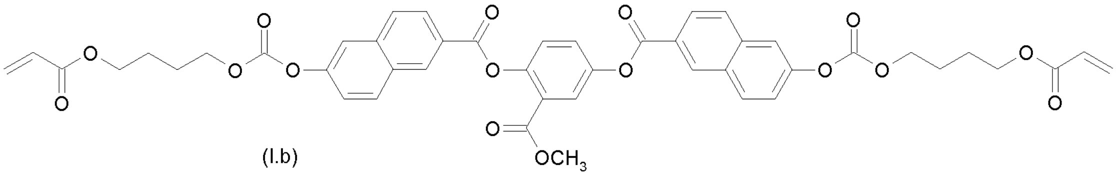

(I.b)

and
the at least one chiral polymerizable monomer is selected from compounds of the formulae IV.a, IV.b, IV.c and mixtures thereof:

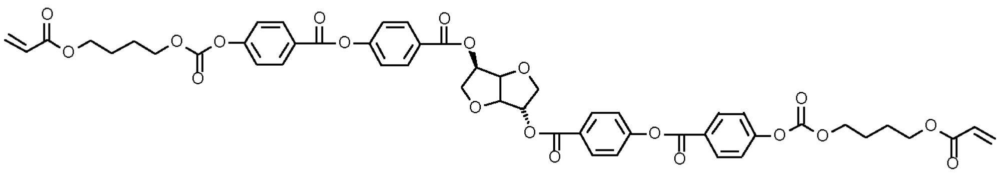

(IV.a)

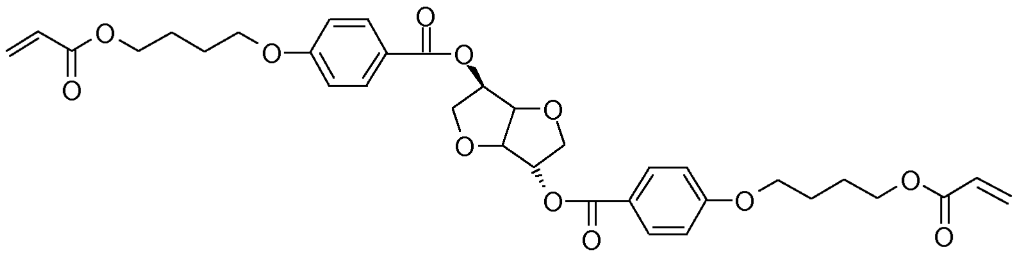

(IV.b)

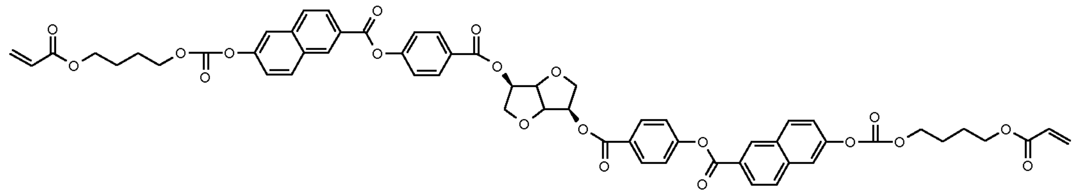

(IV.c);

(b) optionally at least one carrier film;
(c) optionally at least one alignment layer which is in contact with at least one liquid-crystalline layer;
(d) optionally at least one λ/2 film;
(e) optionally at least one adhesive layer, protective layer and/or release layer.

**2.** The thermally insulating film according to claim 1, which, within the wavelength range from 390 to 750 nm, has a transmission of at least 80%, preferably at least 95%, of the incident radiation.

**3.** The thermally insulating film according to claim 1, which has at least one maximum of a reflection band in the wavelength range from 390 to 750 nm.

**4.** The thermally insulating film according to either of claims 1 and 3, comprising

(a) at least one liquid-crystalline layer in hardened form, which reflects in the wavelength range of the infrared and is obtainable by hardening

(a.1) a composition comprising at least one achiral nematic polymerizable monomer and at least one chiral polymerizable monomer; wherein the at least one achiral nematic polymerizable monomer comprises at least one difunctionally polymerizable achiral nematic monomer, which is selected from compounds of the formulae I.a, I.b and mixtures thereof:

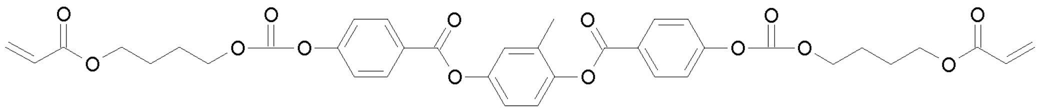

(I.a)

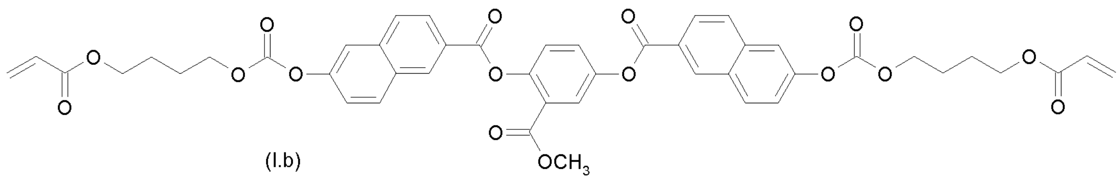

(I.b)

and
the at least one chiral polymerizable monomer is selected from compounds of the formulae IV.a, IV.b, IV.c and mixtures thereof:

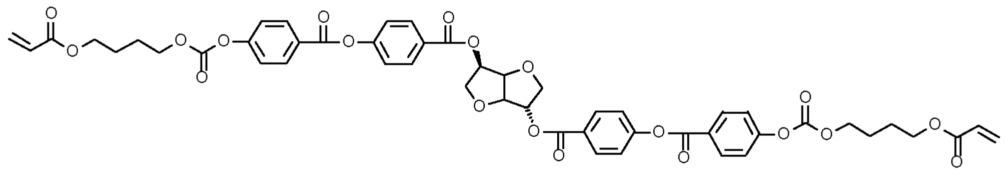

(IV.a)

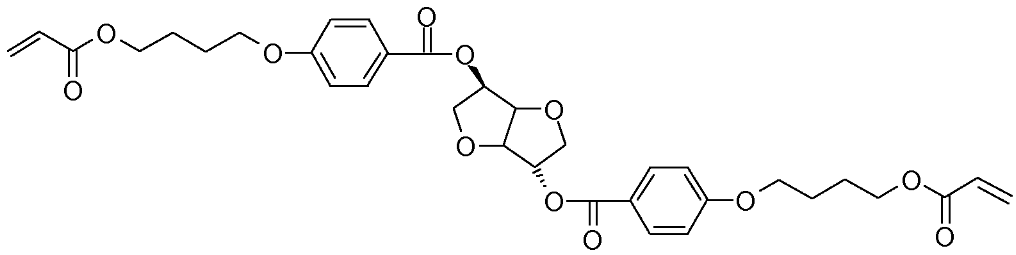

(IV.b)

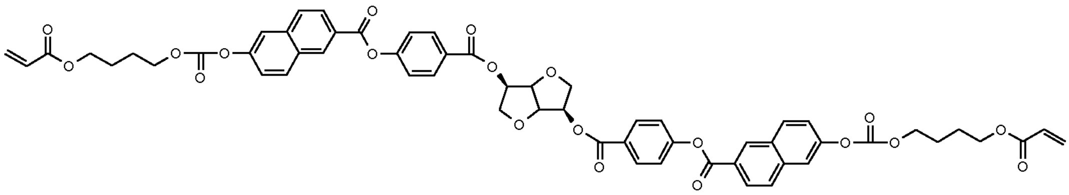

(IV.c);

(b) optionally at least one carrier film;
(c) optionally at least one alignment layer which is in contact with at least one liquid-crystalline layer;
(d) optionally at least one λ/2 film;
(e) optionally at least one adhesive layer, protective layer and/or release layer.
(f) at least one liquid-crystalline layer in hardened form, which reflects in the wavelength range of from 350 to 750 nm and is obtainable by hardening

(f.1) a composition comprising at least one achiral nematic polymerizable monomer and at least one chiral polymerizable monomer; wherein the at least one achiral nematic polymerizable monomer comprises at least one difunctionally polymerizable achiral nematic monomer, which is selected from compounds of the formulae I.a, I.b and mixtures thereof:

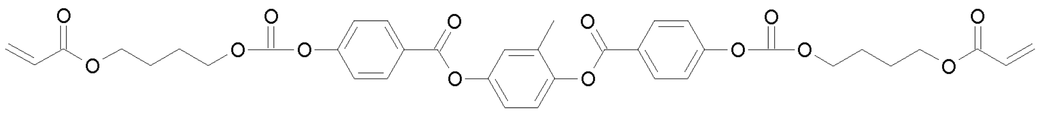

(I.a)

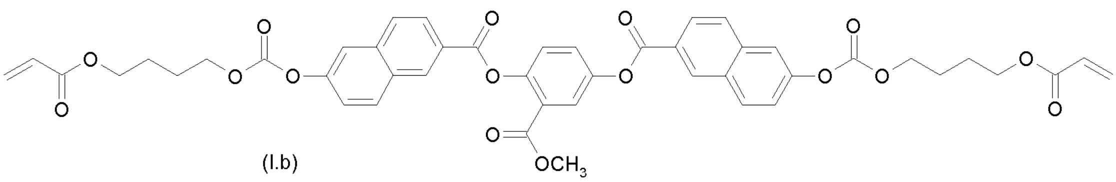

(I.b)

and
the at least one chiral polymerizable monomer is selected from compounds of the formulae IV.a, IV.b, IV.c and mixtures thereof:

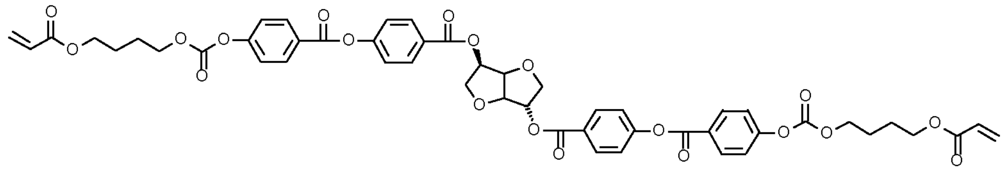

(IV.a)

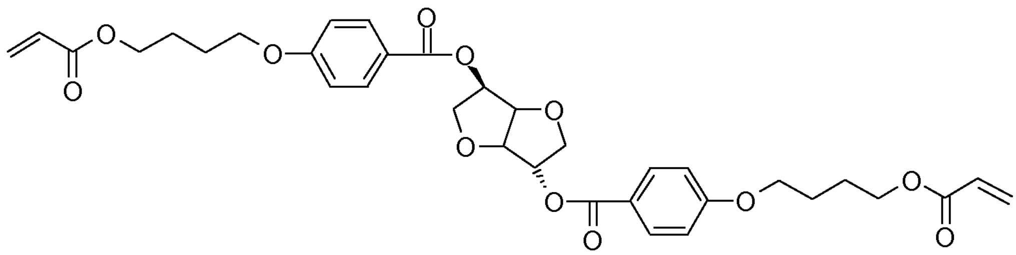

(IV.b)

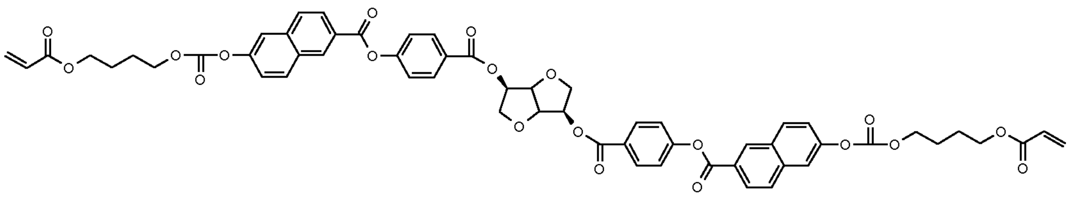

(IV.c).

**5.** The thermally insulating film according to any one of the preceding claims, in which at least one liquid-crystalline layer is obtainable from a composition (a.1) or (f.1) which comprises the compound of the formula IV.c as a chiral polymerizable monomer.

**6.** The thermally insulating film according to any one of the preceding claims, comprising at least two liquid-crystalline layers in hardened form, which reflect in the wavelength range of the infrared, said at least two layers comprising at least one layer pair, the two layers in this layer pair reflecting a similar wavelength range of the infrared and the two layers of this layer pair differing in their chirality.

**7.** The thermally insulating film according to any one of the preceding claims, comprising at least two liquid-crystalline layers in hardened form, at least two layers each reflecting in different wavelength ranges of the infrared.

**8.** The thermally insulating film according to either of claims 6 and 7, comprising at least two layer pairs, the two layers in these layer pairs reflecting a similar wavelength range of the infrared but differing in their chirality, and the layers in the different layer pairs each reflecting in different wavelength ranges of the infrared.

**9.** The thermally insulating film according to any one of the preceding claims, comprising at least one layer pair of two liquid-crystalline layers in hardened form, these two layers each reflecting in a similar wavelength range of the infrared and having the same chirality, and a $\lambda/2$ film being present between these two layers.

**10.** The thermally insulating film according to any one of the preceding claims, wherein the at least one carrier film is selected from films of polyethylene terephthalate, polyethylene naphthalate, polyvinyl butyral, polyvinyl chloride, flexible polyvinyl chloride, polymethyl methacrylate, poly(ethylene-co-vinyl acetate), polycarbonate, cellulose triacetate, polyether sulfone, polyester, polyamide, polyolefins and acrylic resins.

**11.** A thermally insulating laminate comprising

(1) at least one liquid-crystalline layer in hardened form, as defined in any one of claims 1 to 8;
(2) optionally at least one carrier material selected from glass, transparent polymers, composite systems composed of glass and transparent polymers, nontransparent polymers, metal, ceramic and clay;
(3) optionally at least one alignment layer;
(4) optionally at least one $\lambda/2$ film; and
(5) optionally at least one protective layer, adhesive layer and/or release layer.

**12.** The thermally insulating laminate according to claim 11, wherein the glass is window glass or exterior glass, composite glass, insulation glass, safety glass or mixed systems.

**13.** A pigment obtainable by the following steps:

- if necessary, removing the at least one carrier film from the remaining layers of the thermally insulating coating as defined in any one of claims 1 to 10, and
- comminuting the layers which have, if necessary, been freed of the at least one carrier film.

**14.** A composition comprising a compound of the formula IV.c and at least one achiral nematic polymerizable monomer.

**15.** A process for producing a thermally insulating film as defined in any one of claims 1 to 10, comprising the following steps:

(I) providing a carrier film and optionally cleaning and/or generating a preferential direction on the film surface;
(II) optionally: applying an alignment layer to the carrier film and optionally cleaning and/or generating a preferential direction on the alignment layer;
(III) optionally: applying a composition (f.1), optionally aligning, and at least partially hardening the composition;
(IV) optionally: applying an alignment layer to the layer obtained in step (III) and optionally cleaning and/or generating a preferential direction on the alignment layer;
(V) applying a composition (a.1), optionally aligning, and at least partially hardening the composition;
(VI) optionally: applying an alignment layer to the layer obtained in step (V) and optionally cleaning and/or generating a preferential direction on the alignment layer;
(VII.1) optionally: applying a composition (a.1) to the film obtained in step (V) or (VI) (layer side or carrier film side), optionally aligning, and at least partially hardening the composition; the layer obtained in step (VII.1) differing from the layer obtained in step (V) in terms of chirality and/or the reflected IR wavelength range; or
(VII.2)optionally: applying a $\lambda/2$ film to the layer obtained in step (V) and then applying the same composition as in step (V) to the $\lambda/2$ film, optionally aligning, and at least partially hardening the composition;
(VIII) optionally: single or multiple repetition of steps (II) to (VII), the repetitions using compositions which differ from compositions of the previous steps (V) and (VII) and optionally also (III);
(IX) optionally: adhesive bonding of two films obtained in step (V), (VII) and/or (VIII);
(X) optionally: detaching one or both carrier films from the adhesive-bonded film obtained in step (IX);
(XI) optionally: single or multiple repetition of steps (IX) and (X) ; and
(XII) optionally: applying a protective layer, an adhesive layer and/or a release layer to the layer obtained in step (V), (VII), (VIII), (X) or (XI).

**16.** A process for producing a thermally insulating film as defined in any one of claims 1 to 10, comprising the following steps:

(i) providing a film as defined in any one of claims 1 to 10;
(ii) if the film has been concluded by a carrier film or a protective film on both sides, detaching one of the carrier films or the protective film;
(iii) applying the film provided in step (i) or (ii) to a new carrier film; and
(iv) transferring the layers to the new film.

**17.** The use of films according to any one of claims 1 to 10 or of the composition according to claim 14 for heat management of constructions and means of transport.

## Revendications

**1.** Feuille thermo-isolante, qui réfléchit, dans la plage de longueurs d'onde de 751 à 2000 nm, au moins 40%, de préférence au moins 45% du rayonnement incident, comprenant

(a) au moins une couche à cristaux liquides sous forme durcie, qui réfléchit dans la plage de longueurs d'onde de l'infrarouge et qui peut être obtenue par durcissement

(a.1) d'une composition contenant au moins un monomère achiral nématique polymérisable et au moins un monomère chiral polymérisable ; ledit au moins un monomère achiral nématique polymérisable contenant au moins un monomère achiral nématique polymérisable de manière difonctionnelle, qui est choisi parmi les composés des formules I.a, I.b et leurs mélanges :

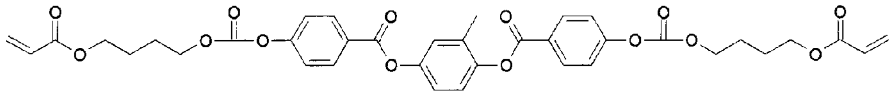

(I.a)

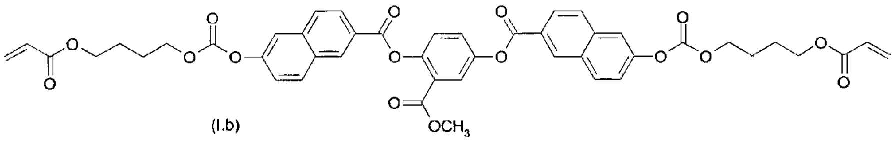

(I.b)

et

ledit au moins un monomère polymérisable chiral étant choisi parmi les composés des formules IV.a, IV.b, IV.c et leurs mélanges :

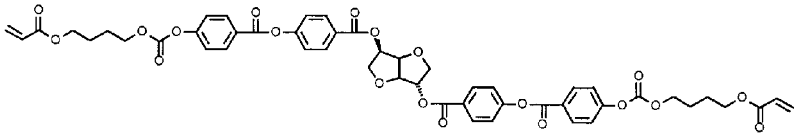

(IV.a)

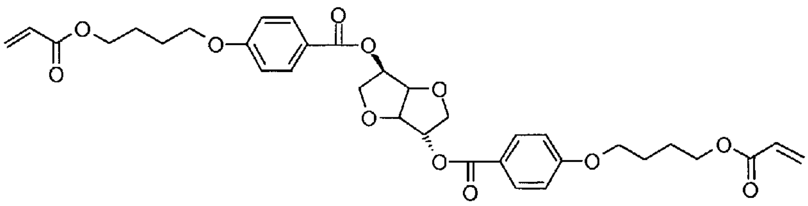

(IV.b)

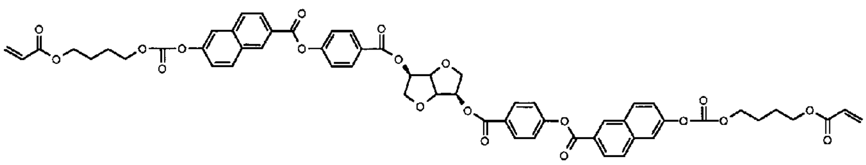

(IV.c) ;

(b) éventuellement au moins une feuille support ;

(c) éventuellement au moins une couche d'orientation qui est en contact avec au moins une couche à cristaux liquides ;

(d) éventuellement au moins une feuille λ/2;
(e) éventuellement au moins une couche adhésive, une couche de protection et/ou une couche antiadhésive.

**2.** Feuille thermo-isolante selon la revendication 1, qui présente, dans la plage de longueurs d'onde de 390 à 750 nm, une transmission d'au moins 80%, de préférence d'au moins 95% du rayonnement incident.

**3.** Feuille thermo-isolante selon la revendication 1, qui présente, dans la plage de longueurs d'onde de 390 à 750 nm, au moins un maximum d'une bande de réflexion.

**4.** Feuille thermo-isolante selon l'une quelconque des revendications 1 ou 3, comprenant

(a) au moins une couche à cristaux liquides sous forme durcie, qui réfléchit dans la plage de longueurs d'onde de l'infrarouge et qui peut être obtenue par durcissement

(a.1) d'une composition contenant au moins un monomère achiral nématique polymérisable et au moins un monomère chiral polymérisable ; ledit au moins un monomère achiral nématique polymérisable contenant au moins un monomère achiral nématique polymérisable de manière difonctionnelle, qui est choisi parmi les composés des formules I.a, I.b et leurs mélanges :

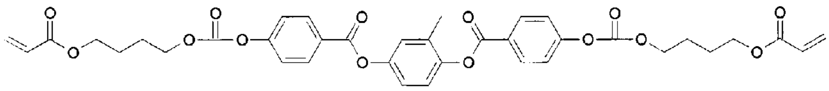

(I.a)

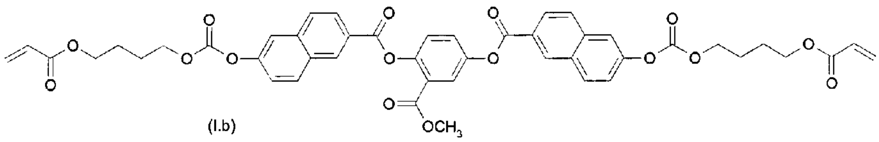

(I.b)

et
ledit au moins un monomère polymérisable chiral étant choisi parmi les composés des formules IV.a, IV.b, IV.c et leurs mélanges :

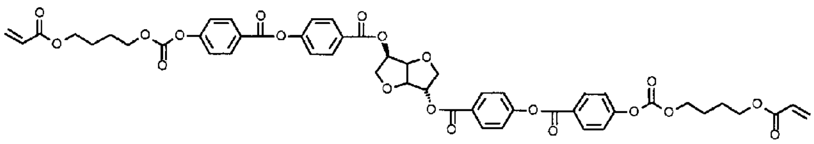

(IV.a)

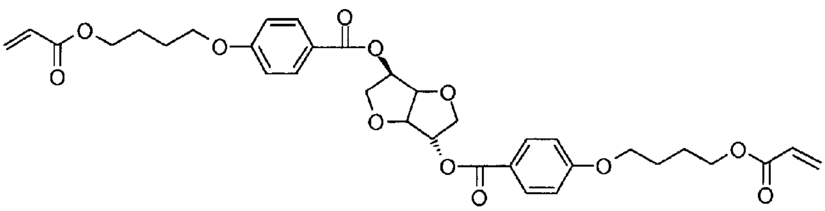

(IV.b)

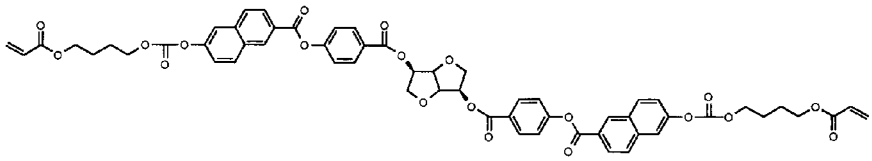

(IV.c) ;

(b) éventuellement au moins une feuille support ;
(c) éventuellement au moins une couche d'orientation qui est en contact avec au moins une couche à cristaux liquides ;
(d) éventuellement au moins une feuille λ/2;
(e) éventuellement au moins une couche adhésive, une couche de protection et/ou une couche antiadhésive.
(f) au moins une couche à cristaux liquides sous forme durcie, qui réfléchit dans la plage de longueurs d'onde de 350 à 750 nm et qui peut être obtenue par durcissement

(f.1) d'une composition contenant au moins un monomère achiral nématique polymérisable et au moins un monomère chiral polymérisable ; ledit au moins un monomère achiral nématique polymérisable contenant au moins un monomère achiral nématique polymérisable de manière difonctionnelle, qui est choisi parmi les composés des formules I.a, I.b et leurs mélangeas :

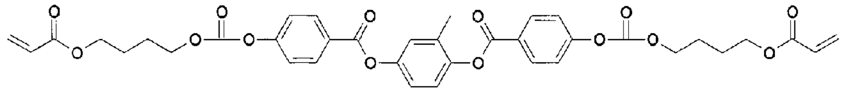

(I.a)

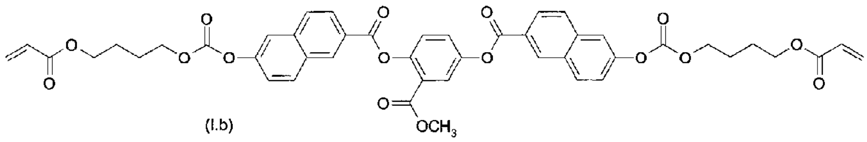

(I.b)

et
ledit au moins un monomère polymère chiral étant choisi parmi les composés des formules IV.a, IV.b, IV.c et leurs mélangeas :

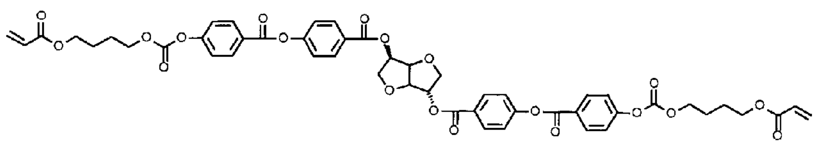

(IV.a)

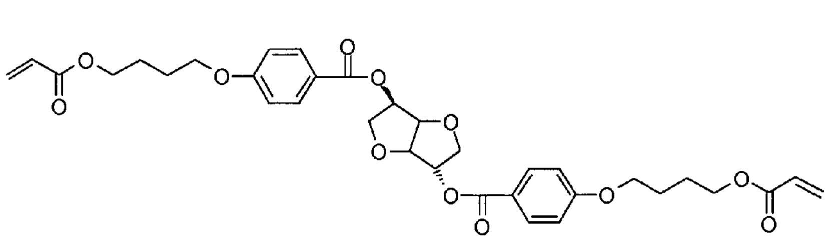

(IV.b)

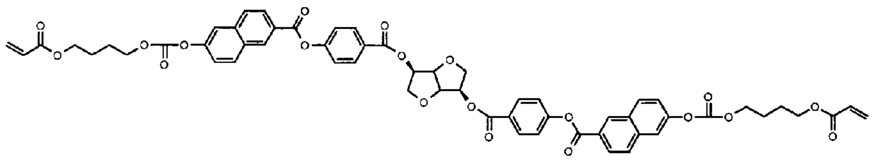

(IV.c).

**5.** Feuille thermo-isolante selon l'une quelconque des revendications précédentes, dans laquelle au moins une couche à cristaux liquides peut être obtenue à partir d'une composition (a.1) ou (f.1), qui contient comme monomère chiral polymérisable le composé de formule IV.c.

**6.** Feuille thermo-isolante selon l'une quelconque des revendications précédentes, comprenant au moins deux couches à cristaux liquides sous forme durcie, qui réfléchissent dans la plage de longueurs d'onde de l'infrarouge, lesdites au moins deux couches comprenant au moins une paire de couches, les deux couches dans cette paire de couches réfléchissant une plage de longueurs d'onde analogue de l'infrarouge et les deux couches de cette paire de couches se distinguant par leur chiralité.

**7.** Feuille thermo-isolante selon l'une quelconque des revendications précédentes, comprenant au moins deux couches à cristaux liquides sous forme durcie, au moins deux couches réfléchissant à chaque fois dans des plages de longueurs d'onde différentes de l'infrarouge.

**8.** Feuille thermo-isolante selon l'une quelconque des revendications 6 ou 7, comprenant au moins deux paires de couches, les deux couches dans ces paires de couches réfléchissant une plage de longueurs d'onde analogue de l'infrarouge, mais se distinguant par leur chiralité et les couches dans les différentes paires de couches réfléchissant dans des plages de longueurs d'onde à chaque fois différentes de l'infrarouge.

**9.** Feuille thermo-isolante selon l'une quelconque des revendications précédentes, comprenant au moins une paire de couches constituée par deux couches à cristaux liquides sous forme durcie, ces deux couches réfléchissant à chaque fois dans une plage de longueurs d'onde analogue de l'infrarouge et présentant la même chiralité et une feuille $\lambda/2$ se trouvant entre ces deux couches.

**10.** Feuille thermo-isolante selon l'une quelconque des revendications précédentes, ladite au moins une feuille support étant choisie parmi les feuilles en poly(téréphtalate d'éthylène), poly(naphtalate d'éthylène), polyvinylbutyral, poly (chlorure de vinyle), poly(chlorure de vinyle) souple, poly(méthacrylate de méthyle), poly(éthylène-co-acétate de vinyle), polycarbonate, triacétate de cellulose, polyéthersulfone, polyester, polyamide, polyoléfines et résines acryliques.

**11.** Stratifié thermo-isolant, comprenant

(1) au moins une couche à cristaux liquides sous forme durcie, qui est définie comme dans l'une quelconque des revendications 1 à 8 ;
(2) au moins un matériau support, qui est choisi parmi le verre, les polymères transparents, les systèmes composites en verre et en polymères transparents, les polymères non transparents, le métal, la céramique et l'argile ;
(3) éventuellement au moins une couche d'orientation ;
(4) éventuellement au moins une feuille $\lambda/2$ ; et
(5) éventuellement au moins une couche de protection, une couche adhésive et/ou une couche antiadhésive.

**12.** Stratifié thermo-isolant selon la revendication 11, le verre étant un verre pour fenêtre ou façade, un verre composite, un verre isolant, un verre de sécurité ou des systèmes mixtes.

**13.** Pigment, pouvant être obtenu par les étapes suivantes :

- si nécessaire, détachement de ladite au moins une feuille support des autres couches du revêtement thermo-isolant selon la définition dans l'une quelconque des revendications 1 à 10, et
- broyage, si nécessaire, des couches libérées de ladite au moins une feuille support.

**14.** Composition contenant un composé de formule IV.c ainsi qu'au moins un monomère achiral, nématique polymérisable.

**15.** Procédé pour la fabrication d'une feuille thermo-isolante selon la définition dans l'une quelconque des revendications 1 à 10, comprenant les étapes suivantes :

(I) mise à disposition d'une feuille support et, le cas échéant, nettoyage et/ou génération d'un sens préférentiel sur la surface de la feuille ;
(II) éventuellement : application d'une couche d'orientation sur la feuille support et, le cas échéant, nettoyage et/ou génération d'un sens préférentiel sur la couche d'orientation ;
(III) éventuellement : application d'une composition (f.1), le cas échéant orientation et durcissement au moins partiel de la composition ;
(IV) éventuellement : application d'une couche d'orientation sur la couche obtenue dans l'étape (III) et, le cas échéant, nettoyage et/ou génération d'un sens préférentiel sur la couche d'orientation ;
(V) application d'une composition (a.1), le cas échéant orientation et durcissement au moins partiel de la composition ;
(VI) éventuellement : application d'une couche d'orientation sur la couche obtenue dans l'étape (V) et, le cas échéant, nettoyage et/ou génération d'un sens préférentiel sur la couche d'orientation ;
(VII.1) éventuellement : application d'une composition (a.1) sur la feuille obtenue dans l'étape (V) ou (VI) (côté couche ou côté feuille support), le cas échéant orientation et durcissement au moins partiel de la composition ; la couche obtenue dans l'étape (VII.1) se distinguant de la couche obtenue dans l'étape V) par la chiralité et/ou par la plage de longueurs d'onde IR réfléchie ; ou
(VII.2) éventuellement : application d'une feuille $\lambda/2$ sur la couche obtenue dans l'étape (V), puis application de la même composition que dans l'étape (V) sur la feuille $\lambda/2$, le cas échéant orientation et durcissement au moins partiel de la composition ;
(VIII) éventuellement : répétition unique ou multiple des étapes (II) à (VII), en utilisant, lors de la répétition, des compositions qui se distinguent des compositions des étapes précédentes (V) et (VII) et le cas échéant également (III) ;
(IX) éventuellement : collage de deux feuilles obtenues dans l'étape (V), (VII) et/ou (VIII) ;
(X) éventuellement : détachement d'une ou des deux feuilles support de la feuille collée obtenue dans l'étape (IX) ;
(XI) éventuellement : répétition unique ou multiple des étapes (IX) et (X) ; et
(XII) éventuellement : application d'une couche de protection, d'une couche adhésive et/ou d'une couche antiadhésive sur la couche obtenue dans l'étape (V), (VII), (VIII), (X) ou (XI) .

**16.** Procédé pour la fabrication d'une feuille thermo-isolante selon la définition dans l'une quelconque des revendications 1 à 10, comprenant les étapes suivantes :

(i) mise à disposition d'une feuille selon la définition dans l'une quelconque des revendications 1 à 10 ;
(ii) si la feuille est couverte sur les deux faces par une feuille support ou une feuille de protection, détachement d'une des deux feuilles support ou de la feuille de protection ;
(iii) application de la feuille préparée dans l'étape (i) ou (ii) sur une nouvelle feuille support ; et
(iv) transfert des couches sur la nouvelle feuille.

**17.** Utilisation des feuilles selon l'une quelconque des revendications 1 à 10 ou de la composition selon la revendication 14 pour la gestion de la chaleur de bâtiments et de moyens de transport.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4637896 A
- US 5629055 A
- WO 2006128091 A
- WO 2008012292 A
- US 4293435 A
- US 20030219548 A
- WO 03093216 A
- WO 9617901 A
- EP 1627905 A
- US 20080113115 A
- US 20050206818 A
- DE 102006017881 A
- DE 10100692 A


### In der Beschreibung aufgeführte Nicht-Patentliteratur


- Ullmann’s Encyclopedia of Industrial Chemistry. vol. A18, 156-161
- **H. ENDRIß.** Aktuelle anorganische Bunt-Pigmente. Curt-R.-Vincentz-Verlag, 1997
- **G. BUXBAUM.** Industrial Inorganic Pigments. Wiley-VCH, 2005
- **W. HERBST ; K. HUNGER.** Industrielle organische Pigmente. Wiley-VCH, 2004